Europäisches Patentamt

(19) European Patent Office

Office européen des brevets

(11) **EP 0 817 463 A2**

(12) **EUROPEAN PATENT APPLICATION**

(43) Date of publication:
**07.01.1998 Bulletin 1998/02**

(51) Int. Cl.$^6$: **H04N 1/32**, H04N 1/00

(21) Application number: **97110573.9**

(22) Date of filing: **27.06.1997**

(84) Designated Contracting States:
**AT BE CH DE DK ES FI FR GB GR IE IT LI LU MC NL PT SE**

(30) Priority: **27.06.1996 JP 167813/96**

(71) Applicant:
**KABUSHIKI KAISHA TOSHIBA
Kawasaki-shi, Kanagawa-ken 210 (JP)**

(72) Inventors:
• **Shibaki, Masako
1-1 Shibaura 1-chome Minato-ku Tokyo 105 (JP)**

• **Takahashi, Toshiharu
1-1 Shibaura 1-chome Minato-ku Tokyo 105 (JP)**
• **Konno, Miki
1-1 Shibaura 1-chome Minato-ku Tokyo 105 (JP)**

(74) Representative:
**Blumbach, Kramer & Partner
Patentanwälte
Radeckestrasse 43
81245 München (DE)**

(54) **Image forming apparatus and method for displaying remaining processing amount in each mode**

(57) An image forming apparatus includes a scanner (313) for reading image information of a document and a circuit (93, 100) for controlling the display process to display a function (114) of setting an image forming format, a function (315) of forming a preset amount of images on a plurality of sheets of paper based on the image information read by the scanner according to the image forming format, and information of the image forming format and the present remaining amount (D1 to D4) with respect to the preset total amount on a display panel (93).

FIG. 4

## Description

This invention relates to an image forming apparatus such as a digital copying machine of image storage type having an electronic sort copying function and an image forming method.

Conventionally, the function for displaying the operation of counting down the number of copies in a copying machine such as an image forming apparatus is known. However, the conventional copying machine has neither a function of displaying the total amount of remaining copies nor a remaining amount displaying function constructed by a plurality of items, it is impossible to easily determine the remaining amount display constructed by a plurality of items, the copy end time, or the amount of remaining copies at the time of making a plurality of or a large amount of copies, and thus the copying machine is based on a display system having a user interface of low performance.

As described above, the conventional copying machine has neither a function of displaying the total amount of remaining copies nor a remaining amount displaying function constructed by a plurality of items, it is impossible to easily determine the remaining amount display constructed by a plurality of items, the copy end time, or the amount of remaining copies at the time of making a plurality of or a large amount of copies. Therefore, the user cannot precisely understand the progress of the copying process from the appearance in the sort printing or group printing and the copying machine has a problem that the user interface is low in performance.

An object of this invention is to provide an image forming apparatus in which the total amount of remaining copies or the amount of remaining copies in a different mode can be easily confirmed by an operation and which has an excellent user interface and an image forming method.

An image forming apparatus of this invention comprises means for reading image information of a document; means for setting an image forming format used for image formation; means for forming a preset total amount of images on image forming media based on the `image information read by the reading means according to the image forming format set by the setting means; means for displaying information according to the image forming format set by the setting means; and means for controlling the displaying means so as to display the present remaining amount with respect to the preset total amount of the image forming means.

As described before, in the conventional apparatus, it is difficult for the user to understand the progress of the copying process if a successive copying process is effected in a relatively complicated mode such as a sort printing mode or group printing mode, but according to an image forming apparatus and image forming method of this invention, the remaining amount of the process can be variously displayed in the respective display modes automatically or according to an instruction by the user. Therefore, this invention permits the user to more precisely understand the progress of the process and provides an image forming method and an image forming apparatus having an excellent user interface.

This invention can be more fully understood from the following detailed description when taken in conjunction with the accompanying drawings, in which:

FIG. 1 is a cross sectional view of a digital copying machine as an image forming apparatus according to this invention;

FIG. 2 is a system construction diagram of the image forming apparatus;

FIG. 3 is a block diagram showing the construction of a scanner section;

FIG. 4 is a block diagram showing the construction of an SMCPU;

FIG. 5 is a block diagram showing the construction of a printer section;

FIG. 6 is a block diagram showing the construction of a facsimile section;

FIG. 7 is a view showing the construction of an operation panel;

FIG. 8 is a diagram for illustrating the correlation between tasks of a control firmware;

FIG. 9 is a diagram for illustrating the page buffer area, file area and management table of a page memory;

FIG. 10 is a diagram for illustrating the correlation of a copy job management table;

FIG. 11 is a diagram for illustrating the correlation of a display management table;

FIG. 12 is a flowchart for illustrating the operation of a display management task;

FIG. 13 is a flowchart for illustrating the operation of the display management task;

FIG. 14 is a flowchart for illustrating the operation of the display management task;

FIG. 15 is a flowchart for illustrating the operation of the display management task;

FIGS. 16A and 16B are flowcharts for illustrating the operation of a copy management task;

FIG. 17 is a flowchart for illustrating the operation of an input task;

FIGS. 18A and 18B are flowcharts for illustrating the operation of the input task;

FIG. 19 is a flowchart for illustrating the main operation of an output task;

FIG. 20 is a flowchart for illustrating the single-face sort outputting operation of the output task;

FIG. 21 is a flowchart for illustrating the single-face sort outputting operation of the output task;

FIG. 22 is a flowchart for illustrating the single-face sort outputting operation of the output task;

FIG. 23 is a flowchart for illustrating the single-face group outputting operation of the output task;

FIG. 24 is a flowchart for illustrating the single-face group outputting operation of the output task;

FIG. 25 is a flowchart for illustrating the single-face group outputting operation of the output task;

FIG. 26 is a flowchart for illustrating the both-side group outputting operation of the output task;

FIGS. 27A, 27B and 27C are flowcharts for illustrating the both-side group outputting operation of the output task;

FIG. 28 is a flowchart for illustrating the both-side group outputting operation of the output task;

FIGS. 29A and 29B are flowcharts for illustrating the both-side group outputting operation of the output task;

FIGS. 30A to 30E are diagrams showing display examples of the remaining output amount and the number of documents at the time of single-face sort;

FIG. 31 is a diagram for illustrating the operation in the sort mode;

FIG. 32 is a diagram for illustrating the operation in the group mode;

FIGS. 33A to 33E are diagrams showing display examples of the remaining output amount and the number of documents at the time of single-face group;

FIGS. 34A and 34B are diagrams showing display examples of the remaining output amount and the number of documents at the time of single-face sort;

FIGS. 35A and 35B are diagrams showing display examples of the remaining output amount and the number of documents at the time of single-face group;

FIGS. 36A and 36B are diagrams showing a display example of the remaining output amount and the copying process of a both-side group system using ADD;

FIGS. 37A and 37B are diagrams showing a display example of the remaining output amount and the copying process of a both-side sort system using ADD;

FIGS. 38A and 38B are diagrams showing an example of the transition of display states on the panel at the time of both-side group;

FIGS. 39A and 39B are diagrams showing an example of the transition of display states on the panel at the time of both-side group;

FIGS. 40A and 40B are diagrams showing an example of the transition of display states on the panel at the time of both-side sort; and

FIGS. 41A and 41B are diagrams showing an example of the transition of display states on the panel at the time of both-side sort.

There will now be described an embodiment of this invention with reference to the accompanying drawings.

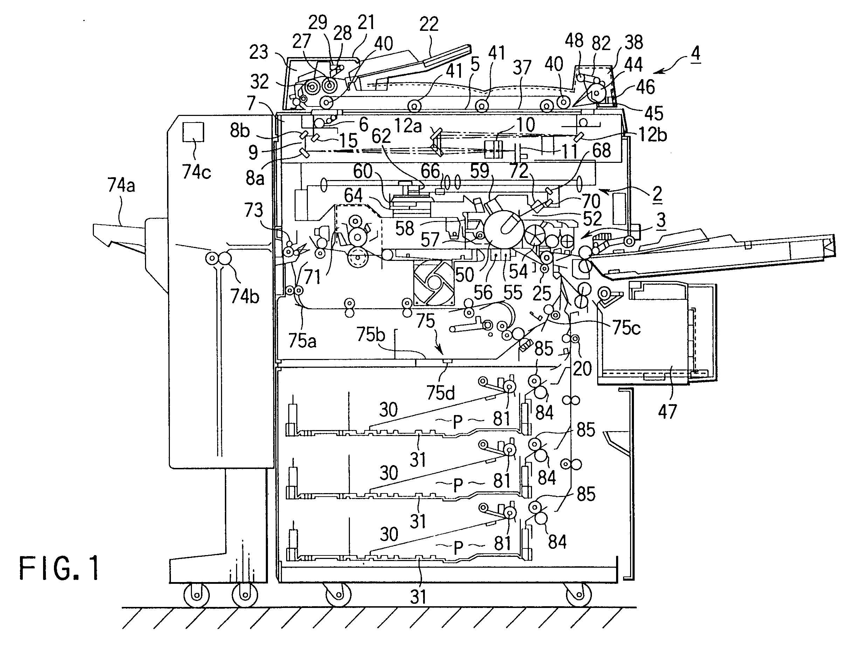

FIG. 1 schematically shows the whole construction of a digital copying machine as an image forming apparatus according to this invention. The digital copying machine has a scanner 2 used as reading means and a printer 3 used as image forming means and has an automatic document feeder (ADF) 4 mounted on the upper portion thereof.

The automatic document feeder 4 has such a construction that the rear edge portion of a cover body 21 as a casing is mounted on the rear edge portion of the upper surface of the main body of the apparatus via a hinge (not shown) to freely set the cover body into the open/closed position and the upper surface of a document table 5 can be exposed by rotating the entire portion of the automatic document feeder 4 when necessary. A document feeding table 22 capable of collectively holding a plurality of documents is disposed on the upper right-side portion of the cover body 21. On one side of the apparatus, feeding means 23 for sequentially taking out documents one at a time and feeding the document to one end portion (left end portion in FIG. 1) of the document table 5. The feeding means 23 includes a pickup roller 27 for taking out a document, a weight plate 28 for pressing the document against the pickup roller 27, an empty sensor 29 used as a document detecting sensor for detecting the set state of a document supplied to the document feeding table 22, and the like. Further, a paper feeding roller 32 is arranged on the document taking-out side of the pickup roller 27 so as to ensure that the documents can be fed one at a time. A document carrying belt 37 for covering the upper surface of the document table 5 is stretched over the upper surface of the document table 5. The document carrying belt 37 is formed of a wide endless belt having a white outer surface and stretched over a pair of belt rollers 40, 40 and is constructed to be driven in forward and reverse directions by a belt driving mechanism (not shown). Further, on the rear surface of the internal portion of the document carrying belt 37, a plurality of belt hold-down rollers 41 for pressing the belt surface against the document table 5 and a set switch (not shown) for detecting the open/closed state of the automatic document feeder are disposed. The document fed by the feeding means 23 is carried from one end portion (left end side) of the document table 5 to the other end portion (right end side) thereof. Paper discharging means 38 is disposed on the right side portion of the apparatus and the paper discharging means 38 includes a feeding roller 44, a pinch roller 45 for pressing the document against the feeding roller 44 and a discharging paper sensor 46 used as document detecting means for detecting the rear end of the document fed in the paper discharging direction. A paper discharging roller 48 is disposed on the downstream side of the document discharging path. Further, a gate 82 for guiding the document in the reversed state to the document table 5 is disposed on the document discharging path so as to permit the both surfaces of the document to be copied.

The scanner 2 is constructed by an exposure lamp 6 used as a light source, a first carriage 7 having a mirror 15 disposed thereon, a second carriage 9 having mirrors 8a, 8b disposed thereon for bending the optical path, a lens 10, a CCD sensor 11 for receiving reflected light, a driving system (not shown) for changing the position of each of the above units, and an A/D converter (not shown) for converting an output of the CCD sensor 11 or image data (information) from the analog form to the digital form. The first and second carriages 7 and 9 are coupled to each other via a timing belt (not shown) and the second carriage 9 is driven in the same direction as and at a speed half that of the first carriage 7. With this construction, the scanning operation can be effected with the optical path length to the lens 10 kept constant. The lens 10 is of a fixed focus type and is driven in the optical axis direction when the magnification is changed. One pixel of the document corresponds to one of the elements of the CCD sensor 11. An output of the CCD sensor 11 is supplied to the A/D converter. The first, second carriages 7, 9, mirrors 12a, 12b are moved by stepping motors (not shown). The first, second carriages 7, 9 are moved in synchronism with the operation of a timing belt (not shown) stretched between a drive pulley (not shown) coupled to the rotating shaft of the stepping motor and an idle pulley (not shown). The lens 10 is moved in the optical axis direction according to the movement of a spiral shaft (not shown) when the spiral shaft is rotated by a corresponding stepping motor (not shown).

A reference numeral 60 denotes a laser diode, and a collimator lens 62, polygon mirror (polygon reflector) 64, lens 66, reflection mirrors 68, 70, and lens 72 are arranged in positions corresponding to the position of the laser diode 60, and a laser beam can be applied from an exposure unit 52 to a photosensitive drum 50.

The printer 3 is constructed by a combination of a laser optical system and an electrophotographic system capable of forming an image on transfer paper. That is, the printer 3 has the photosensitive drum 50 used as an image carrier which is rotatably supported on substantially the central portion in the apparatus, and the exposure unit 52, developing unit 54, transfer charger 55, separation charger 56, PCC charger 57, discharging lamp 58 and electric charger 59 are arranged in this order around the photosensitive drum 50. The photosensitive drum 50 is uniformly charged by the electric charger 59, the scanner 2 emits a laser beam to form an image of the document on the photosensitive drum 50, and thus an electrostatic latent image is formed.

The electrostatic latent image formed on the photosensitive drum 50 is developed by the developing unit 54 and the developed image is transferred onto copy paper P fed from a paper supply cassette 30 used as paper feeding means as will be described later via the paper feeding roller 20 and aligning roller 25 by means of the transfer charger 55. The copy paper P onto which the image is transferred by the transfer charger 55 is separated by the separation charger 56 based on AC corona discharge, fed to a fixing unit 71 via a conveyor belt, and the copy paper P on which the developed image is fixed by melting by means of the fixing unit 71 is discharged to a unit 74 having a paper discharging tray 74a by a paper discharging roller pair 73. The unit 74 has a roller pair 74b for setting the front face of the copy paper P discharged from the paper discharging roller pair 73 down and a stapler 74c provided on the upper portion of the unit 74, for stapling sheets of copied paper of each copy at the time of staple sort mode.

Developing powder remaining on the photosensitive drum 50 after the process of transferring the developed image onto the copy paper P and separating the same is cleaned by the PCC charger 57 and the potential on the photosensitive drum 50 is set lower than a preset level by the discharging charger 58 to make ready for the next copying operation.

In the case of double-face copying in which images are printed on both surfaces of the copy paper P, the copy paper P on which the developed image is fixed by melting by use of the fixing unit 71 is fed via the feeding path 75a and stored into the tray 75b. Paper P having an image printed on one surface thereof and stored in the tray 75b is fed to the transfer charger 55 via a feeding path 75c and then a developed image is transferred onto the other surface which is not yet printed. A light reflection type paper sensor 75d is disposed on the lower portion of the tray 75b to detect the presence of paper to be stacked on the tray 75b.

Further, the feeding path 75a, tray 75b, feeding path 75c and paper sensor 75d construct an automatic double-face setting device (ADD) 75 as an automatic face reversing mechanism.

A reference numeral 30 denotes paper supply cassettes used as paper supply means which can be removably mounted on a plurality of vertically arranged stages from the front side of the apparatus main body 1. Each of the paper supply cassettes 30 is constructed by a cassette case 31 which is a casing having sheets of copy paper P stored therein and the paper take-out end portion of the cassette case 31 is inclined in the paper take-out direction. The sheets of copy paper P received in the cassette case 31 of the paper supply cassette 30 are picked up and taken out sequentially from the uppermost one by a pickup roller 81 which is provided for each cassette 30. The copy paper P taken out by the pickup roller 81 and fed to the paper take-out end portion of the cassette case 31 is separated one at a time by a paper separating section constructed by a paper feeding roller 84 and separation roller (or separation pad) 85 disposed above and inside the paper take-out end portion of the cassette case 31 and then fed to the printer 3.

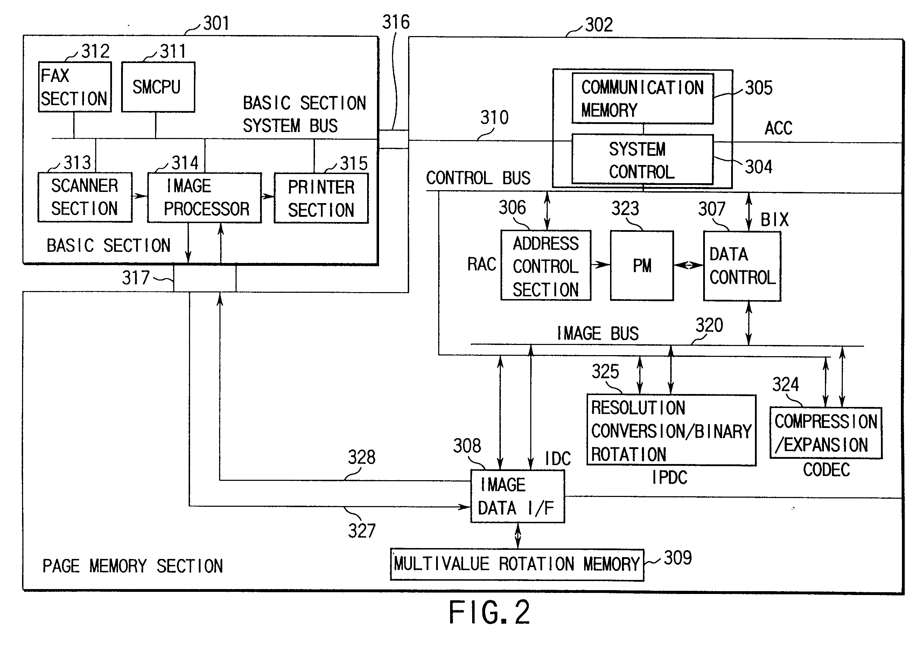

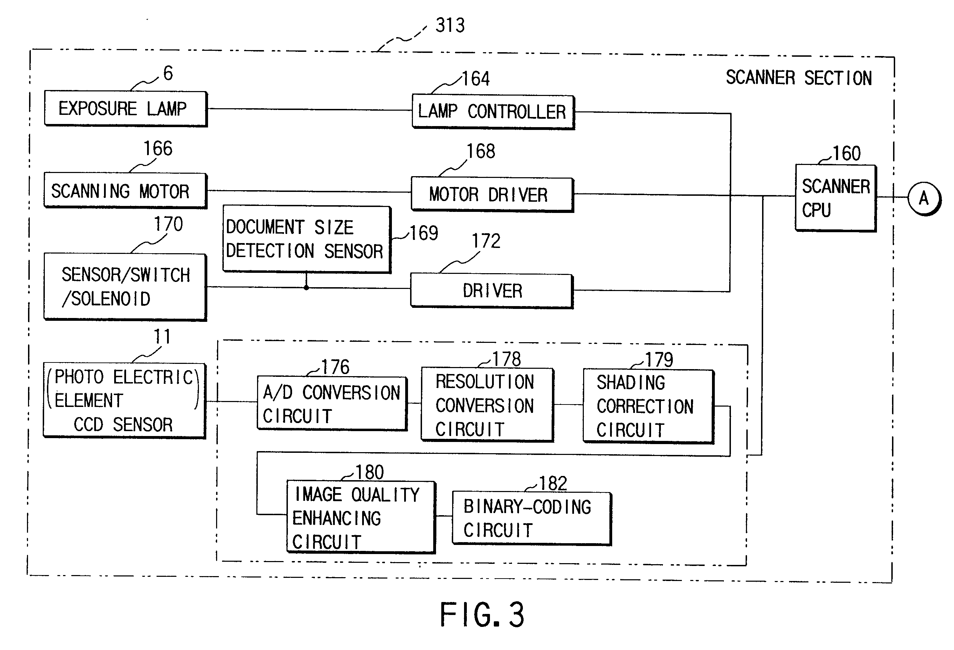

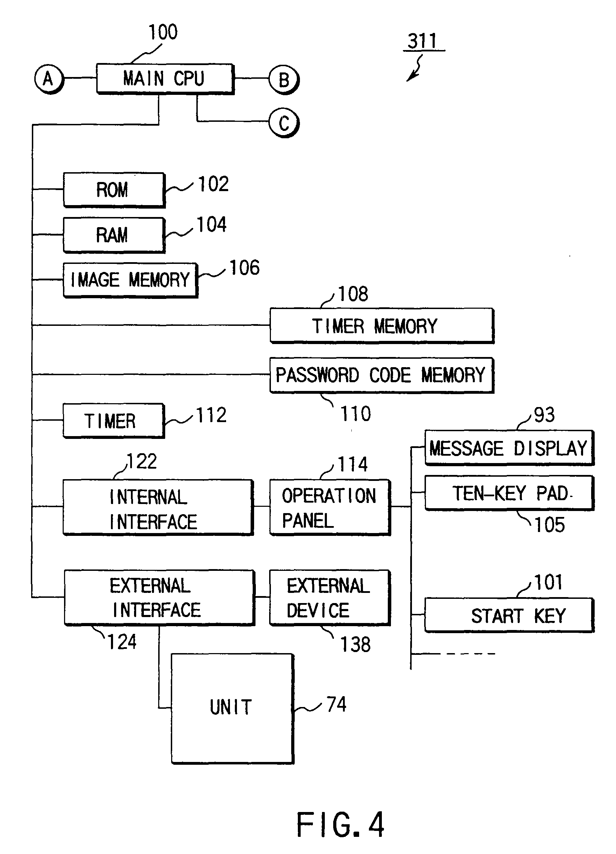

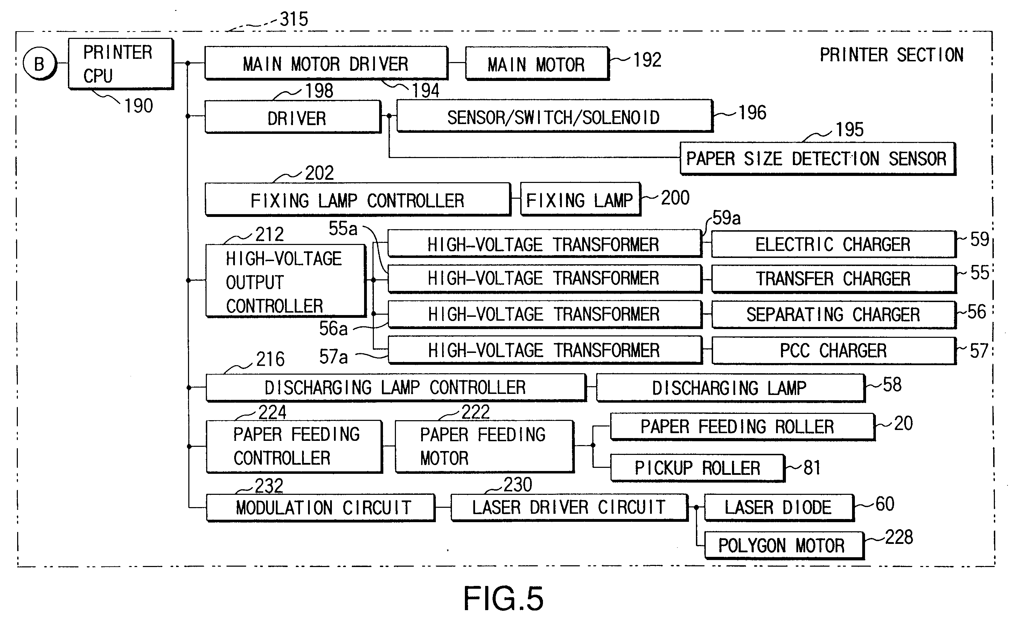

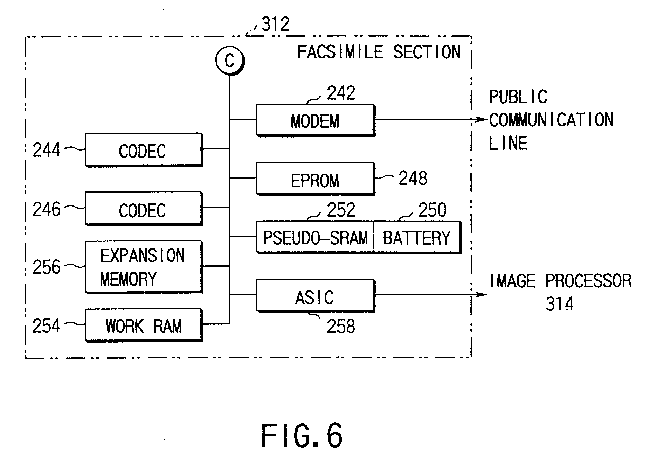

Next, the control system of the digital copying machine is explained with reference to FIGS. 2 to 6. FIG. 2 shows the whole construction of the control system of the digital copying machine, FIG. 3 shows the scanner section, FIG. 4 shows control means (SMCPU), FIG. 5 shows the printer section, and FIG. 6 shows the facsimile section.

The control system of the digital copying machine is roughly divided into two blocks and includes a basic section 301 constructing the digital copying machine in which a scanner section 313 and printer section 315 are connected via an image processing section 314 and which has a facsimile (FAX) section 312 for realizing a facsimile function and a page memory section 302 used as storage means for realizing a memory copy by receiving and storing image data from the basic section 301 and transferring the stored image data to the basic section 301.

The basic section 301 and the page memory section 302 are connected via a basic section system interface 316 for transferring control data and a basic section image interface 317 for transferring image data.

The basic section 301 includes the input means (scanner) 313, output means (printer) 315, image processing means (image processing section) 314, facsimile section 312, and control means (SMCPU) 311 for controlling the above units.

As shown in FIG. 4, a main CPU 100 of the control means (basic section CPU) 311 is connected to a ROM 102, RAM 104, image memory 106, timer memory 108, password code memory 110, timer 112, internal interface 122, and external interface 124. The internal interface 122 is connected to an operation panel 114, and on the operation panel 114, a message display unit 93, ten-key pad 105, start key 101 and the like are disposed. The external interface 124 is connected to the unit 74 and external device 138.

The operation of storing and reading image information is effected by the main CPU 100. For example, when a password code and image information are stored, image information read by the scanner 2 under the control of the scanner CPU 160 is stored into the image memory 106 in response to an instruction by the main CPU 100. The instruction of the main CPU 100 is issued after the mode is determined by the key input (key-in operation) via the operation panel 114.

Next, the detail construction of the scanner section 313 is explained with reference to FIG. 3. The scanner CPU 160 of the scanner section 313 is connected to a lamp control section 164 for controlling the exposure lamp 6, a motor driver 168 for controlling a scanning motor 166, and a driving section 172 for driving and controlling a sensor/switch/solenoid 170 including a document size detection sensor 169 so as to control the above units and is also connected to a circuit used for processing image information supplied from a CCD sensor 11 used as a photoelectric element and including an A/D conversion circuit 176, resolution conversion circuit 178, shading correction circuit 179, image quality enhancing circuit 180, and binary-coding circuit 182 so as to control the above units.

Next, the printer section 315 is explained with reference to FIG. 5. In the printer section 315, a printer CPU 190 is connected to a main motor driver 194 for driving a main motor 192, a driving section 198 for driving and controlling a sensor/switch/solenoid 196 including a paper size detection sensor 195, a fixing lamp control section 202 for controlling a fixing lamp 200 of the fixing unit 71, a high-voltage output control section 212 for controlling the electric charger 59, transfer charger 55, separation charger 56 and PCC charger 57, a discharging lamp control section 216 for controlling the discharging lamp 58, a paper feeding control section 224 for controlling a paper feeding motor 222 for driving the paper feeding roller 20 and pickup roller 81, and a modulation circuit 232 for controlling a laser driving circuit 230 for driving the laser diode 60 and polygon motor 228. The printer CPU 190 controls the units connected thereto. High-voltage transformers 59a, 55a, 56a, 57a are respectively connected between the high-voltage output control section 212 and the electric charger 59, transfer charger 55, separation charger 56, PCC charger 57.

Next, the page memory section 302 is explained with reference to FIG. 2. The page memory section 302 includes system control means 304 having a communication memory 305 and controlling access to the page memory 323 from the basic section 301, storage means (PM : page memory) 323 for temporarily storing image data, an address control section 306 for creating an address of the page memory 323, an image bus 320 for transferring data between the devices in the page memory section 302, a control bus 321 for transferring a control signal between the devices in the page memory section 302 and the system control means 304, data control means 307 for controlling data transfer when data is transferred between the page memory 323 and the other devices via the image bus 320, image data I/F means 308 interfacing with the basic section 301 via the basic section image interface 317 when image data is transferred, resolution conversion/binary rotation means 325 for converting the resolution of image data to the resolution of another device when image data is transferred to the device having different resolution, converting the resolution of image data received from a device having different resolution to the resolution of the printer section 315 of the basic section, or rotating binary image data by 90 degrees, compression/expansion means 324 for compressing input image data for a device for transmitting or storing image data in a compressed form, for example, in the case of facsimile transmission or optical disk storage or expanding compressed image data to visually print the image data, and a multivalue rotation memory 309 connected to the image data I/F means 308 and used for outputting image data after rotating the same by 90 degrees or -90 degrees when the image data is output from the printer section 315.

Next, the facsimile section 312 is explained with reference to FIG. 6. The facsimile section 312 includes a modem 242 which is a modulation/demodulation device for connection with an analog circuit and is connected to a public communication line, CODECs 244, 246 each of which is a coding/decoding device for binary image data, an EPROM 248 for storing a communication control program, a pseudo-SRAM 252 which is image data storing means and is backed up by a battery 250, a work RAM 254 used when image data is subjected to various processes, an expansion memory 256, and an interface ASIC 258 for outputting facsimile reception data to the image processing section 314.

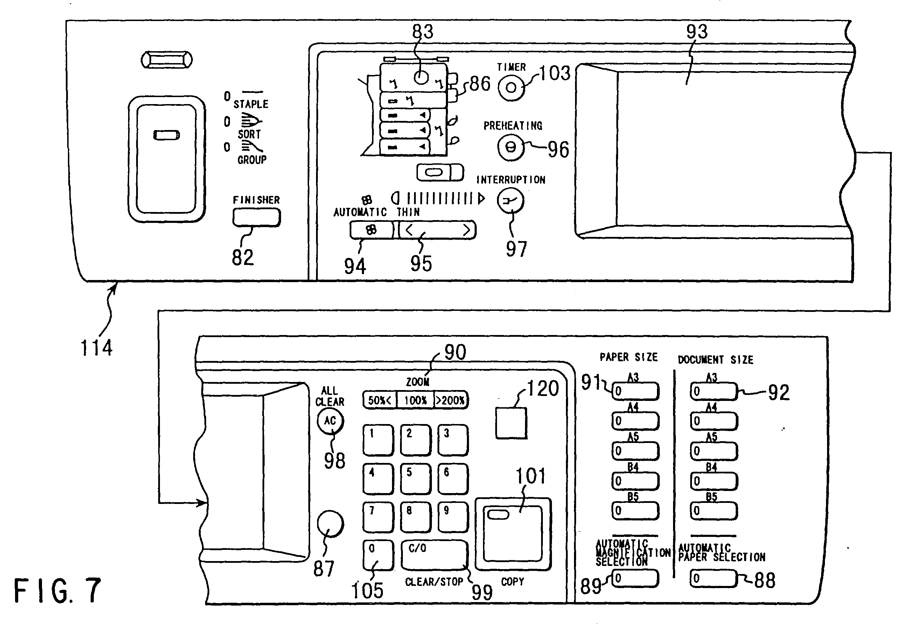

FIG. 7 shows the construction of the operation panel 114. The operation panel 114 includes a finisher key 82, display panel 83, a cassette selection key 86 used as selection means for the paper supply cassettes 30, HELP key 87, automatic paper selection key 88, automatic magnification selection key 89, zoom/100% key 90, document size key 91, paper size key 92, message display section 93, automatic density key 94, manual density key 95, preheating key 96, interruption key 97, all clear key 98, clear/stop key 99, start key 101, timer key 103, and ten-key pad 105.

The finisher key 82 is used for selecting the sort mode, group mode or staple mode.

The display panel 83 displays the state of the copying machine by displaying various pictures and characters in a flashing manner.

A desired cassette can be selected by operating the cassette selection key 86 when a cassette which is now selected is not a desired one.

If the HELP key 87 is depressed as an operation guide key, a message indicating the operation procedure is displayed, and if it is depressed after the function has been set, the set content can be confirmed.

The automatic paper selecting key 88 is normally set in the automatic paper selecting mode. The size of a document set on the document table (glass) 5 is automatically detected and paper of the same size as the detected size is automatically selected (only in the case of copying magnification x1).

When the automatic magnification selecting key 89 is depressed to select the automatic magnification selecting mode and specify a desired paper size, the size of a document set on the document table (glass) 5 is automatically detected and the copying magnification is automatically calculated.

If a "25%<" key of the zoom/100% key 90 is depressed, the copying magnification can be reduced to 25% in the unit of 1%. When a ">800%" key is depressed, the copying magnification can be increased to 800% in the unit of 1%. When a "100%" key is depressed, the copying magnification is set back to the magnification x1 (100%).

The document size key 91 is used for setting the document size. When the paper size is selected and the document size is specified, the copying magnification is automatically determined.

The paper size key 92 is used for selecting the paper size.

The message display section 93 displays the state and operation procedure of the digital copying machine and various instructions for the user by use of characters and pictures. Further, the message display section 93 used as display means contains a touch panel and can selectively set the function.

If the automatic density mode is selected by use of the automatic density key 94, the digital copying machine automatically detects the density of the image of the document and selects optimum copying density.

The manual density key 95 permits desired copying density to be selected in the manual density mode. The density can be set at five low density levels by depressing a "density lowering" key and set at five high density levels by depressing a "density enhancing" key.

A preheating (power saving) state is set to turn OFF all of the display lamps by depressing the preheating key 96. The preheating key 96 is depressed again when a next copy is made.

The interruption key 97 is used for making an interruption copy while successive copies are being made.

When the all clear key 98 is depressed, all of the selected modes are cleared and the standard state is set.

The clear/stop key 99 is used for correcting the number of sheets of copies or interrupting the copying operation.

The start key 101 is depressed to start the copying operation.

When the timer key 103 is depressed, the time when the power source switch of the digital copying machine is turned ON or OFF is displayed (in a case where the weekly timer is set).

The ten-key pad 105 is used for setting the number of sheets of paper to be copied. The number of copies can be set in the range of 1 to 999.

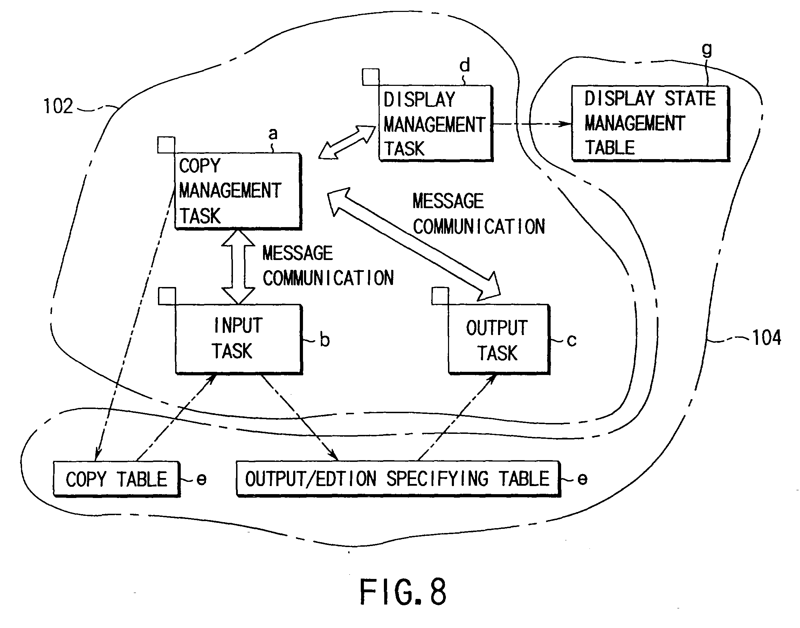

Programs of the control tasks shown in FIG. 8 and the like are stored in the ROM 102 of the CPU 311 of the digital copying machine of this embodiment. A copy management task a manages the state of the copy job, an input task b controls the image input and an output task c controls the image output. In a display management task d, the state management and control of the operation panel 114 and message display section 93 are effected.

Each of the tasks (a to d) has one message queue for reception, for example, and transmits a message to the reception queue of a destination task. By transferring a message between the tasks, the correlation control between the tasks can be performed.

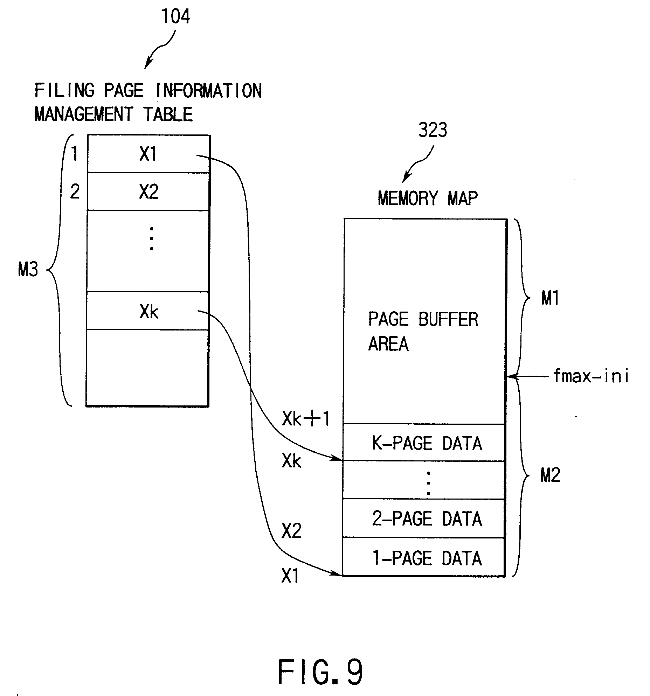

In the RAM 104 of the CPU 311, there is stored a map constructed by a copy table e for managing the input format and copy job state shown in FIG. 8, an output/edition specifying table m for managing the memory edition content and output format of the copy job, a display state management table g for managing the operation/display state, and a filing page information management table M3 for managing information for each page of file area shown in FIG. 9.

In FIG. 9, a page memory 323 divided into a page buffer area M1 for temporarily storing image data read by the scanner section 313 and image data output to the printer section 315 and a file area M2 for storing compression filing data of the image data is also shown.

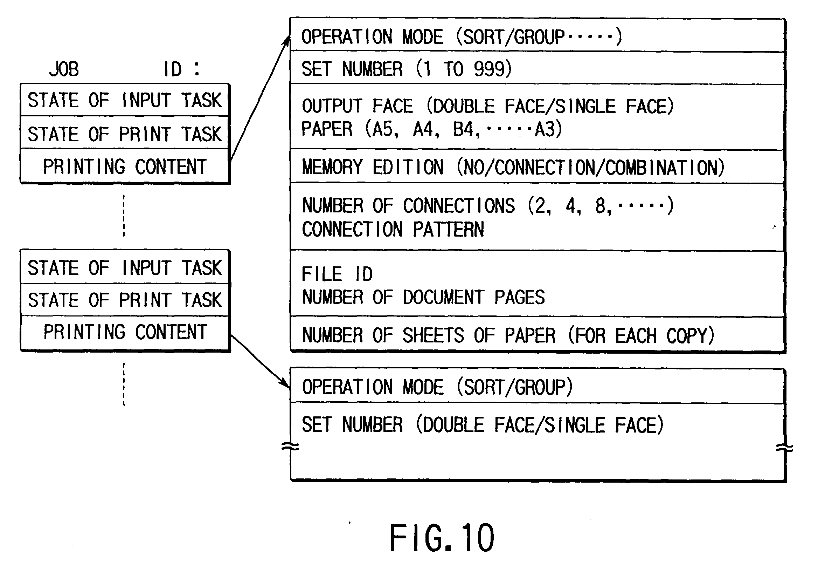

FIG. 10 shows a state in which the state of the input task b and the state of the output task c are managed for each copy job in the copy table e and a state in which the output format and edition content are managed for each copy job by the output/edition specifying table m.

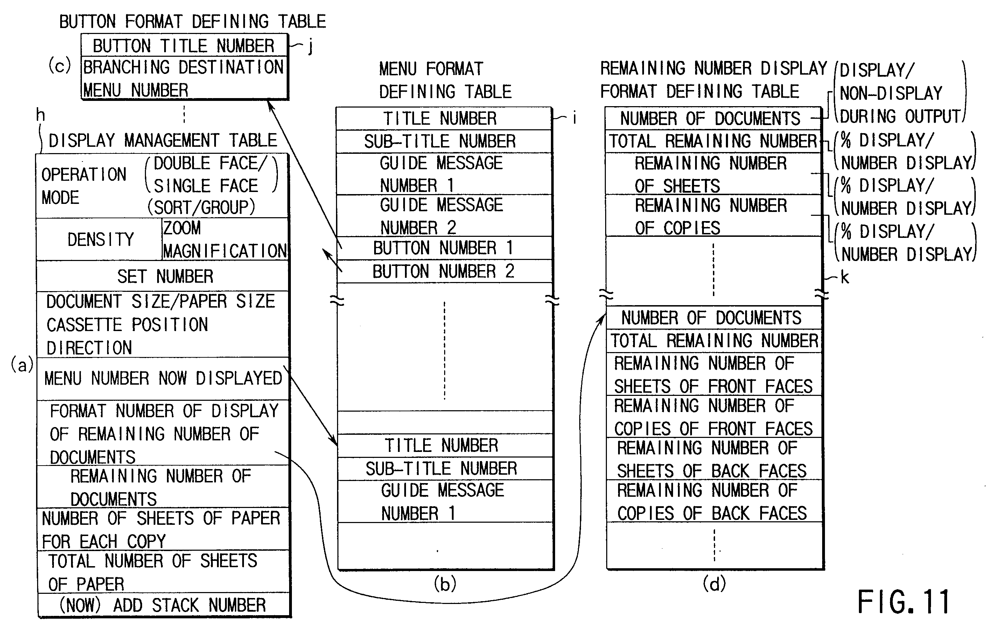

FIG. 11 shows the construction of the display function management table g. The display function management table g which will be described more in detail later is constructed by a display management table h, menu format defining table i, button format defining table j, and remaining number displaying format defining table k.

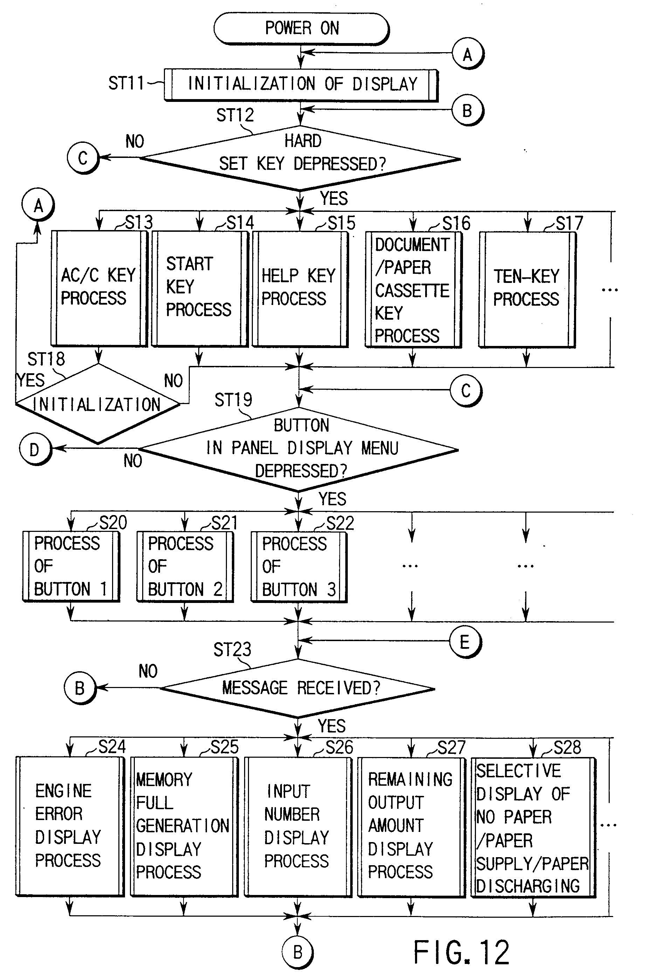

Next, the operations of the control tasks with the above constructions are explained with reference to the flowcharts shown in FIGS. 12 to 29B.

FIG. 12 shows the main operation of the display management task d, and the display management task d initializes the display function management table g for managing the operation/display state shown in FIG. 11 and initializes the display state of the operation panel 114 (S11) after the power source switch of the digital copying machine is turned ON.

Then, whether one of the hard setting keys of the operation panel 114 is depressed or not (S12), whether one of the buttons in the display menu of the message display section 93 is depressed or not (S19), and whether a message from a different task is received or not (S23) are determined at adequate timings and processes (S13 to S17, S20 to S22, S24 to S28) corresponding to the results of the respective determinations are effected.

For example, if a change of the number of copies made by depression of one or more keys of the ten-key pad 105 of the operation panel 114 is detected, set number information in the display management table h is updated and the display content of the number of copies on the message display section 93 is changed. Further, if initialization is necessary, the process proceeds to "A" (S18).

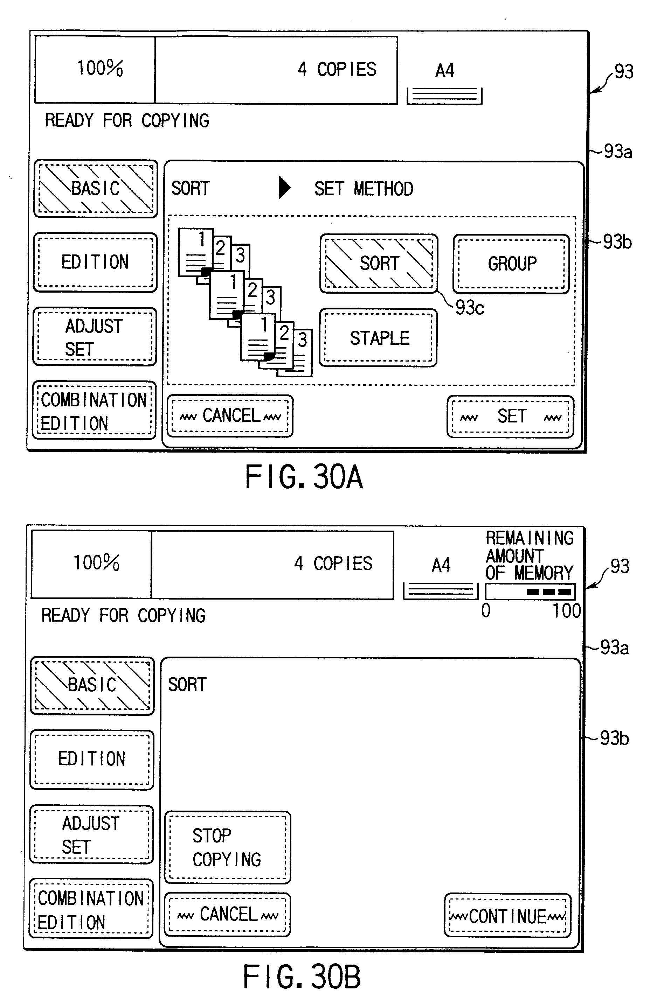

FIGS. 30A to 30E show examples of display on the message display section 93. As shown in (a) of FIGS. 30A to 30E, if the "sort" key on the display of the message display section 93 is depressed in the menu display of the message display section 93, the display management task d searches for a branch destination menu number of the button format defining table j shown in (c) of FIG. 11 based on a corresponding value "button number" in a corresponding format area of the menu format defining table i shown in (b) of FIG. 11 which is derived from the value of the "menu number now displayed" of the display management table h shown in (a) of FIG. 11. Then, the set value of the "menu number now displayed" of the display management table h is updated. Further, the display of the message display section 93 is changed to the display menu of the sort mode shown in (b) of FIGS. 30A to 30E. Thus, the display management task d performs reception of the copy job condition and operation/display management.

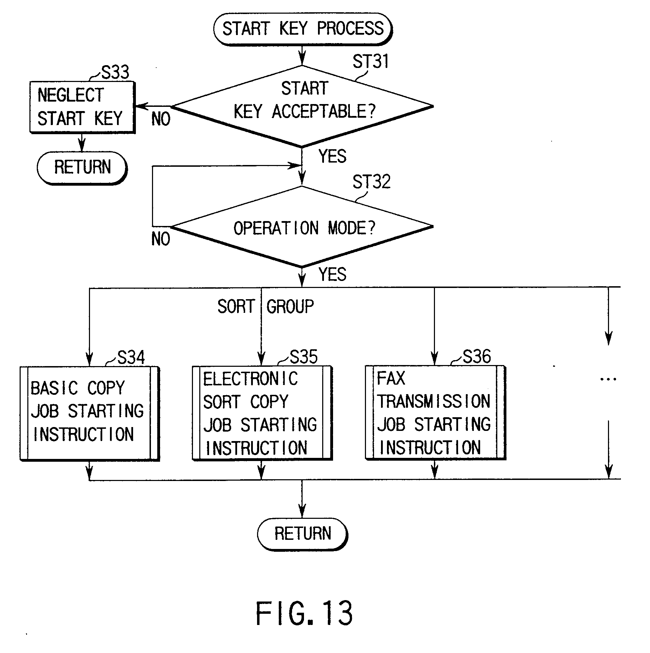

If a sequence of job settings such as cassette position and density settings has been effected (S31, S33), the display management task d determines the type of the copy job by searching for the "operation mode" of the display management table h (S32) as shown in FIG. 13. If it is determined that the sort mode/group mode is effective, the "instruction of starting the electronic sort copy job" is issued by performing message communication with respect to the copy management task a in order to start the copy job of memory storage type (S35). Further, a basic copy job starting instruction, a FAX transmission job starting instruction or the like is properly issued to serve the purpose (S34, S36).

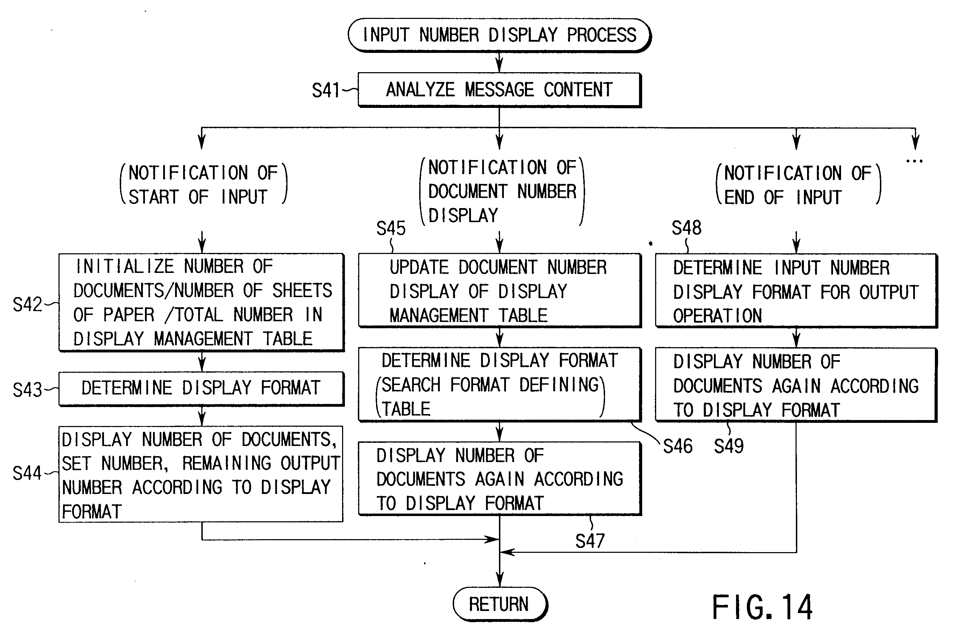

The control operation of the copy management task a which receives the copy job starting instruction message from the display management task d is described later with reference to FIG. 14.

Now, the typical operation mode of the electronic sort copy job is explained.

The "sort" mode is an operation mode in which the scanning operation is effected only once for each document, a plurality of documents are copied in an input order and the copying operation is repeated by a number of times equal to a specified number of copies.

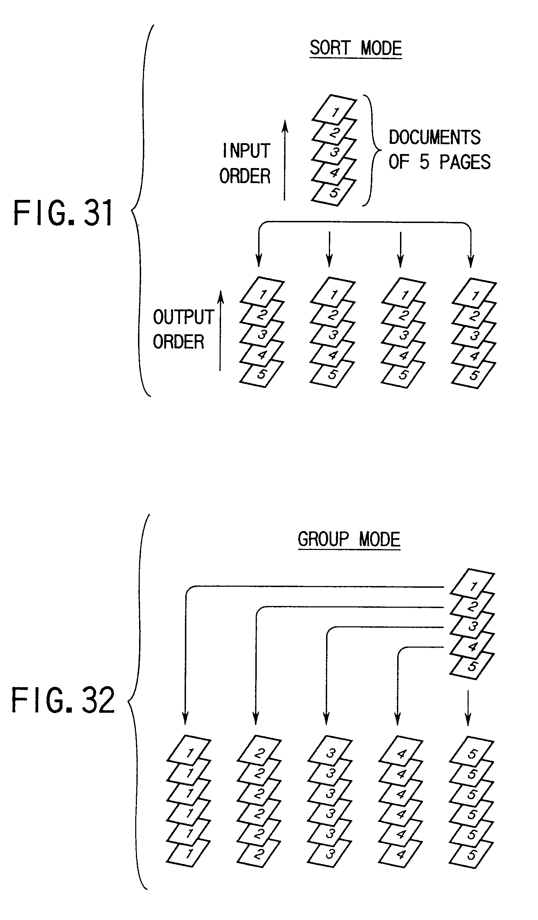

FIG. 31 shows an example in which documents of five pages are copied in the sort mode by four copies.

The "group" mode is an operation mode in which the scanning operation is effected only once for each document and a plurality of documents are each copied by a number of times equal to a specified number of copies and the copying operations of the documents are effected in an input order. In this embodiment, a sequence of copying operations corresponding to the operation mode is treated as one copy job.

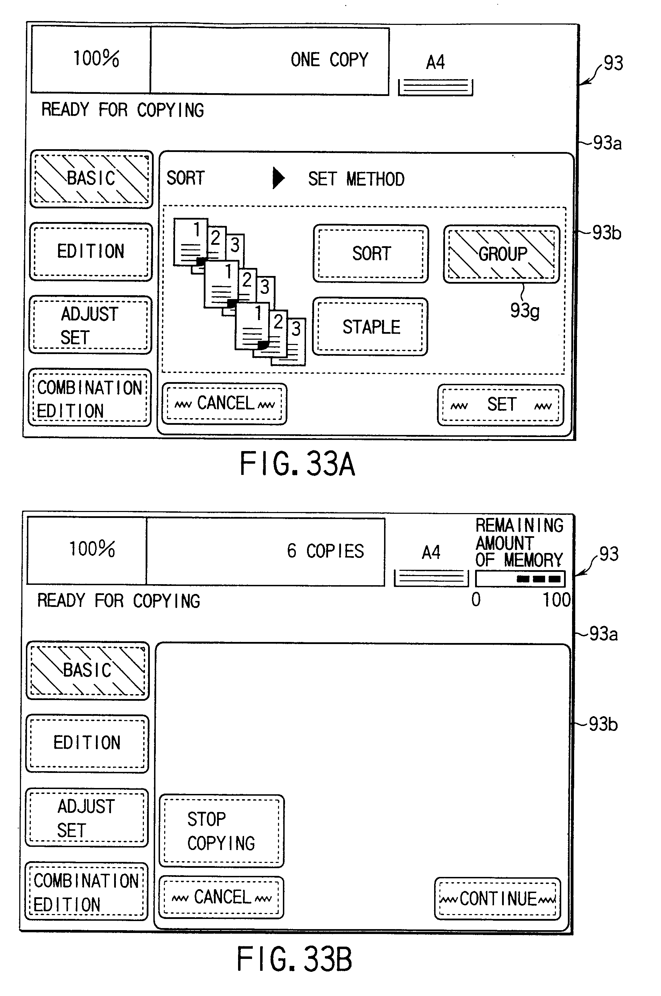

FIG. 32 shows an example in which documents of five pages are copied in the group mode by six copies.

In the copy job operation, the display management task d inhibits the panel operation of the message display section 93, the setting key operation of the operation panel 114 except the instructions of interruption stop, density change and the like and mainly controls the display management of the copy state (the number of input documents, the remaining output amount) in this invention and the display management of the engine state (occurrence of jam, presence of paper) of the printer section 314 and the scanner section 313 now in operation according to the message reception from a different task.

FIG. 14 shows the operation of process for displaying the number of input documents in the display management task d. The display management task d analyzes the content of the reception message (S41), and if it is the input starting status, the display management task d initializes the number f of documents, the number N of sheets of paper for each copy, and the total remaining output number TR of sheets of paper in the display management table h shown in FIG. 11 (S42 to S44).

A plurality of formats can be managed for the number of documents and the remaining output amount display format by use of the remaining number displaying format defining table k shown in FIG. 11 and the display format corresponding to the operation mode output form is determined by searching a remaining amount display format number section of the display management table h (S45 to S47). The number of documents, the set number of copies and the remaining output amount are displayed as initial display according to the display format on the message display section 93.

Further, the remaining number displaying format defining table k can be adequately changed by the operation of the user so as to display a remaining amount in a mode desired by the user and simultaneously provide a plurality of displays in a plurality of remaining amount display modes.

If the received message is the notification of display of the number of documents, the document number section of the display management table h is updated, the display format is determined, the display of the number of input documents of the message display section 93 is updated according to the display format.

Further, if the received message is the notification of termination of document input, the document number display format after completion of the input process is determined by searching the remaining number displaying format defining table k and the display of the number of documents of the message display section 93 is updated according to the display format (S48, S49).

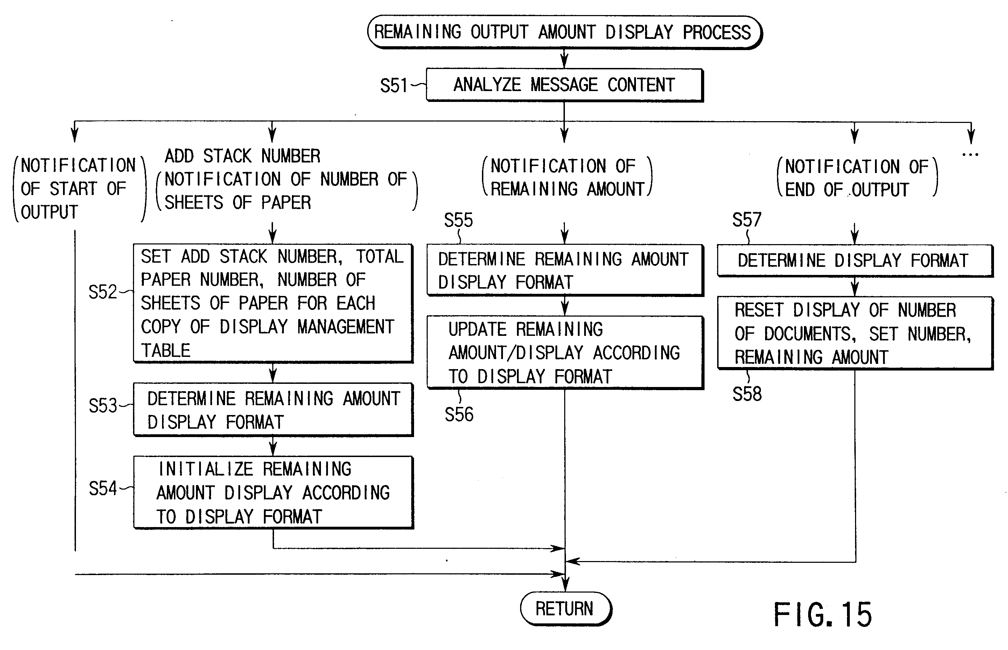

FIG. 15 shows the operation of the process for displaying the remaining output amount in the display management task d. The display management task d analyzes the content of the received message like the case of display of the number of documents (S51), and when a value (such as the total output number, the number of sheets of output paper for each copy, the total number of sheets of ADD stack paper at the time of double-face outputting, or the number of ADD stack copies) relating to the remaining output amount display is notified (S52), it sets the received information in the corresponding item of the display management table h, determines the remaining amount display format by searching the remaining amount displaying format defining table k (S53) and displays the remaining amount according to the display format on the message display section 93 (S54).

If the received message is the notification of display of the remaining output amount, the notified information is converted into remaining amount display format (S55) and display of the remaining amount is updated (S56). If the received message is the notification of termination of output, the number of documents and the remaining output amount display format are determined (S57), and the number of documents and the remaining output amount display of the message display section 93 are reset according to the display format (S58). For example, the number of documents and the total remaining output amount are cleared from display at the time of termination of output and the set number of the remaining output amount of copies is returned to the initial value set by the user.

Images of the number of documents and the remaining output amount display on the message display section 93 in the operation panel 114 based on the control flow of the display management task d are shown by using an example of the sort single-face output of FIGS. 30A to 30E and an example of the group single-face output of FIGS. 33A to 33E. In the case of them, a display example of the message display section 93 when five documents are each copied on one face by four copies and output in the sort mode.

As shown in FIGS. 30A to 30E and FIGS. 33A to 33E, the display example of the message display section 93 is constructed by a number display section 93a for displaying the remaining output number and a key display section 93b for displaying various setting keys.

If, in FIG. 30A, the "sort" key 93c of the key display section 93b is selected on the set/display menu of the electronic sort copy operation mode, the set/display menu of the sort mode shown in FIG. 30B is obtained.

Until the start key 101 is depressed, that is, while the copy job is being set, the menu display shown in FIG. 30B is maintained, and the set value "4 copies" is displayed on the number display section 93a, but at this stage, the number of input documents and the total remaining output number are not displayed.

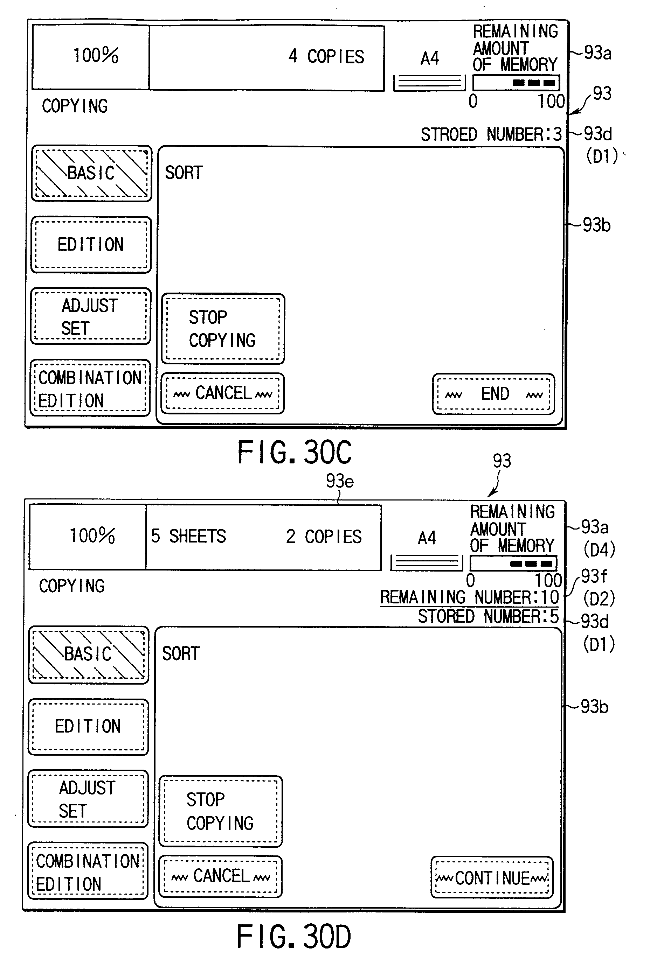

FIG. 30C indicates the menu display during the input operation or input/output operation, and a document input number "stored number : 3" 93d is sequentially counted up and displayed on the number display section 93a. However, since the total remaining output number is not yet determined, it is not displayed at this stage.

FIG. 30D indicates the menu display during execution of only the output operation after termination of the input operation, and a remaining output number "5" 93e for one copy and a total remaining output number "remaining number : 10" are sequentially counted down and displayed on the number display section 93a.

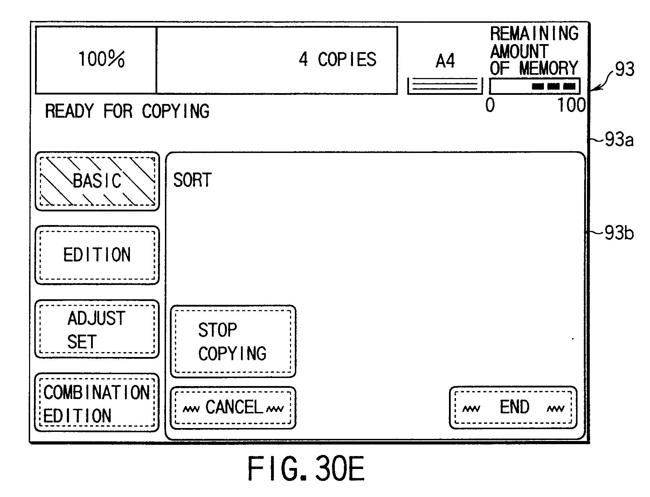

FIG. 30E indicates an example of display in the message display section 93 at the time of termination of the sort copy job.

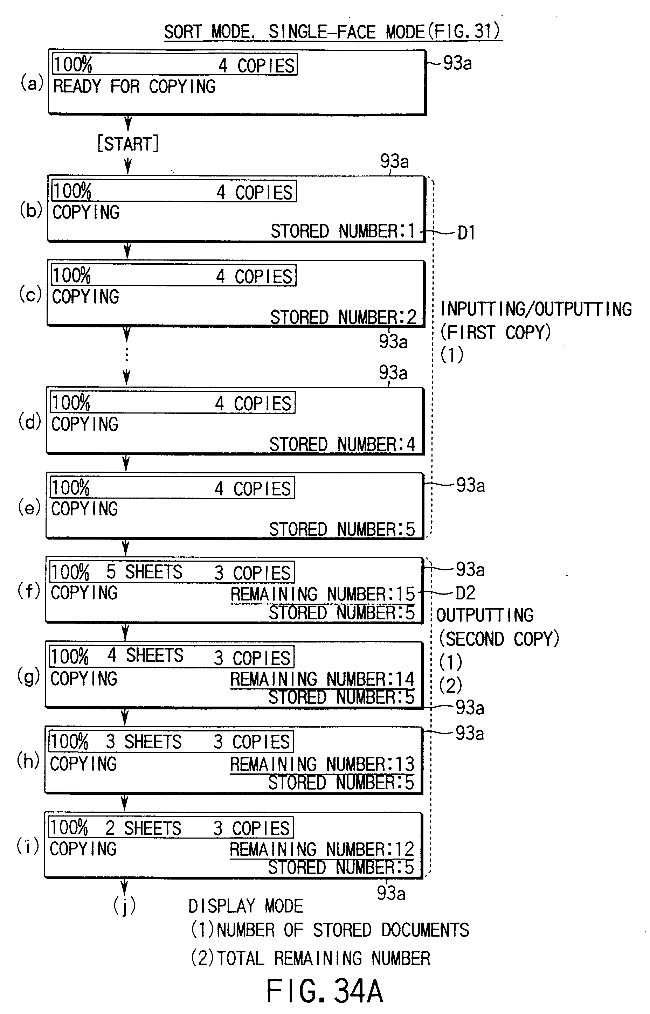

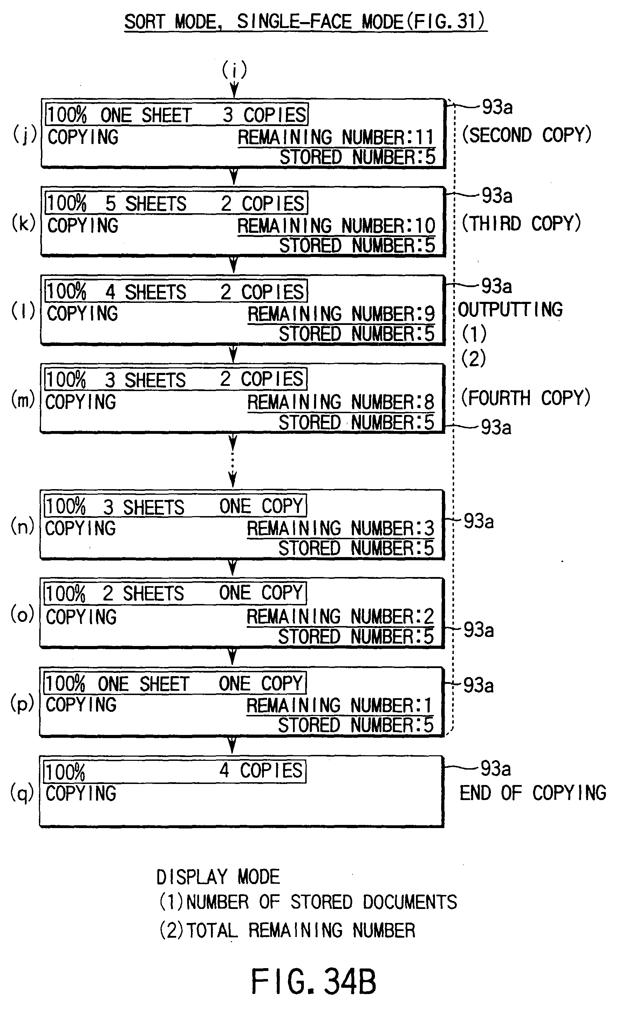

FIGS. 34A and 34B show the transition of the display states of the number display section 93a in the display example of the message display section 93 shown in FIGS. 30A to 30E. FIG. 34A indicates the display content when information of the "four copies of magnification 100%" is set.

In the message display, display of the remaining amount in each mode is considered, and as one example, (1) stored number of documents, (2) total remaining number, (3) ADD paper stack amount (%) (when ADD is used), (4) remaining percentage (%), (5) non-display may be considered. The above display modes can be changed as required.

(b) to (e) of FIG. 34A indicate the states in the input/output operation for the first copy (the mode (1) is selected), the stored number D1 of document images in the input operation which is "1" is displayed in (b) of FIG. 34A, the stored number of document images in the input operation which is "2" is displayed in (c) of FIG. 34A, the stored number of document images in the input operation which is "4" is displayed in (d) of FIG. 34A, and the stored number of document images in the input operation which is "5" is displayed in (e) of FIG. 34A.

(f) to (p) of FIGS. 34A and 34B indicate the states in the output operation for the second to fourth copies.

A state that the remaining output number for the second copy is "5", the remaining output number of copies is "3", the total remaining output number D2 is "15" and five sheets are stored in the input operation is displayed in (f) of FIG. 34A.

A state that the remaining output number for the second copy is "4", the remaining output number of copies is "3", the total remaining output number is "14" and five sheets are stored in the input operation is displayed in (g) of FIG. 34A.

A state that the remaining output number for the second copy is "3", the remaining output number of copies is "3", the total remaining output number is "13" and five sheets are stored in the input operation is displayed in (h) of FIG. 34A.

A state that the remaining output number for the second copy is "2", the remaining output number of copies is "3", the total remaining output number is "12" and five sheets are stored in the input operation is displayed in (i) of FIG. 34A.

A state that the remaining output number for the second copy is "1", the remaining output number of copies is "3", the total remaining output number is "11" and five sheets are stored in the input operation is displayed in (j) of FIG. 34B.

A state that the remaining output number for the third copy is "5", the remaining output number of copies is "2", the total remaining output number is "10" and five sheets are stored in the input operation is displayed in (k) of FIG. 34B.

A state that the remaining output number for the third copy is "4", the remaining output number of copies is "2", the total remaining output number is "9" and five sheets are stored in the input operation is displayed in (l) of FIG. 34B.

A state that the remaining output number for the third copy is "3", the remaining output number of copies is "2", the total remaining output number is "8" and five sheets are stored in the input operation is displayed in (m) of FIG. 34B.

A state that the remaining output number for the fourth copy is "3", the remaining output number of copies is "1", the total remaining output number is "3" and five sheets are stored in the input operation is displayed in (n) of FIG. 34B.

A state that the remaining output number for the fourth copy is "2", the remaining output number of copies is "1", the total remaining output number is "2" and five sheets are stored in the input operation is displayed in (o) of FIG. 34B.

A state that the remaining output number for the fourth copy is "1", the remaining output number of copies is "1", the total remaining output number is "1" and five sheets are stored in the input operation is displayed in (p) of FIG. 34B.

A state that the copy operation for four copies is completed and the content "ready for copying" are displayed in (q) of FIG. 34B.

FIGS. 33A to 33E show display examples on the message display section 93 when five documents are copied by six copies in the group mode and six copies with one face copied for each document are output.

If, in FIG. 33A, the "group" key 93g of the key display section 93b is selected on the set/display menu of the electronic sort copy operation mode, the set/display menu of the group mode shown in FIG. 33B is obtained.

Until the start key 101 is depressed, that is, while the copy job is being set, the menu display shown in FIG. 33B is maintained, and the set value "6 copies" is displayed on the number display section 93a, but at this stage, the number of input documents and the total remaining output number are not displayed.

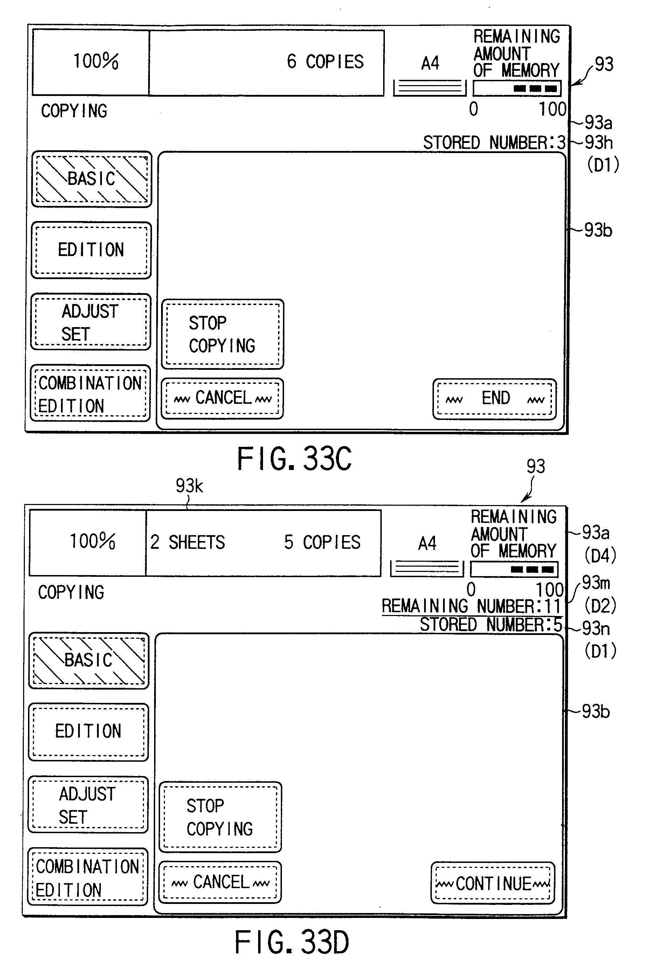

FIG. 33C indicates the menu display during the input operation or input/output operation, and a document input number "stored number : 3" 93h is sequentially counted up and displayed on the number display section 93a and the remaining output number of copies is counted down and displayed. However, since the total remaining output number of sheets is not yet determined, it is not displayed at this stage.

FIG. 33D indicates the menu display during execution of only the output operation after termination of the input operation, and a remaining output number "2" 93k and a total remaining output number "11" are sequentially counted down and displayed as well as the remaining output number of copies "5 copies" 93n on the number display section 93a.

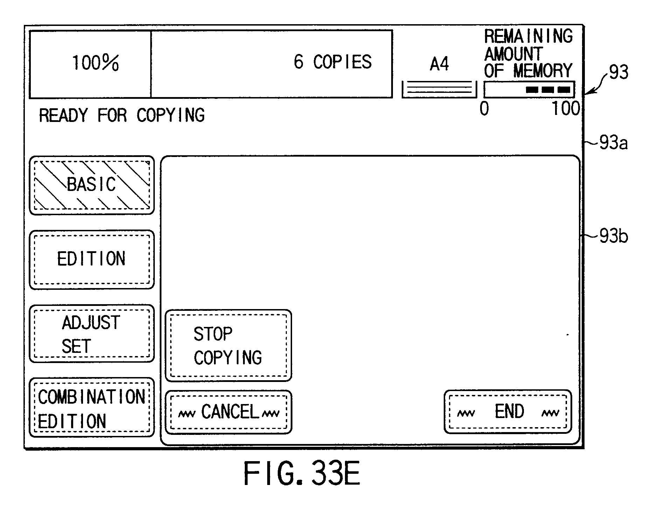

FIG. 33E indicates an example of display in the message display section 93 at the time of termination of the group copy job.

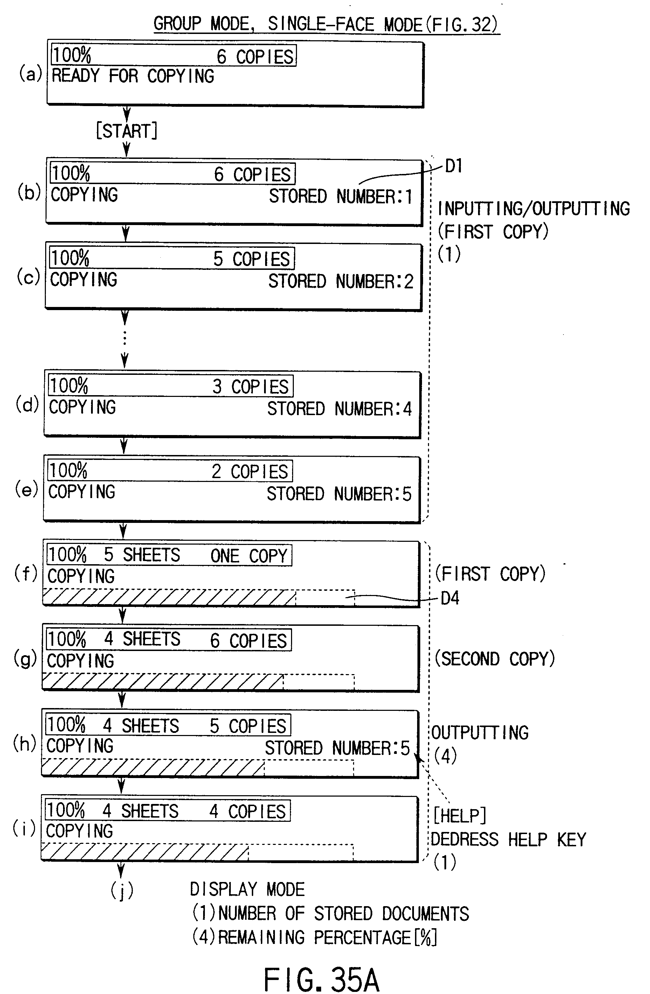

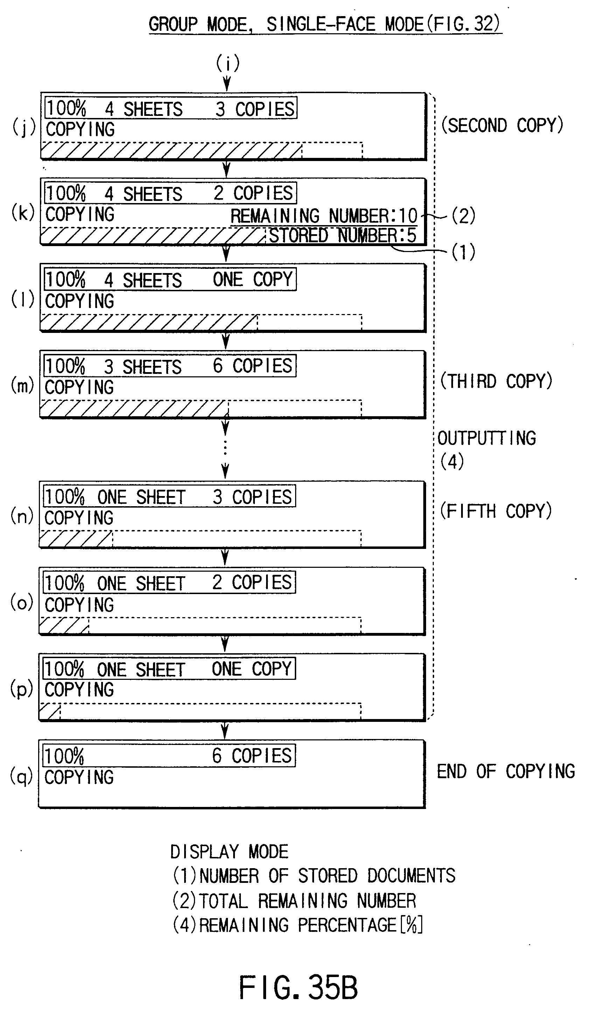

FIGS. 35A and 35B show the transition of the display states of the number display section 93a in the display example of the message display section 93 shown in FIGS. 33A to 33E. In this example, the total remaining output amount is displayed not by a number in the form of a remaining number of sheets but by the remaining rate in the form of bar graph set by selection of the mode (4), and the display position and the display timing of the number of documents are displayed in a format different from that used in the case of the sort mode of FIGS. 34A and 34B. The number of documents during the output operation is not displayed and it is displayed only while the hard key such as the "HELP" key 87 is kept depressed.

(a) of FIG. 35A indicates the display content when information of the "6 copies of magnification 100%" is set.

(b) to (e) of FIG. 35A indicate the states in the input/output operation for the first copy, the set number of six copies and the stored number D1 of document images in the input operation which is "1" are displayed in (b) of FIG. 35A, the remaining output number of five copies and the stored number of document images in the input operation which is "2" are displayed in (c) of FIG. 35A, the remaining output number of three copies and the stored number of document images in the input operation which is "4" are displayed in (d) of FIG. 35A, and the remaining output number of two copies and the stored number of document images in the input operation which is "5" are displayed in (e) of FIG. 35A.

(f) to (p) of FIGS. 35A and 35B indicate the states in the output operation for the first to fifth documents.

A state that the remaining output number of documents is "5", the remaining output number of copies for the first document is "1", and the total remaining output amount D4 is expressed by the remaining rate in the form of bar graph is displayed in (f) of FIG. 35A.

A state that the remaining output number of documents is "4", the remaining output number of copies for the second document is "6", and the total remaining output amount is expressed by the remaining rate in the form of bar graph is displayed in (g) of FIG. 35A.

A state that the remaining output number of documents is "4", the remaining output number of copies for the second document is "5", and the total remaining output amount is expressed by the remaining rate in the form of bar graph is displayed in (h) of FIG. 35A. At this time, by depressing the HELP key, the stored number of documents "5" can be simultaneously display and visually confirmed.

A state that the remaining output number of documents is "4", the remaining output number of copies for the second document is "4", and the total remaining output amount is expressed by the remaining rate in the form of bar graph is displayed in (i) of FIG. 35A.

A state that the remaining output number of documents is "4", the remaining output number of copies for the second document is "3", and the total remaining output amount is expressed by the remaining rate in the form of bar graph is displayed in (j) of FIG. 35B.

A state that the remaining output number of documents is "4", the remaining output number of copies for the second document is "2", and the total remaining output amount is expressed by the remaining rate in the form of bar graph is displayed in (k) of FIG. 35B.

A state that the remaining output number of documents is "4", the remaining output number of copies for the second document is "1", and the total remaining output amount is expressed by the remaining rate in the form of bar graph is displayed in (l) of FIG. 35B.

A state that the remaining output number of documents is "3", the remaining output number of copies for the third document is "6", and the total remaining output amount is expressed by the remaining rate in the form of bar graph is displayed in (m) of FIG. 35B.

A state that the remaining output number of documents is "1", the remaining output number of copies for the fifth document is "3", and the total remaining output amount is expressed by the remaining rate in the form of bar graph is displayed in (n) of FIG. 35B.

A state that the remaining output number of documents is "1", the remaining output number of copies for the fifth document is "2", and the total remaining output amount is expressed by the remaining rate in the form of bar graph is displayed in (o) of FIG. 35B.

A state that the remaining output number of documents is "1", the remaining output number of copies for the fifth document is "1", and the total remaining output amount is expressed by the remaining rate in the form of bar graph is displayed in (p) of FIG. 35B.

A state that the operation of making six copies for each document is completed and information "ready for copying" are displayed in (q) of FIG. 35B.

Thus, the display format of a plurality of documents/remaining output amount corresponding to the operation mode/output format can be supported because of the control function of the display management task d and the construction of the display management table h.

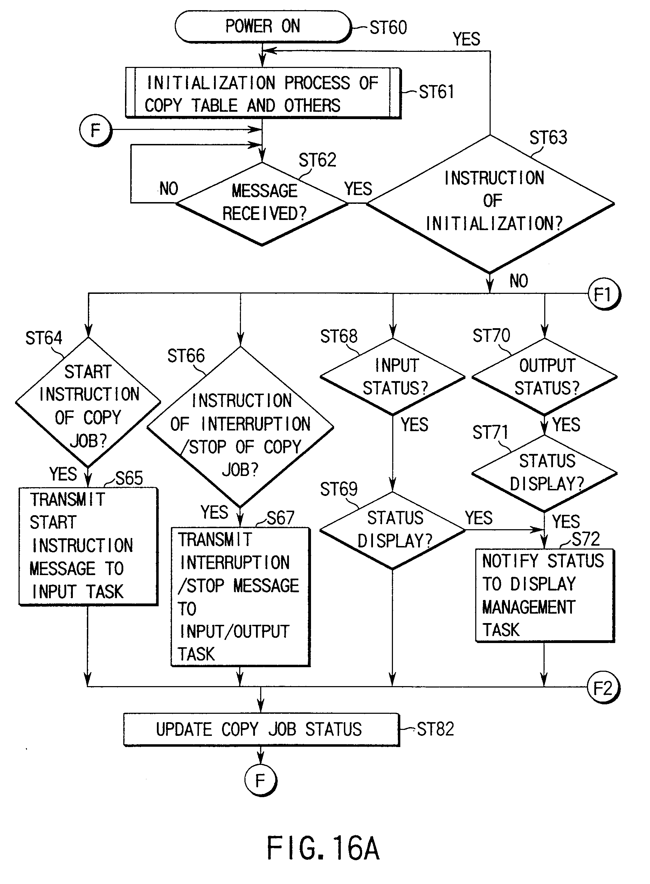

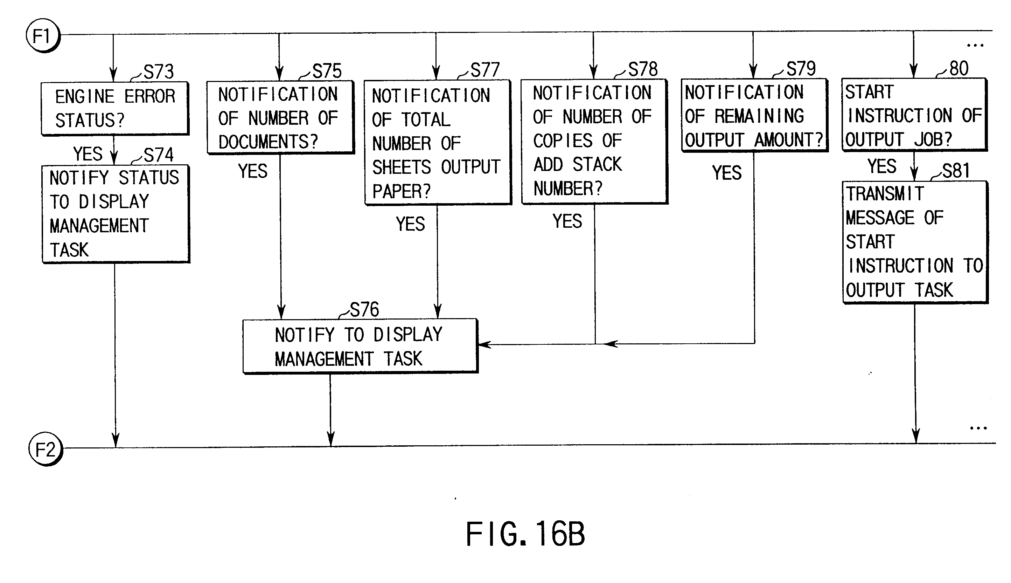

Next, the operation of the copy management task a for performing the management of the operation/state of the copy job is explained with reference to the flowchart of FIGS. 16A and 16B.

The copy management task a performs the operation control of the copy job by controlling the message transmission/reception with respect to the input task b, output task c, display management task d.

If a message is received (S62, S63) after the initialization process of the copy table and the like is effected (S61), the copy management task a analyzes the content of the received message. For example, when an instruction for starting the copy job is received (S64), it is first confirmed that a copy job which is now executed is not present and then the content (operation mode, number of copies, document size, zoom magnification, paper size, single/double-face input/output, binding margin information, memory edition content and the like) of the copy job set in the display management table h is searched and set into the copy table c and output/edition specifying table m, the input starting instruction message is transmitted to the input task b together with the ID (JOB-ID) of the copy table e in which the job content is registered (S65), and then the status of the copy job is updated (no copy job → issuance of input job starting instruction) (S82).

If an instruction of interruption/stop of the copy job is received (S66), a message of interruption/stop of the input/output task is transmitted (S67). Further, if the engine error (S73, S74), notification of the number of documents (S75, S76), notification of the output number of sheets of paper/total number of sheets (S77), notification of the number of copies of the ADD stack number (S78), notification of the remaining output amount (S79), or the start instruction of the output job (S80, S81) is received, a process corresponding to the job is effected.

That is, if the input start notifying status or the status in the input operation is received from the input task b (S68), the copy management task a analyzes the status content, and if it is a status to be notified to the display management task d (for example, an input start status) (S69), the status of the copy job is updated (→ normal operation of input job) (S82) after the status of the input task b is notified by use of message to the display management task d (S72).

If the start instruction message of output job is received from the input task b (S80), the copy management task a first confirms that the output job is not now in operation and then transmits an output start instruction message to the output task c and updates the status of the copy job (→ issuance of output job start instruction) (S82).

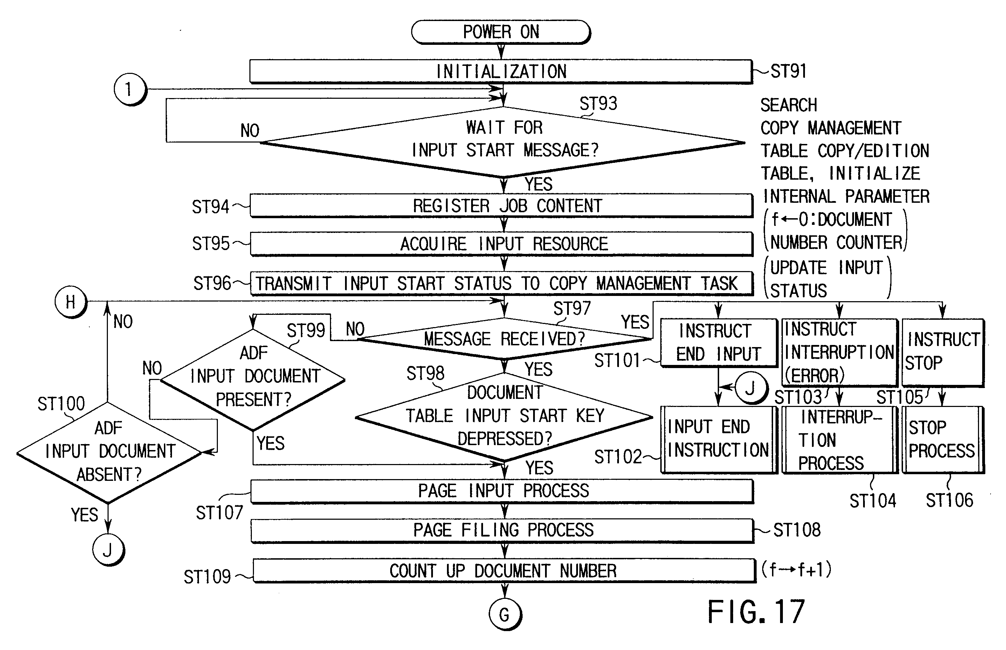

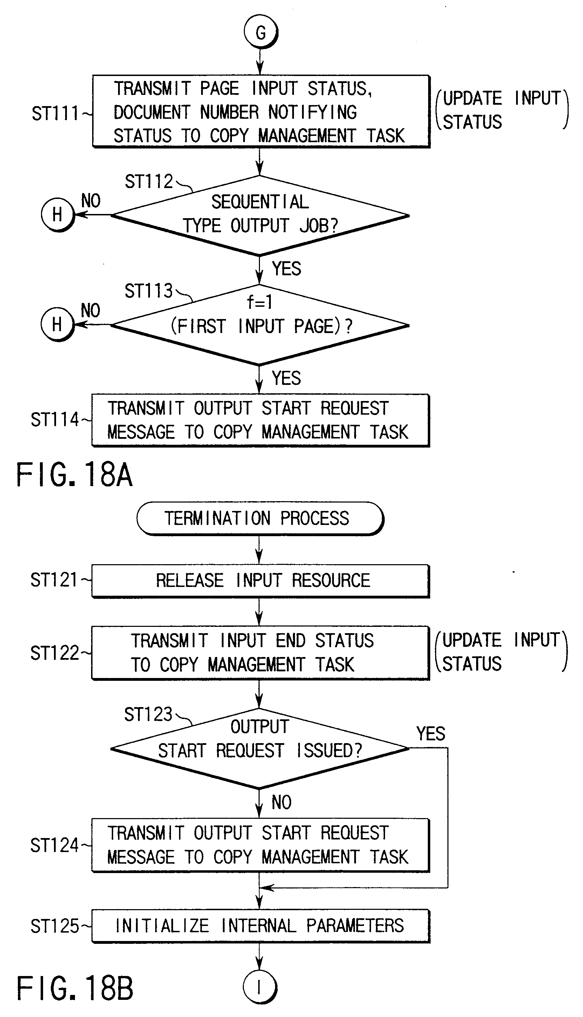

The operation of the input task b which starts the input job after receiving the input start instruction from the copy management task a is explained later with reference to FIGS. 17, 18A and 18B.

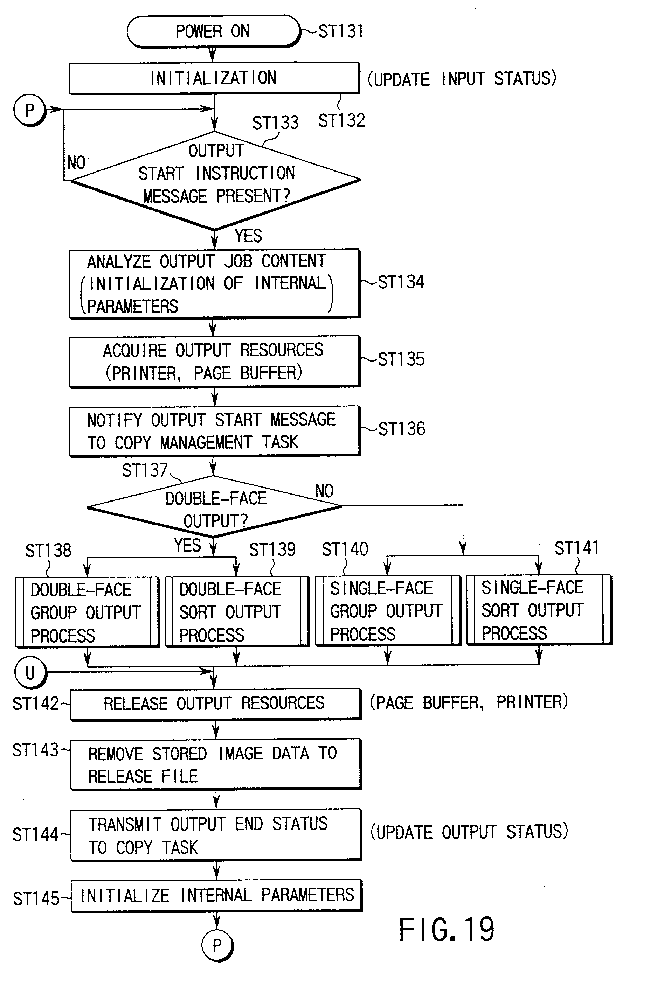

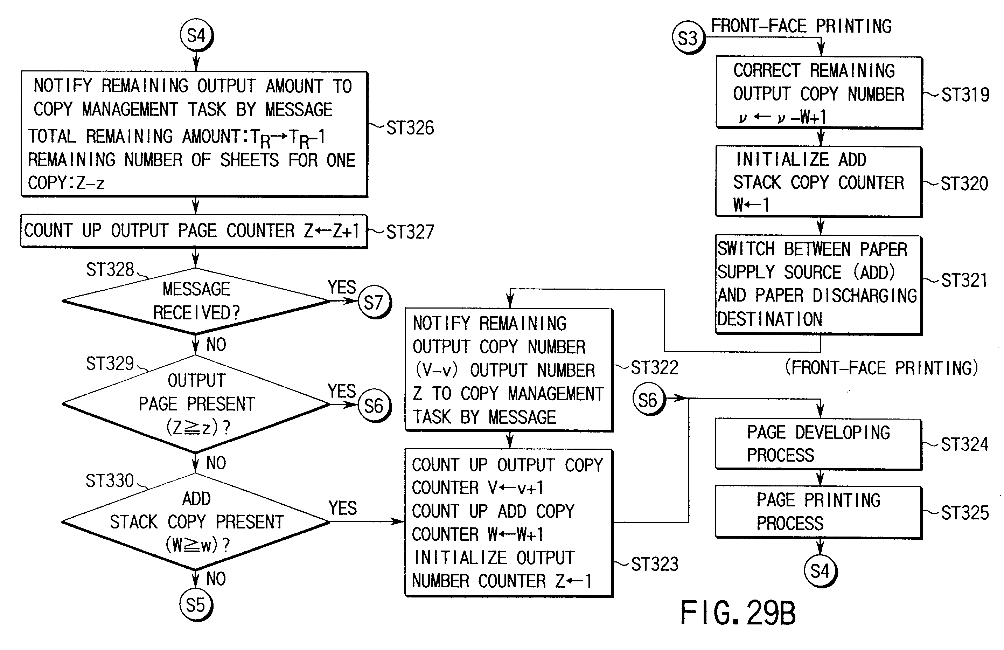

The operation of the output task c which starts the output job after receiving the output start instruction from the copy management task a is explained later with reference to FIGS. 19 to 29A and 29B.

Likewise, when an output start notifying status or the status in the output operation is received from the output task c (S70), the copy management task a analyzes the content of the received status, and if it is a status to be notified to the display management task d, the status of the output task c is notified by use of message to the display management task d (S72) and then the status of the copy job is updated (→ normal operation of output job/abnormal interruption) (S82).

Likewise, if an error notification message is received from the printer section 315 (S73), a display instruction message of error information is issued to the display management task d (S74). On the other hand, if an interruption/stop instruction message of the copy job is received from the display management task d (S66), an interruption/stop instruction message is issued to the input task b, output task c (S67). When a document number (the number of documents) notifying message is received from the input task b (S75), a document number display notification is issued to the display management task d (S76). Likewise, when a notification of remaining output information is received from the output task c (S79), when a notification of the number of sheets of output paper for each copy is received (S79), when a notification of the total number of sheets is received (S77), or when a notification of the stack number/number of copies at the time of double-face outputting is received (S78), a corresponding message is notified to the display management task d (S76).

Next, the operation of the input task b which is the actual control section of the input image process is explained with reference to the flowchart of FIGS. 17, 18A and 18B.

As shown in FIG. 17, the input task b waits for reception of a message from the copy management task a (S93) after initializing the internal parameter table (S91). If the content of the received message is an instruction of input start, the input task b starts the operation to analyze the content of the copy job by searching the copy table e based on the copy job ID which has received the notification from the copy management task a, set the content of the output job into the output/edition specifying table m, and at the same time, initialize a document number counter f (S94).

Then, a resource used in the input process, for example, the scanner section 313 is acquired and the open state of a file buffer memory M2 and a page buffer M1 of the page memory 323 is acquired (S95). Further, a status (input starting status) for notifying the start of the input task b to the copy management task a is transmitted as a message and the status of the input task b of the copy table c is updated (no input job → input start) (S96).

Determination of message reception (step H) is properly made during the operation of the input task b (S97). An input interruption/stop request by the user operation, an instruction of termination of input in the operation of manually inputting a plurality of documents and an instruction of interruption due to occurrence of error in the scanner section 313, printer section 315 are notified to the input task b by use of message, and at the time of message reception, the message content is analyzed and the input interruption/stop process corresponding to the analyzed content is performed (S101 to S106).

If no message is received, the presence of a next document is determined according to the input method (manual/ADF), and if an input document is present (S98), the page input process is effected. That is, image data of the document is read into the page buffer M1 of the page memory 323 (S107). Image data read into the page buffer M1 of the page memory 323 is compressed by the compression/expansion means 324 and written into the file buffer M2 of the page memory 323 (page filing process) (S108).

After page compression data is written into the page memory 323, the document number counter f which is an internal parameter of the input task b is counted up (S109), the document number notifying message is transmitted together with the page input status to the copy management task a (S111), and the input status of the copy table c is updated. In the single-face outputting mode in which the document input order is the same as the output order, the output operation can be started during the input operation even if the number of documents is not yet determined and this operation is called a sequential type output job. Unlike the sequential type output job, the operation for starting the output operation after the input operation of a plurality of documents is completed is called a completion type output job.

The type (completion type/sequential type) of the output job is determined based on the content of the copy job (copy table c) by the process of the input task b, and if the sequential type output job is detected (S112), an output start request message is transmitted from the input task b to the copy management task (S114) at the timing after the first document is input (document number counter f = 1) (S113).

While the input document is present, the process following the step H is repeatedly effected.

If a next input document is not present (S99, S100), the input job b branches the process to the termination process of the input job. In the termination process, the input resources of the page buffer M1 of the page memory 323 and the scanner section 313 are released (S121), the input termination status is transmitted to the copy management task a (S122), and the input status of the copy table e is updated ($\rightarrow$ normal termination of input) (S125).

In the case of completion type output job (S123), an output start request message is issued to the copy management task a (S124) to start the output job at the timing when the input job is terminated. After one input job is terminated, the internal parameter is initialized and a next copy (input) job start message is waited for (step I) (S125).

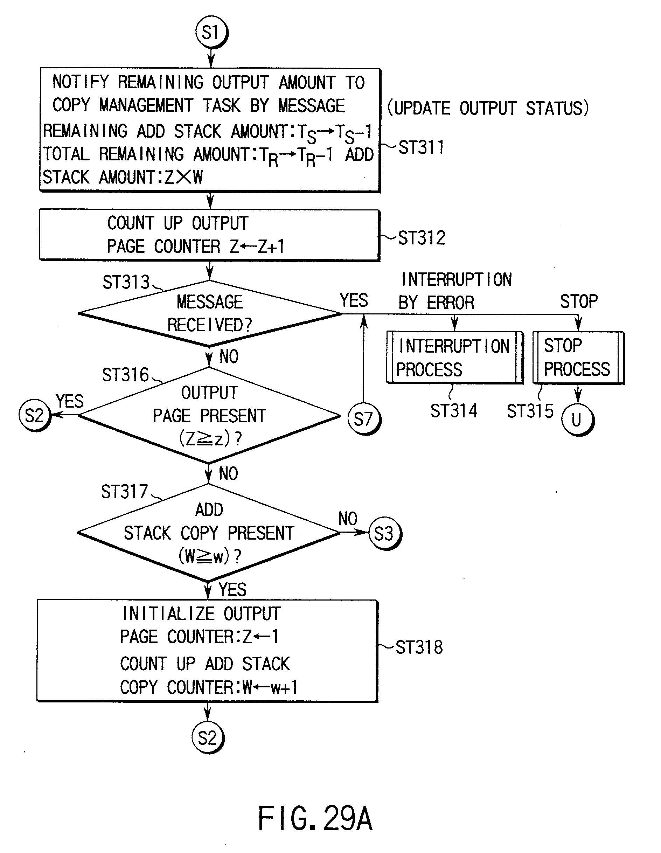

Next, the operation of the output task c which is an actual control section of the image output process is explained with reference to the flowcharts of FIGS. 19, 29A and 29B.

FIG. 19 shows the main operation flow of the output task c.

The output task c initializes the internal parameter table (S131) and then waits for a message from the copy management task a (S133). If the content of the received message is an output start instruction, the output task c starts the operation to analyze the content of the output job by searching the output/edition specifying table m based on the copy job ID which has received the notification from the copy management task a and initialize an output internal parameter (S134).

Then, the resource used in the output process, for example, the printer section 313 is acquired, and the open states of the file buffer M2 of the page memory 323 in which images are stored in the input job and the page buffer M1 of the page memory 323 are acquired (S135).

The file ID acquires ID which is set by the input task b by searching the output/edition table m. A message of status (output start status) which notifies that the output task c is started is transmitted to the copy management task a (S136) and the status of the output task c of the copy table e is updated (no output job $\rightarrow$ output start). The actual output process executes processes for respective output formats (operation modes (sort/group), single-face/double-face output) (S138 to S141).

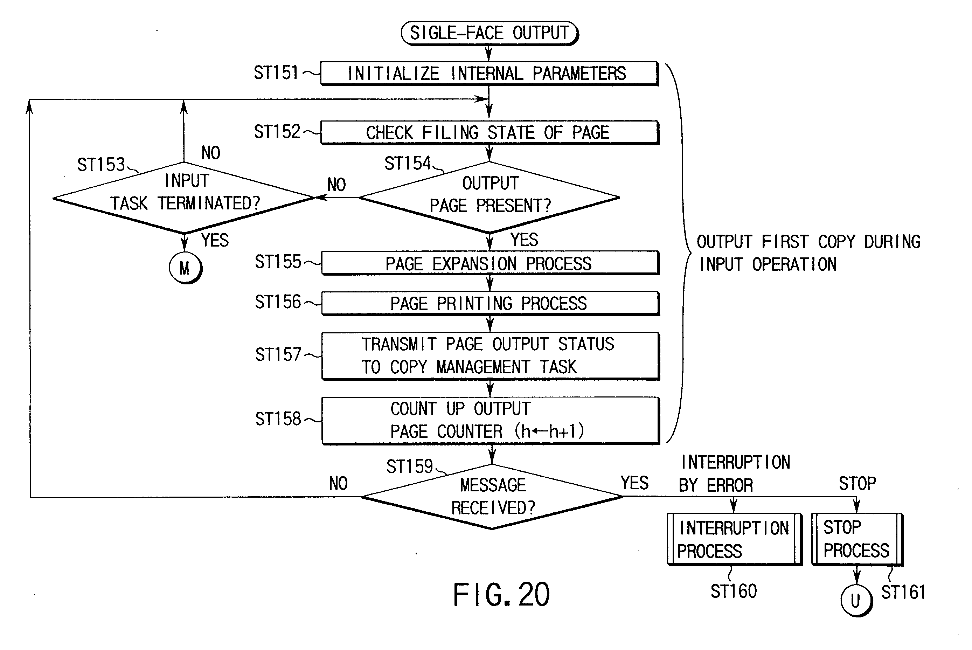

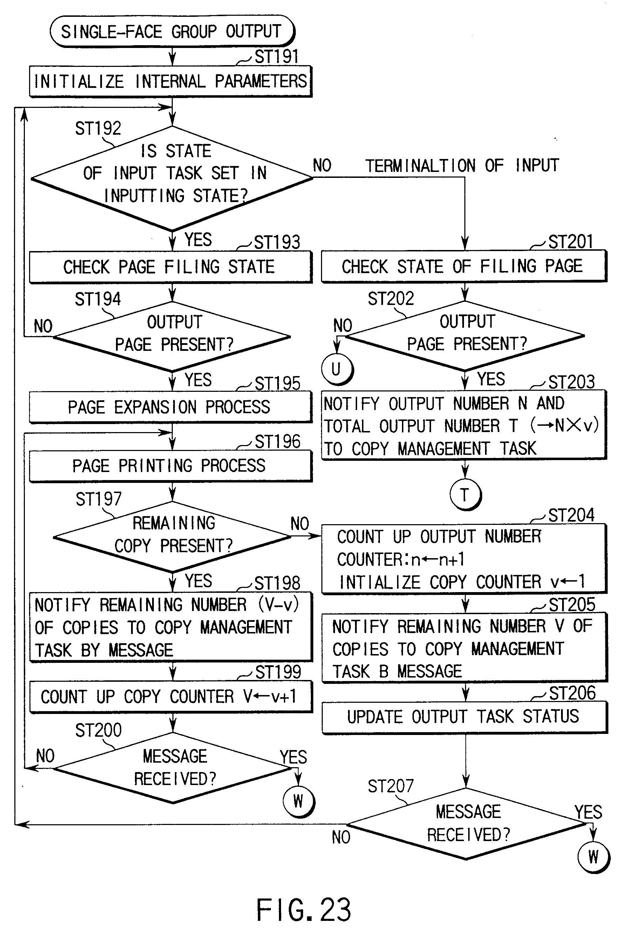

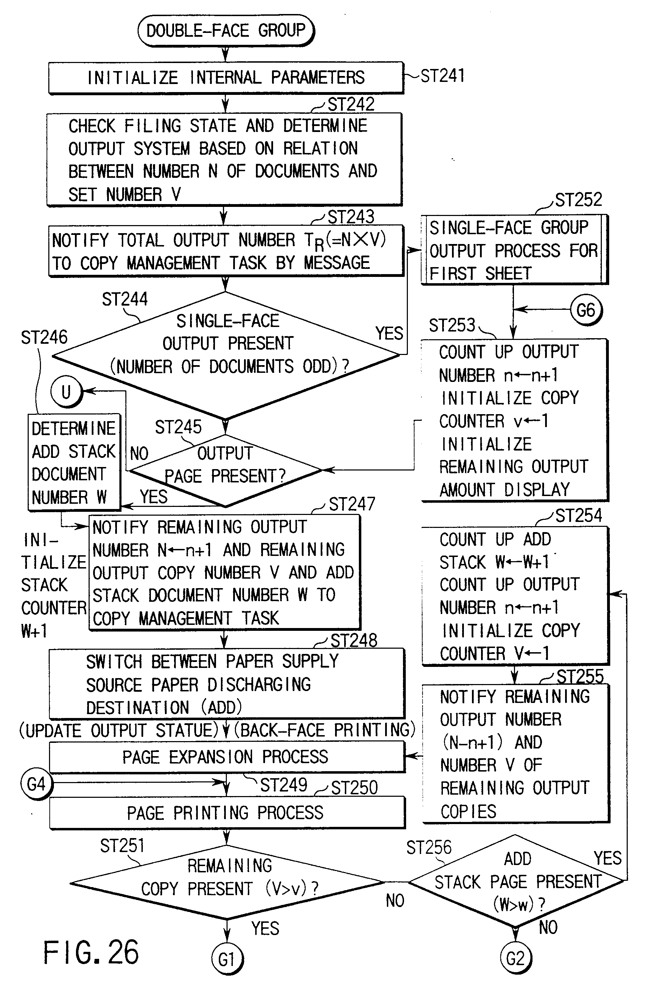

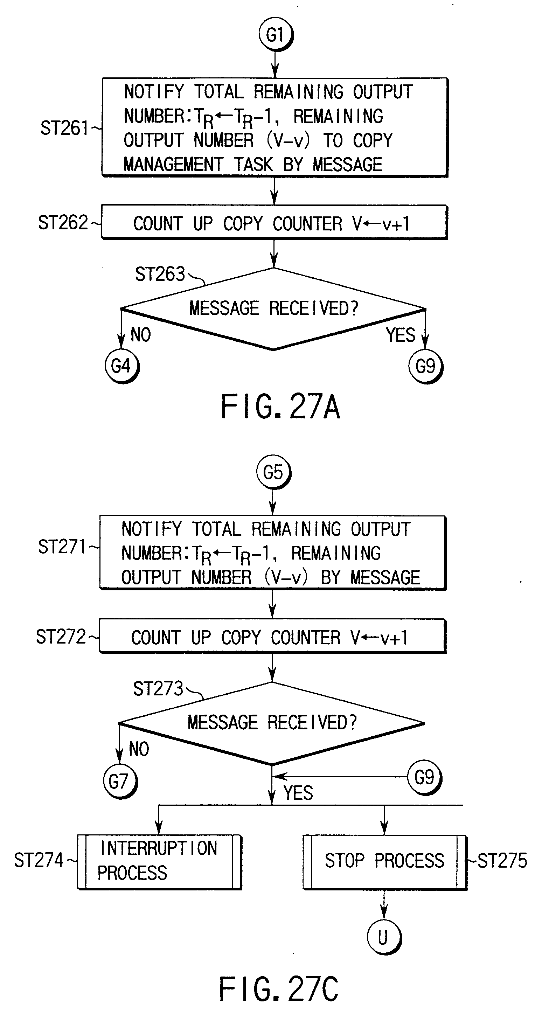

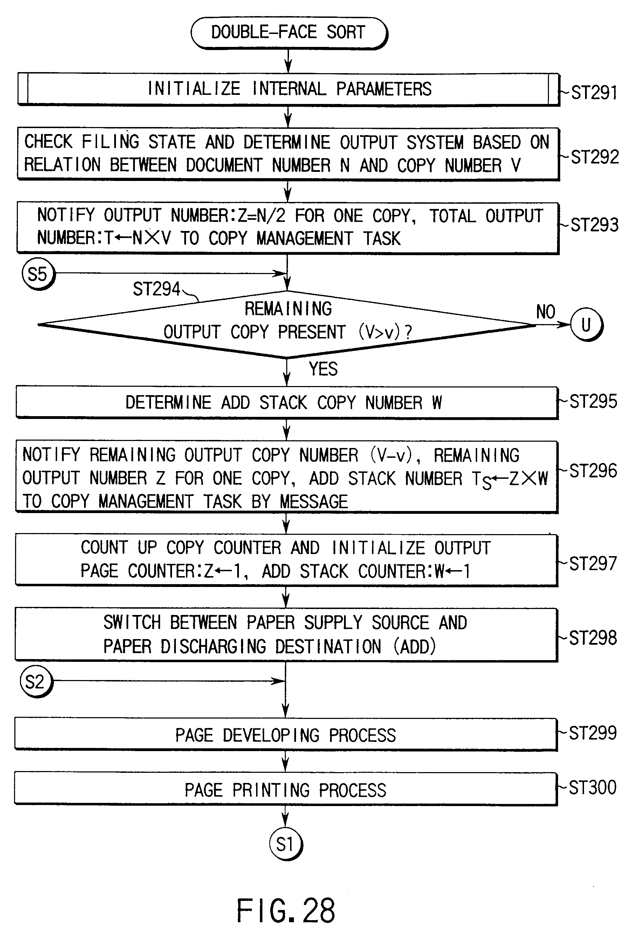

FIGS. 20 to 22 show the single-face output flow in the sort mode, FIGS. 23 to 25 show the single-face output flow in the group mode, FIGS. 26 and 27A to 27C show the double-face output flow in the group mode, and FIGS. 28, 29A and 29B show the double-face output flow in the sort mode.

The output job termination process is similar to the input job termination process, and the output resources of the page buffer of the page memory 323 and the printer section 315 are released (S142), and the file buffer M2 of the page memory 323 is released by removing the stored image data (S143). Then, an output termination status is transmitted to the copy management task a and the output status of the copy table e is updated ($\rightarrow$ normal termination of output) (S145).

After this, the output internal parameter is initialized and a next copy (output) job start message is waited for (P).

Next, the actual output processes of the respective output formats are explained based on the flow.

FIGS. 20 to 22 show the sequential type single-face output flow in the sort mode, and first, the internal parameters for the sequential type single-face sort output are initialized (S151).

For example, the copy counter v is set to "1" (user set copy number V), the output page counter n is set to "0" (the number N of output pages of each copy is not determined during the input operation), and the total remaining output number TR is set to "0" (it is not determined during the input operation).

Since the process is the sequential type output process, the state of the filing page is determined by searching the filing page information management table M3 of the RAM 104 (S152), and if a next output page is already input (the image is already stored) (S153, S154), the output page is subjected to the expansion process (S155). That is, the expansion process for the image file page is effected by use of the image compression/expansion means 324 and the expanded image data is developed in the page buffer M1 of the output page memory 323. After this, the expanded/developed image data in the page buffer M1 of the page memory 323 is started to be output to the printer section 315 (page output process) (S156).

After the page output process, the output page counter n which is the internal parameter of the output task c is counted up (S158) and the output status of the copy table e is updated (→ normal output) (S157).

Reception of the message is determined at proper timings during the operation of the output task c (S159). Part of the interruption instruction due to occurrence of error in the printer section 315 and the output interruption/stop request by the user operation is notified to the output task c by use of message, and when the message is received, the message content is analyzed and the output interruption/stop process corresponding to the content is effected (S160, S161).

When no message is received, the state of filing page is determined, and if a next output page is present, the page expansion and output process is repeatedly effected. When a next output page is not present, the input task b of the copy table e is searched, and if the input job is terminated (step M), the sort output process for the second or succeeding copy is effected (S159).

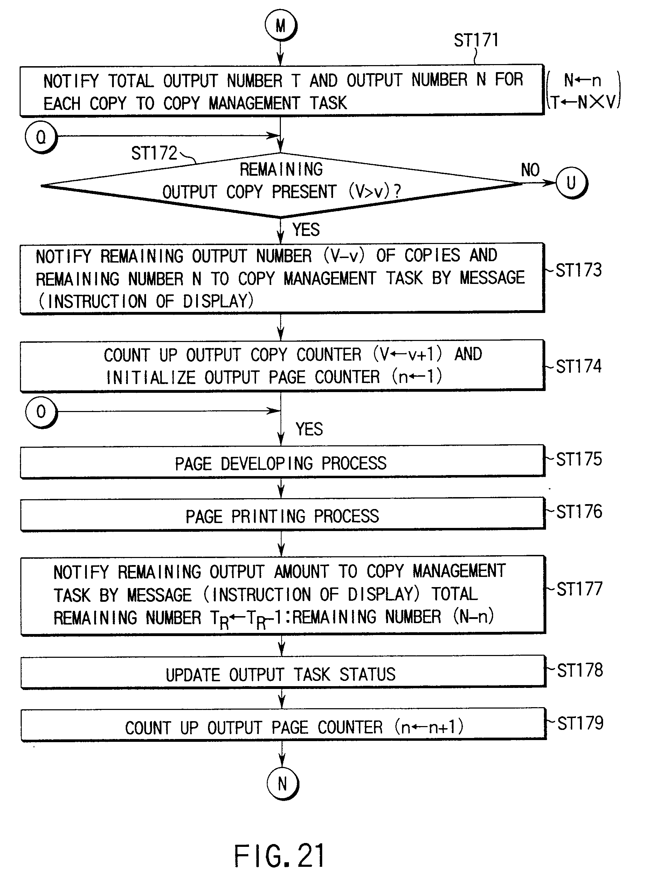

The output flow for the second or succeeding copy is shown in FIG. 21.

Since the output number N (in this case, it is equal to the input number) for each copy is determined at the time of termination of the input operation, the output number N and the total output number T : N × V are notified by use of message to the copy management task a (S171). If there is no output for the second or succeeding copy (the number v of copies specified by the user < 2), the output process is instantly terminated (S172), but if a remaining output copy is present (V > v) (step Q), the remaining output number (V - v) of copies and the initial value N of the remaining output number of sheets are transmitted to the copy management task a by use of message (S173) and initialization of the remaining amount display at the time of sort output for each copy is instructed. Further, the output copy counter v is counted up (S174), the output page counter n is set to "1", and the internal parameters for the copy are initialized.

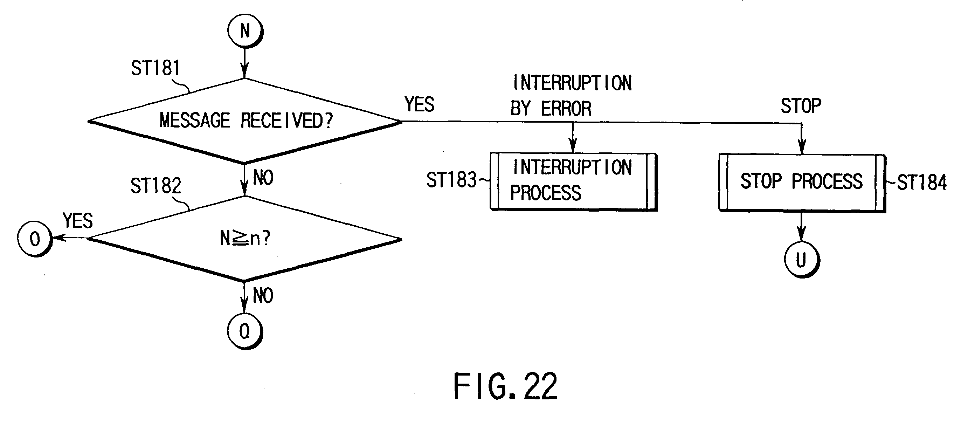

If an output page is present (N ≥ n) (step O), the page developing process (S175) and page expansion process (S176) are repeated, and the internal counter is updated to notify the remaining output amount to the copy management task a at each page output (S177). For example, the remaining output amount includes the total remaining number TR ← (TR - 1) and the remaining output number (N - n) for one copy. At the same time, the output status of the copy table c is updated and the output task status is also notified to the copy management task a by use of message. In the same manner as in the case wherein the first copy is output, reception of a message is determined at proper timings (step N) (S181 to S184 in FIG. 22).

FIGS. 23 to 25 show the sequential type single-face output flow in the group mode, and the internal parameters are initialized (S191) for the sequential type single-face group output.

For example, the copy counter v is set to "1" (user set copy number : V), the output page counter n is set to "1" (the output page number N is not determined during the input operation), and the total remaining output number TR is set to "0" (it is not determined during the input operation).

Since the process is the sequential type output process, the input state is determined by searching (or checking) the state of the input task b of the copy table e, and if the input job is set in the operating state (S192), the state of the filing page is determined by searching the filing page information management table M3 of the RAM 104 (S193), and if a next output page is already input (image is already stored) (S194), the output page is subjected to the expansion process (S195). That is, the expansion process for the image file page is effected by use of the image compression/expansion means 324 and the expanded image data is developed in the page buffer M1 of the output page memory 323. After this, the expanded/developed image data in the page buffer M1 of the page memory 323 is started to be output to the printer section 315 (page output process) (S196).

If a remaining copy is present (V > v) (S197), a remaining output copy number notifying message is transmitted to the copy management task a (S198), the copy counter v which is the internal parameter is counted up (S199), and the page outputting process is repeated. After the page outputting process of the specified number V of copies, the display and the internal parameter for each output of one copy are initialized. That is, the output page counter n is counted up, the copy counter v is initialized to "1", the initial value V of the remaining copy number display is notified to the copy management task a by use of message, and the output status of the copy table e is updated (→ normal outputting operation).

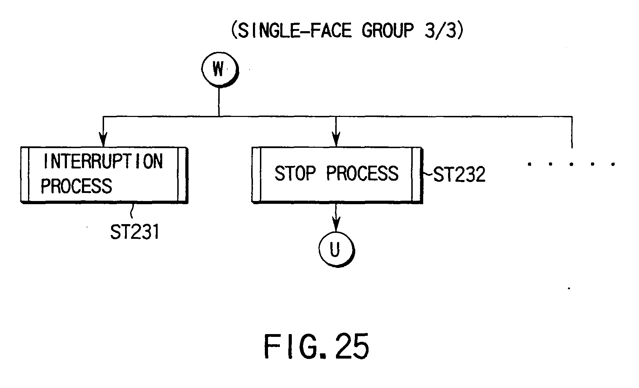

Reception of the message is determined at proper timings during the operation of the output task c (S200). Part of the interruption instruction due to occurrence of error in the printer section 315 and the output interruption/stop request by the user operation is notified to the output task c by use of message, and when the message is received, the message content is analyzed and the output interruption/stop process corresponding to the content is effected (S231, S232 in FIG. 25).

When no message is received, the output process is continued. The state of the input task b is searched (or checked) for each copy output process and the copy output process is repeatedly effected during the operation of the input job. If the input job is terminated, the state of the filing page is checked (S201) and if a next output page is not present (S202), the group output process is terminated (step U).

If a next output page is present (S202), the output number N (in this case, it is equal to the input number) is determined at the time of termination of the input operation, and therefore, the output number N and the total output number T : N × V are notified to the copy management task a by use of message (S203).

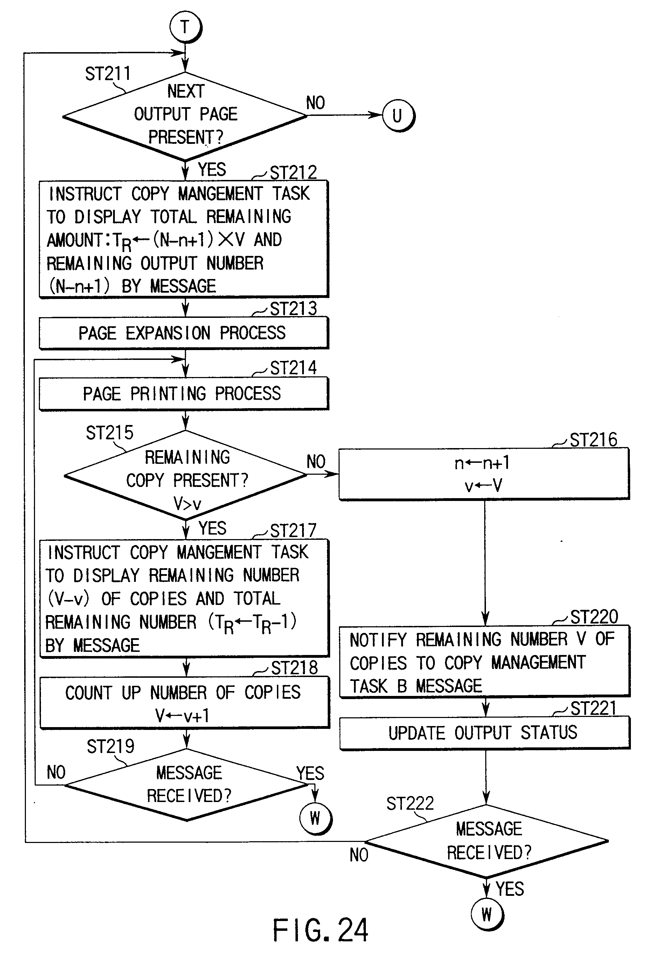

The group output flow after the termination of the input operation is shown in FIG. 24.

If a remaining output page is present ($N \geq n$) (step T) (S211), the total remaining number $TR \leftarrow (N - n + 1) \times V$, the remaining output number ($N - n + 1$) are transmitted to the copy management task a by use of message and initialization of the remaining amount display for each output page at the time of group output is instructed (S212).

A next output page n is subjected to the expansion process, and the expanded image data is developed in the page buffer M1 of the output page memory 323 (S213). After this, the expanded/developed image data in the page buffer M1 of the page memory 323 is started to be output to the printer section (page output process) (S214). If a remaining copy is present ($V > v$) (S215), a remaining output copy number notifying message is transmitted to the copy management task a by use of message (S217), the copy counter v which is the internal parameter is counted up (S218), and the page outputting process is repeated.

After the page outputting process of the specified copy number V is effected (S215), the display and the internal parameters for each output of one copy are initialized. That is, the output page counter n is counted up (S216), the copy counter v is initialized to "1", the initial value V of the remaining copy number display is notified to the copy management task a by use of message (S220), and the output status of the copy table e is updated ($\rightarrow$ normal outputting operation) (S221).

Reception of the message is determined at proper timings during the operation of the output task c (S219, S222). Part of the interruption instruction due to occurrence of error in the printer section 315 and the output interruption/stop request by the user operation is notified to the output task c by use of message, and when the message is received, the message content is analyzed and the output interruption/stop process corresponding to the content is effected. When no message is received, the output process is continued. The presence or absence of a next output page is determined for each output of one copy (step T), and if a next output page is no more present, the group output process is terminated (step U).

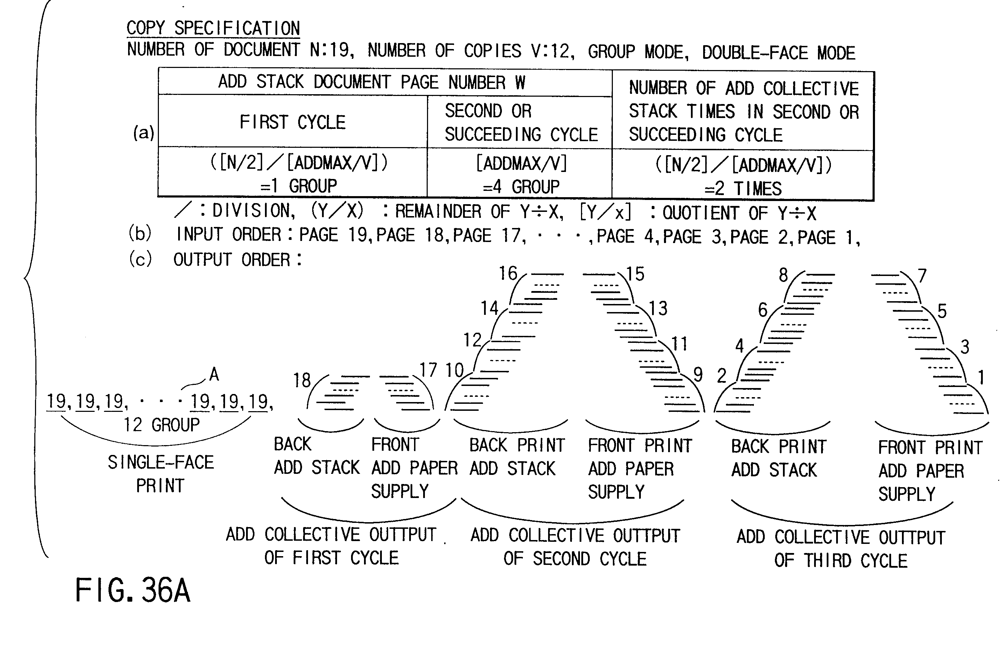

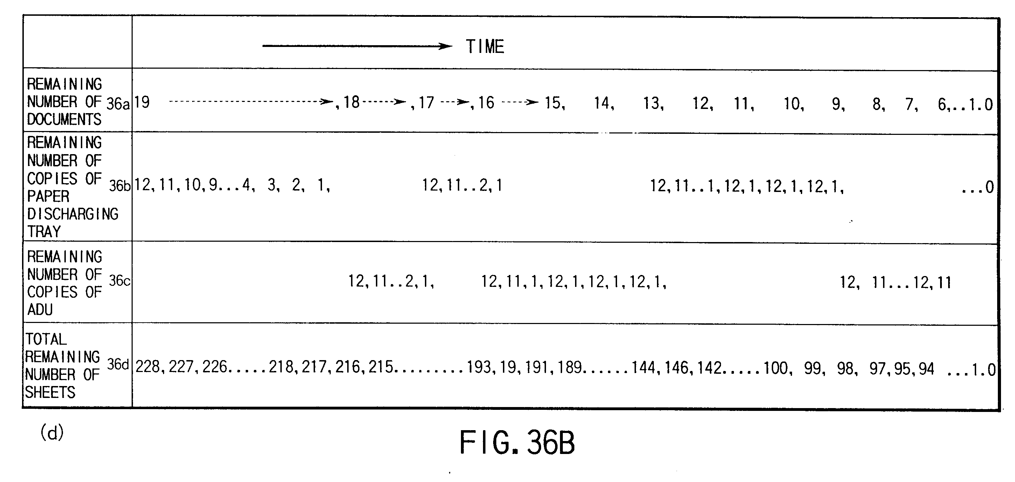

FIGS. 26, 27A to 27C show the completion type double-face output flow in the group mode. FIGS. 36A and 36B show one example of the process of the double-face group of ADD stack system in the automatic double-face setting device (ADD) 75.

The output system for utilizing the ADD most efficiently can be derived by substituting the parameters into the processing formula of FIG. 36A.

That is, when the process is effected in the group double-face mode using the ADD stack, the number of operation cycles in which the copying operation is effected using the ADD stack and the number of sheets of paper to be copied in each operation cycle are set to optimum values according to the copy specification. By this setting, it becomes possible to reduce the number of times of mechanical switching of the ADD to minimum and effect the copying operation using the ADD most efficiently, rapidly and smoothly according to the given specification and the size of the ADD.

The processing formula is shown in (a) of FIG. 36A, the order of input of input documents is shown in (b) of FIG. 36A, the order of output of printed paper is shown in (c) of FIG. 36A, and time-transitional images of the remaining output amount display are shown in (d) of FIG. 36B. They correspond to the transition of display states of the number 36a of remaining documents, the remaining output copy number display 36b during the outputting operation to the discharging tray, the remaining copy number display 36c in the ADD stack, and the total remaining number 36d of sheets.

In FIG. 26, the internal parameters are first initialized (S241) for the completion type double-face group output. For example, the copy counter v is set to "1", and the output page counter n is set to "1". Then, the state of the filing page is checked and the double-face group output system is determined based on the relation between the number of filing pages and the set number V of copies (S242).

For example, in the formula shown in (a) of FIG. 36A, the copy specification values, for example, in the copy example of FIG. 36A, the number of documents (N) : 19, the number of copies (V) : 12, and the upper limit of the ADD stack : (ADDMAX = 50) are substituted. In this case, / indicates division, (Y/X) indicates the remainder of $Y \div X$, and [Y/X] indicates the quotient of $Y \div X$.

Based on the above condition, the number of ADD stack copies in the first cycle ([N/2]/[ADDMAX/V]) = (1/4) = 1 GROUP can be obtained. That is, in (c) of FIGS. 36A and 36B, in the ADD stack in the first cycle, the stack operation of one copy (back-face printing of 19 sheets (18 pages) $\rightarrow$ stack $\rightarrow$ front-face printing (17 pages) is effected.

Further, the number of ADD stack copies in the second or succeeding cycle [ADDMAX/Y]) = [50/12] = 4 GROUP can be obtained. That is, in (c) of FIG. 36A, in the ADD collective output operation in the second or third cycle, the stack operation of four copies is effected. Specifically, the back-face printing of 10th, 12th, 14th, 16th page is effected for 12 sheets for each page, the printed sheets of paper are stacked, and then the front-face printing of 15th, 13th, 11th, 9th page is effected for sheets of paper taken out from the stack.

Further, the ADD collective stack number of times in the second or succeeding cycle ([N/2]/[ADDMAX/V]) = [[19/2]/[50/12]] = [9/4] = 2 TIMES can be obtained. That is, as shown in (c) of FIG. 36A, it is determined that the optimum number of times of application of the ADD is three. At this time, the number of mechanical switching operations is 5 and the processing speed can be extremely enhanced in comparison with a case wherein paper is simply inserted into or taken out from the ADD stack for each sheet and the double-face copying is effected.

At this time, the output page number N and the total output number $T \leftarrow V \times N$ are notified to the copy management task a by use of message (S243).

As the result of analysis of the output system, if it is determined that the number of documents is odd and the single-face outputting is first effected (S244), the single-face outputting operation of the specified copy number is effected (S252) in the same manner as in the case of FIGS. 23 to 25, then the output page counter n is counted up, the copy counter v is initialized to "1" and an instruction of initialization of the remaining output amount display for each output page is issued (S253). For example, the remaining output number ( N - n + 1 ) and the remaining output copy number V are notified to the copy management task a by use of message.

On the other hand, when the number of documents is even and the single-face outputting operation is not effected (S244) and if a next output page is present (N ≧ n) (S245), the number W of ADD stack documents is determined (S246), the ADD stack counter w is initialized to "1", and initialization information of the remaining output amount display for back-face output is transmitted to the copy management task a. For example, the remaining output number ( N - n + 1 ), the number V of remaining output copies and the ADD stack document number W are transmitted by use of message (S247).

At the same time, the process of switching between the paper supply source and the paper discharging destination (ADD) for back-face outputting is effected (S248). After this, the expansion process for a corresponding output page (S249) and the page outputting process (S250) are effected, and if a remaining output copy is present (V > v) (S251), the remaining output copy number (V - v) and the total remaining output number TR ← (TR - 1) are notified to the copy management task a by use of message, the copy counter v which is the internal parameter is counted up and the page outputting process (step G4) is repeated.

After the page outputting process for the specified copy number V is completed and if an ADD stack document is present (W > w) (S256), the ADD stack counter w is counted up and the display and the internal parameter for each output of one copy are initialized (S254). That is, the output page counter n is counted up, the copy counter v is initialized to "1", the initial value V of the remaining copy number display is notified to the copy management task a by use of message (instruction of initialization of display), and the output status of the copy table e is updated (→ back-face normal outputting operation) (S255).

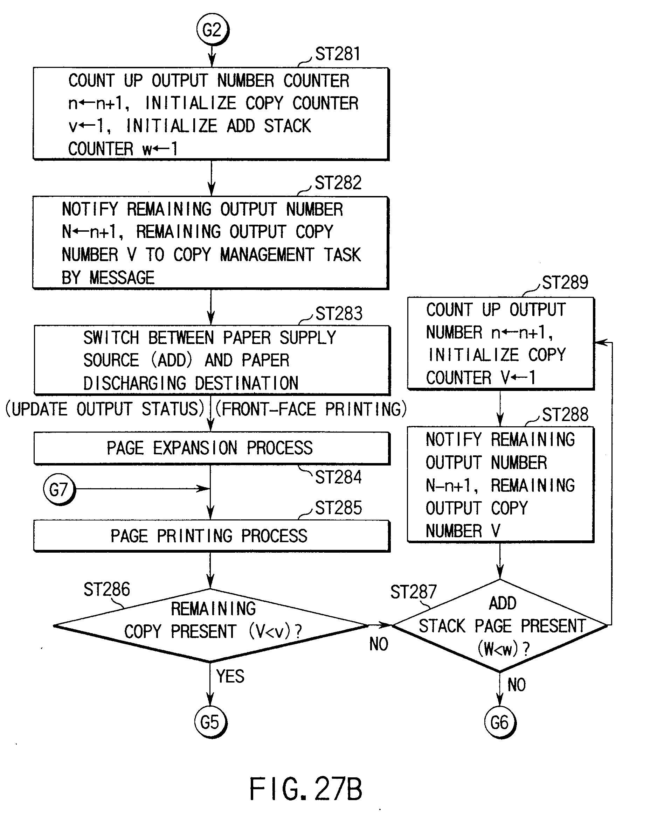

Then, the expansion process for a next back-face output page and the page outputting process of the set number V of copies are repeated. When a page to be stacked in the ADD becomes no more present (W ≦ w), the process is switched to the front-face outputting process (step G2) shown in FIG. 27B.

Reception of the message is determined at proper timings during the operation of the output task c (S263, S273). Part of the interruption instruction due to occurrence of error in the printer section 315 and the output interruption/stop request by the user operation is notified to the output task c by use of message, and when the message is received, the message content is analyzed and the output interruption/stop process corresponding to the content is effected (S274, S275).

Like the back-face outputting process, in the front-face outputting process (step G2), the initialization process of the internal parameters for front-face outputting is first effected for each output page (S281) and initialization information of the remaining output amount display is transmitted to the copy management task a (S282). For example, the output page counter n is counted up, the copy counter v ← "1" and the ADD stack counter w ← "1" are subjected to the initialization process, and the remaining output number ( N - n + 1 ), remaining output copy number V and ADD stack document number W are transmitted to the copy management task a by use of message. At the same time, the process of switching between the paper supply source (ADD) for front-face outputting and the paper discharging destination is effected (S283).

After this, the expansion process for a corresponding output page (S284) and the page outputting process (S285) are effected, and if a remaining output copy is present (V > v) (S286), the remaining output copy number (V - v) and the total remaining output number TR ← (TR - 1) are notified to the copy management task a by use of message (S288), the copy counter v which is the internal parameter is counted up (S289) and the page outputting process (step G7) is repeated.

After the page outputting process for the specified copy number V is completed and if an ADD stack document is present (W > w) (S287), the ADD stack counter w is counted up and the display and the internal parameter for each output of one copy are initialized (S289). That is, the output page counter n is counted up, the copy counter v is initialized to "1", the initial value V of the remaining copy number display is notified to the copy management task a by use of message (instruction of initialization of display), and the output status of the copy table e is updated (→ normal front-face outputting operation). Then, the expansion process for a next front-face output page and the page outputting process of the set number v of copies are repeated.

When a page to be supplied from the ADD becomes no more present (W ≦ w) (S287), the step G6 is effected again and the back-face outputting → front-face outputting process is repeatedly effected while output pages are present (N ≧ n). When the output page becomes no more present, the double-face group outputting process is terminated (step U).

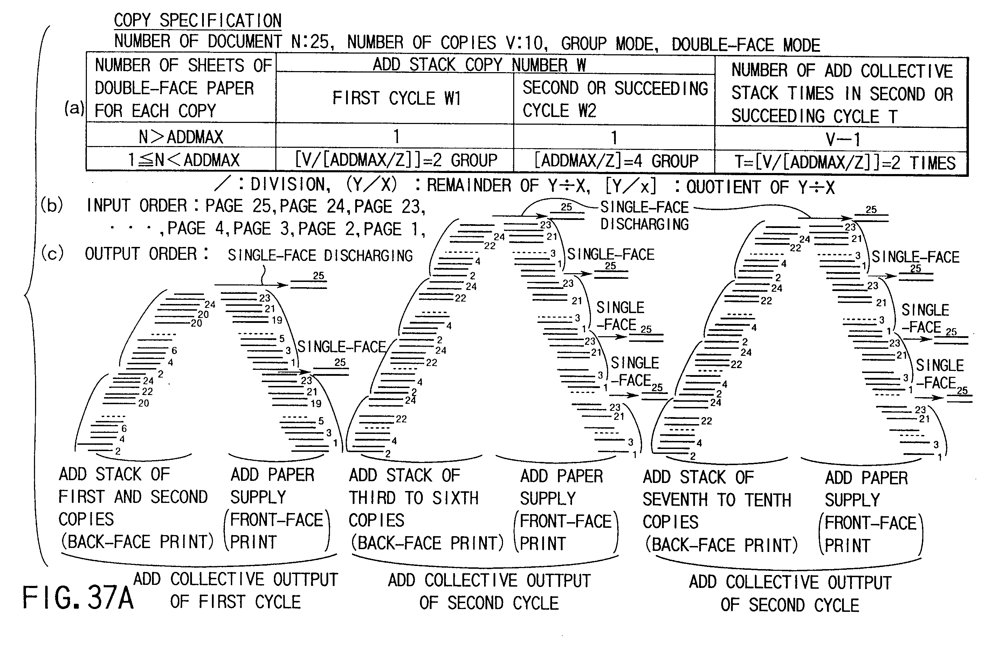

FIGS. 28, 29A and 29B show the completion type double-face output flow in the sort mode and one example of the process of double-face sort of ADD stack system is shown in FIG. 37A.

An output system most efficiently using the ADD can be derived by substituting the parameters into the processing formula of FIG. 37A (S292).

That is, there is provided a method for automatically determining a method for most efficiently using the ADD stack when the double-face copy is made according to the copy specification as shown in (a) of FIG. 37A.

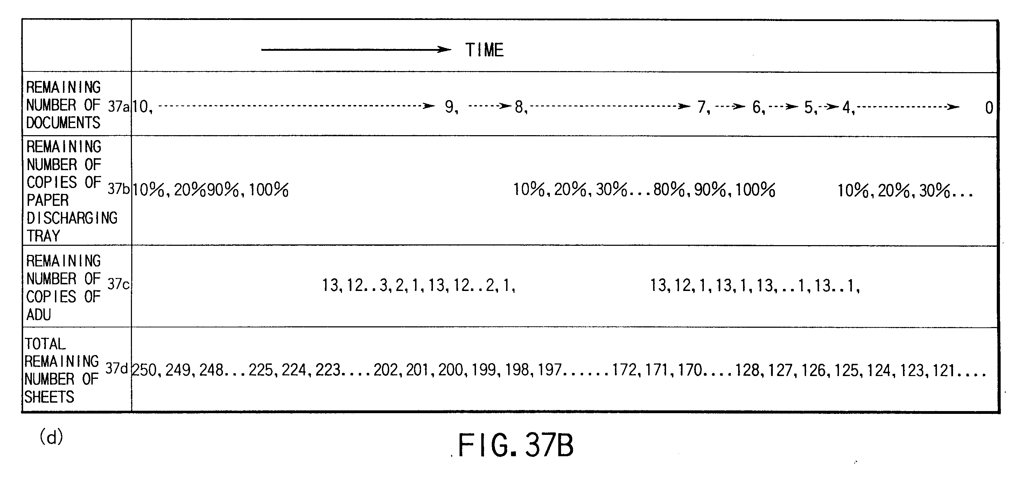

The processing formula for deriving the output system is shown in (a) of FIG. 37A, the order of input of documents is shown in (b) of FIG. 37A, the way the printing paper is stacked on the ADD stack is diagramatically shown in (c) of FIG. 37A, and time-transition of the remaining output amount display state is shown in (d) of FIG. 37B. They correspond to the transition of the remaining output copy number display 37a, the ADD stack rate display 37b in the ADD stack, the remaining output number display 37c for each copy during the outputting operation to the discharging tray, and the total remaining number display 37d.

In FIG. 28, the internal parameters for completion type double-face sort output are initialized (S291). For example, the copy counter v is initialized to "0", the output page counter z is initialized to "1", and the ADD stack copy counter w is initialized to "1".

Then, the state of the filing page is checked and an output system of double-face sort is determined based on the relation between the filing page number and the set number V of copies (S292).

In the case of double-face sort mode shown in FIGS. 37A and 37B, the ADD stack copy number W and the ADD collective stack number in the second or succeeding cycle are determined as follows when the number of documents N : 25, the number V of copies : 10, the number Z (= N/2) of sheets of paper for double-face stack for each copy. That is, with the set number shown in (a) of FIG. 37A : $1 \leqq V \leqq 999$ and the ADD stack upper limit : ADDMAX = 50, the ADD stack copy number W in the first cycle = [V/[ADDMAX/Z]] = [10/[50/12]] = 2 GROUP, the ADD stack copy number W in the second or succeeding cycle = [ADDMAX/Z] = [50/12] = 4 GROUP, and the ADD collective stack number of times in the second or succeeding cycle [V/[ADDMAX/Z]] = [10/[50/12]] = 2 TIMES are obtained. In this case, / indicates division, (Y/X) indicates the remainder of $Y \div X$, and [Y/X] indicates the quotient of $Y \div X$.

In (c) of FIG. 37A, an output process is effected according to the determined output system, and in the ADD collective stack printing in the first cycle, a paper stacking operation for every two groups is effected and the group double-face printing is effected for two copies. After this, the ADD stack is utilized twice, and three times in total, based on the result of calculation. At this time, the number of copies in each ADD stack is 4 groups as calculated above.

That is, optimum allocation can be automatically effected according to the given copy mode and the size of the ADD stack by the above output system while the operator of the copying machine is not required to pay any attention to it. Therefore, the number of mechanical switching processes effected in this apparatus at the time of double-face copying operation is suppressed to 5, the double-face copying operation can be extremely efficiently and smoothly effected by taking full advantage of the size of the ADD stack and the processing speed can be significantly enhanced in comparison with a case wherein paper is inserted into or taken out from the ADD stack for each sheet as in the prior art.

At this time, the output page number Z = [N/2] and the total output number $T \leftarrow V \times N$ are notified to the copy management task a by use of message (S293).

In this example, the total output number T is set to the number of sheets of paper on the assumption that they are output with one face printed. That is, the output number for one sheet of paper becomes 2 because the front-face printing and back-face printing are effected for each sheet of paper. If an output copy is present ($V \geqq v$), the double-face sort output process is repeated (S294). First, the ADD stack copy number W is determined based on the previously determined output system (S295) and initialization information of the remaining output amount display for back-face out-putting is transmitted to the copy management task a (S296). For example, the initial value Z of the remaining output number for each copy, the remaining output number (V - v) of copies, and the total number Ts (= $Z \times W$) of sheets of paper stacked on the ADD are transmitted by use of message.

Further, the initialization process of the internal parameters for each ADD stack is effected (S297). For example, the copy counter v is counted up and the output ADD stack copy counter $w \leftarrow$ "1" and the output sheet counter $z \leftarrow$ "1" are initialized. At the same time, the process of switching between the paper supply source and the paper discharging destination (ADD) for back-face outputting is effected (S298). After this, if an output page is present ($Z \geqq z$), an output page corresponding to the set value of the output page counter z is subjected to the expansion process, page outputting process (S299, S300) for back-face sort outputting, the total ADD stack remaining number of sheets Ts $\leftarrow$ (Ts - 1) is notified to the copy management task a by use of message (S311), the output page counter z is counted up (S312) and the page development process and page output process are repeated (step S2).

After the back-face page output process for one copy, the ADD stack counter w is counted up (S316, S317, S318) if an ADD stack copy is present (W > w), and the output page counter z for each copy is initialized and the output status of the copy table e is updated ($\rightarrow$ normal outputting operation). Then, the ADD stack back-face sort outputting process for the next copy is repeated (step S2). When a copy stacked in the ADD is no more present ($W \leqq w$), the process is switched to the front-face outputting process shown in the step S3 and succeeding steps in FIG. 29A (S317).

Reception of the message is determined at proper timings during the operation of the output task c (S313). Part of the interruption instruction due to occurrence of error in the printer section 315 and the output interruption/stop request by the user operation is notified to the output task c by use of message, and when the message is received, the message content is analyzed and the output interruption/stop process corresponding to the content is effected (S314, S315).

Like the case of the back-face outputting process, in the front-face outputting process (step S3), the correction process of the internal parameters for front-face outputting (for example, the copy counter $v \leftarrow (v + W - 1)$) is effected (S319) and the initialization process for each output of one copy (for example, the ADD stack counter $w \leftarrow 1$, the output page counter $z$ for each copy $\leftarrow 1$) is effected (S320). Then, the process of switching between the paper supply source (ADD) and the paper discharging destination for front-face outputting is effected (S321). After this, initialization information for the front-face sort remaining amount display is transmitted to the copy management task a (S322, S323). For example, the information contains the output remaining number Z for each copy and the number (V - v) of remaining output copies.

After this, the page outputting process and the expansion process for a corresponding front-face output page are effected (S324, S325), and if a remaining output page is present $(Z > z)$ (S328, S329, S330), the remaining output page number $(Z - z + 1)$ and the total remaining output number $TR \leftarrow (TR - 1)$ are notified to the copy management task a by use of message (S326), the output page counter $z$ is counted up (S327) and the page developing process and page outputting process (step S6) are repeated.

After the front-face page output process for one copy, the ADD stack counter $w$ and the copy counter $v$ are counted up if an ADD stack copy is present $(W > w)$, and the output page counter $z$ for each copy is initialized and the output status of the copy table e is updated $(\rightarrow$ normal outputting operation). Then, the ADD paper supply process and the front-face sort outputting process for the next copy are repeated (step S4) (S326 to S330).

When a copy to be supplied from the ADD is no more present $(W \leqq w)$, the process is switched to the back-face outputting process shown in the step S5 and succeeding steps in FIG. 28. After this, if a remaining output copy is present $(V > v)$ (S294), the back-face outputting $\rightarrow$ front-face outputting process is repeated (S295 to S300). When an output page becomes no more present, the double-face sort outputting process is completed (step U).

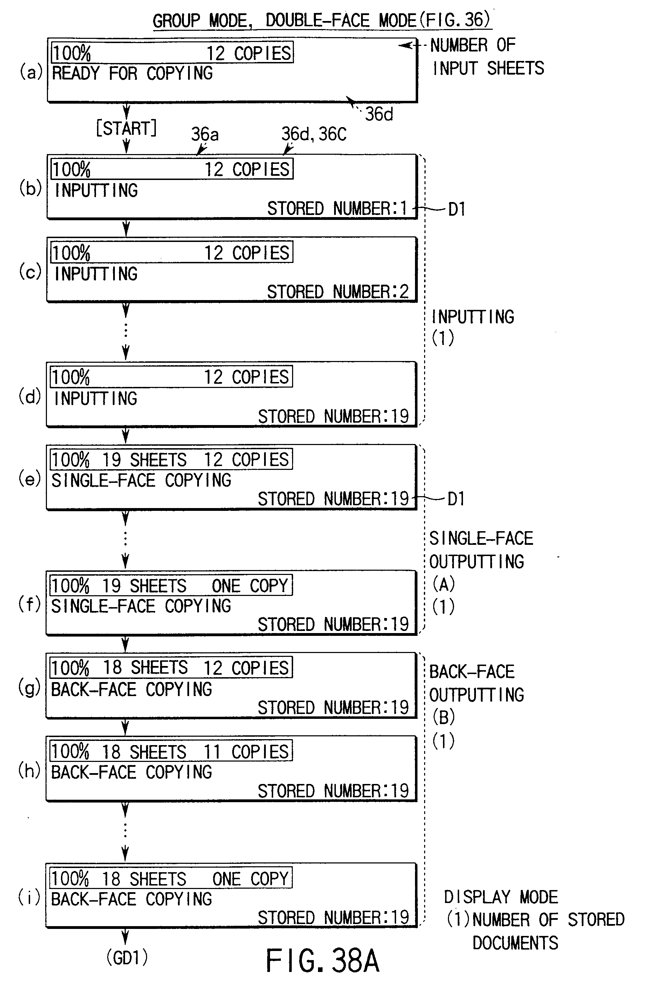

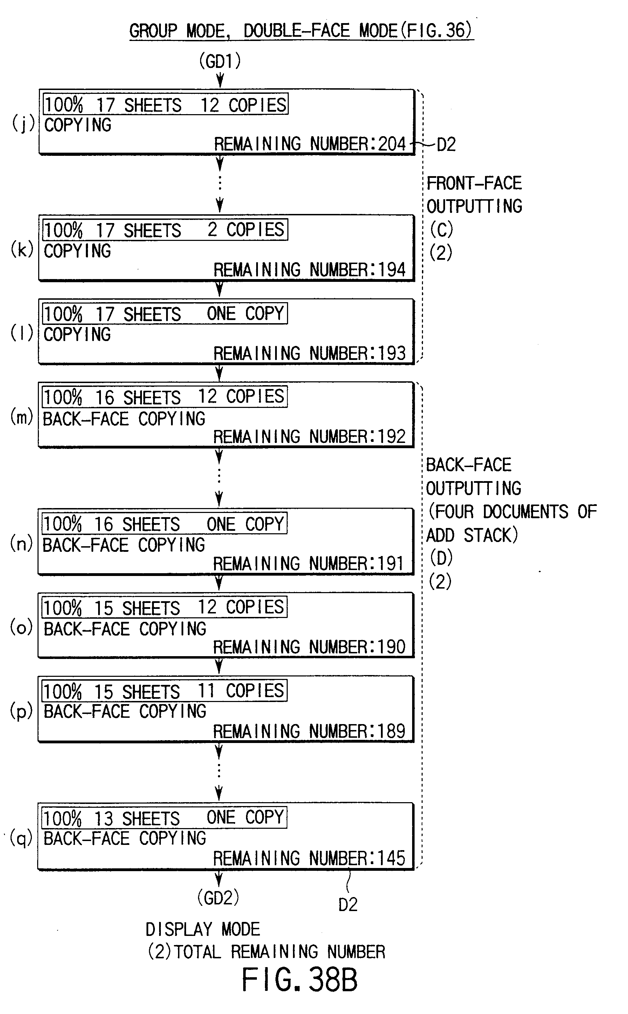

Like the case of the example of the single-face outputting process, examples of transitional display states on the operation panel 114 in a case of the double-face outputting process (shown in FIGS. 36A and 37A) are shown in FIGS. 38A to 41B.

FIGS. 38A to 39B show the examples of transitional display states of the sheet number display section 93a in the display example of the message display section 93 shown in FIGS. 30A to 30E for double-face outputting of 19 documents and 12 copies for each document. On the display screen, five display modes are provided.

An initial display screen is shown in (a) of FIG. 38A, display screens indicating the states of inputting 19 documents are shown in (b) to (d) of FIG. 38A, and the display mode indicates (1) the number of stored documents and the number of documents is counted from 1 to 19 and sequentially displayed.

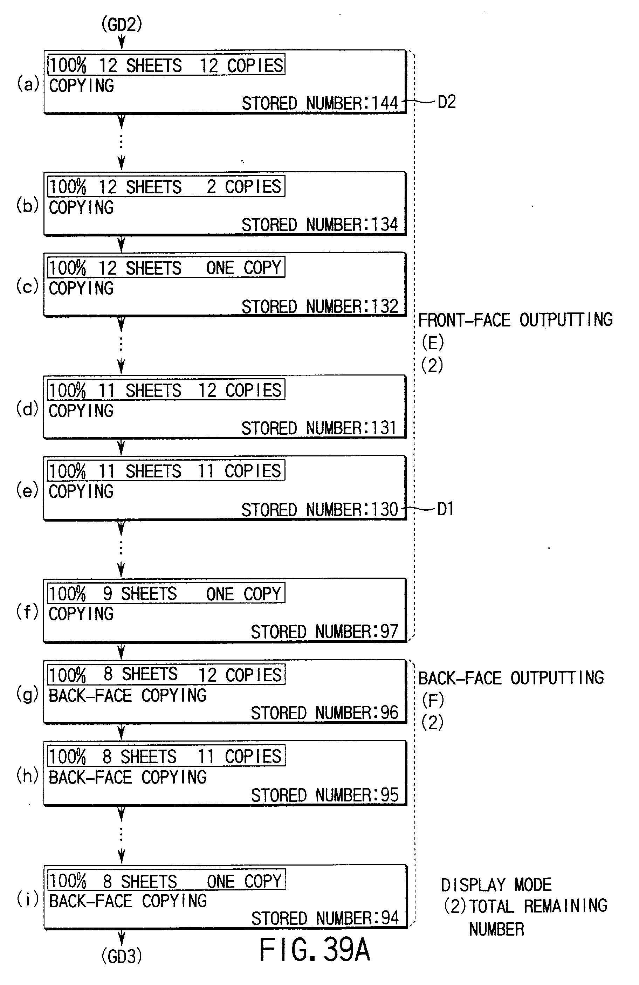

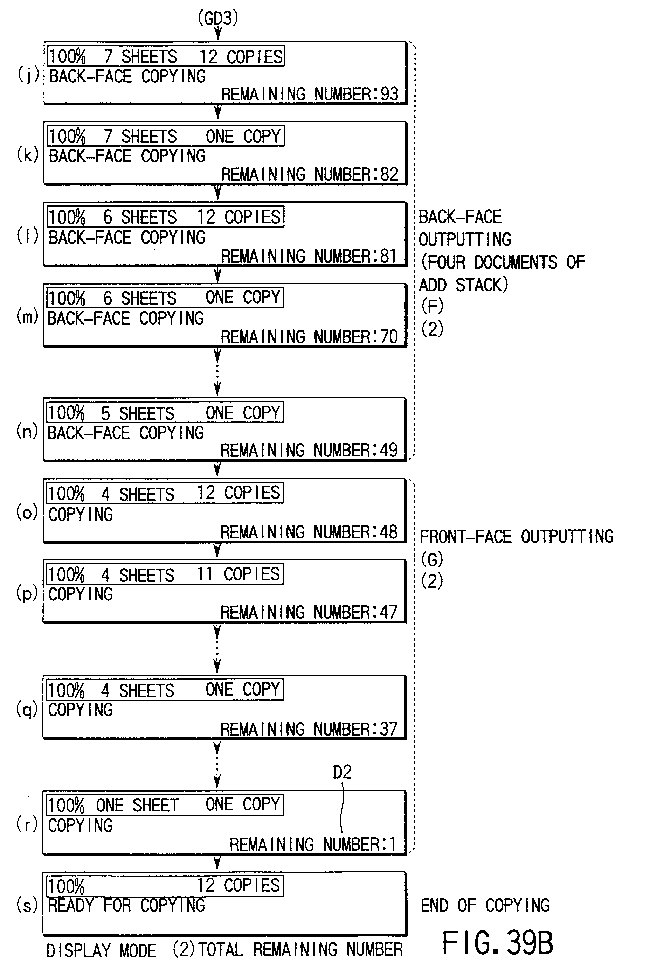

When the document input operation is completed, the single-face output process of 19 pages corresponding to the single-face output A of FIG. 36A is effected in (e), (f) of FIG. 38A, and at this time, the display mode indicates (1) the number of stored documents and the stored number "1" to stored number "19" are shown. Next, as shown in (g) to (i), the back-face printing B for the ADD stack of 18 pages corresponding to the back-face outputting B of FIG. 36A is effected, and at this time, the display mode indicates (1) the number of stored documents. In (j) to (l), the front-face printing C for back-face printed paper in the ADD stack of 17 pages corresponding to the front-face outputting C of FIG. 36A is effected, and at this time, the display mode indicates (2) the total remaining number of stored documents and the remaining number of sheets of "204" to "193" D2 is displayed. Next, in (m) to (q), the back-face printing D for the ADD stack corresponding to the back-face printing D of ADD collective output in the second cycle shown in FIG. 36A is effected, and at this time, the display mode also indicates (2) the total remaining number and the remaining number of "191" to "145" D2 is displayed. Next, in (a) to (f) of FIG. 39A, the front-face printing E for the 15th, 13th, 11th, 9th pages corresponding to the front-face printing E of ADD collective output in the second cycle shown in FIG. 36A is effected, and at this time, the display mode indicates (2) the total remaining number and the remaining number of "144" to "97" D2 is displayed. Further, in (f) to (i), the back-face printing F for the 2nd, 4th, 6th, 8th pages corresponding to the back-face printing F of ADD collective output in the third cycle shown in FIG. 36A is effected, and at this time, the display mode indicates (2) the total remaining number and the remaining number of "93" to "49" D2 is displayed. Next, in (o) to (r) of FIGS. 39A and 39B, the front-face printing G for the 7th, 5th, 3rd, 1st pages corresponding to the front-face printing G of ADD collective output in the third cycle shown in FIG. 36A is effected, and at this time, the display mode indicates (2) the total remaining number and the remaining number of "48" to "1" D2 is displayed.

Finally, in (s), the display screen indicating completion of the copying process is displayed.

That is, as shown in (d) of FIG. 36B, the countdown display is made for each output document in the remaining output page number 36a irrespective of the front or back face. An example is provided in which the count-down display of the remaining output number 36b during the output operation to the paper discharging tray/the remaining copy number 36c in the ADD stack is always made irrespective of the front or back face. In this case, the display message can be switched in the front-face outputting process and the back-face outputting process by notifying the status of the output task c to the display management task d via the copy management task a each time switching between the paper supply source and the paper discharging destination is made. The total remaining number 36d is counted down and displayed by use of numerals.

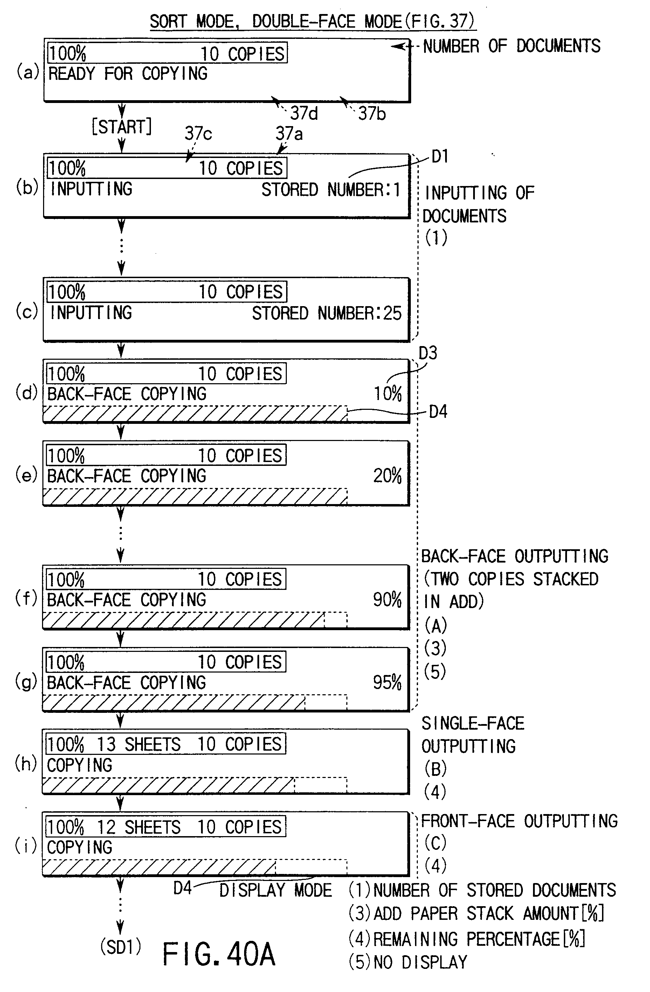

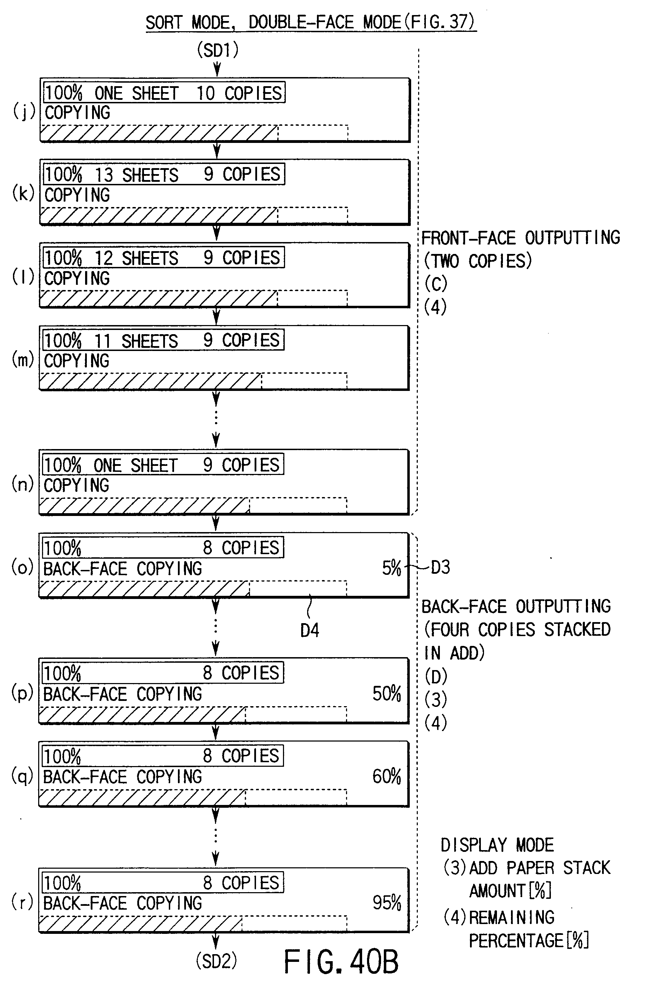

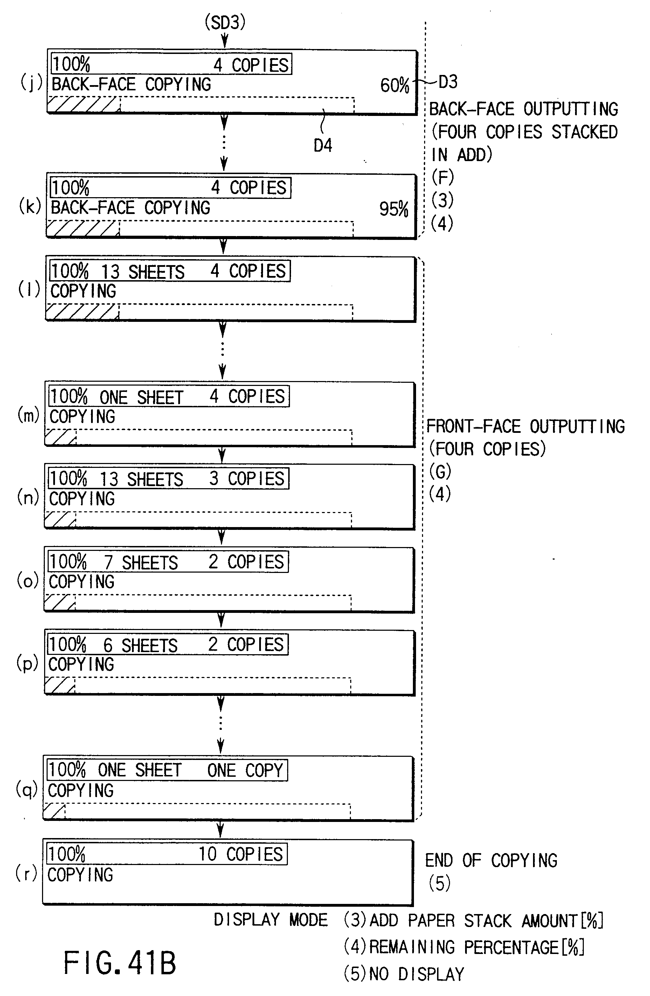

FIGS. 40A and 41B show examples of transition of the display states of the sheet number display section 93a at the time of double-face sort output for 25 documents and 10 copies for each document shown in FIGS. 37A and 37B.

(a) of FIG. 40A indicates the initial display screen. (b) to (f) of FIG. 40A indicate document inputting states and the number of input documents of "1" to "25" D1 is sequentially displayed in the display mode of (1) document storage number. Further, in (d) to (g), the back-face printing H for two copies corresponding to the back-face printing H of ADD collective stack in the first cycle shown in FIG. 37A is effected, and at this time, the display mode indicates (3) the ADD paper stack amount [%] in which "10% to 95%" D3 is displayed and (4) the remaining percentage [%] in which the remaining percentage D4 is displayed in the form of bar graph. (h) of FIG. 40A corresponds to the single-face printing/paper discharging process J of 25 pages shown in FIG. 37A and the display mode indicates (4) the remaining percentage [%] in which the remaining percentage D4 is displayed in the form of bar graph. (i) to (n) indicate the back-face printing M for the ADD stack of 3rd to 6th copies corresponding to the back-face printing M of the ADD collective stack printing in the second cycle shown in FIG. 37A and the display mode indicates (4) the remaining percentage [%] in which the remaining percentage D4 is displayed in the form of bar graph. (o) to (r) indicate the back-face printing M for the 3rd to 6th copies corresponding to the back-face printing M of the ADD collective stack printing in the second cycle shown in FIG. 37A and the display mode indicates (3) the ADD paper stack amount [%] in which 5% to 95% is displayed and (4) the remaining percentage [%] in which the remaining percentage D4 is displayed in the form of bar graph.

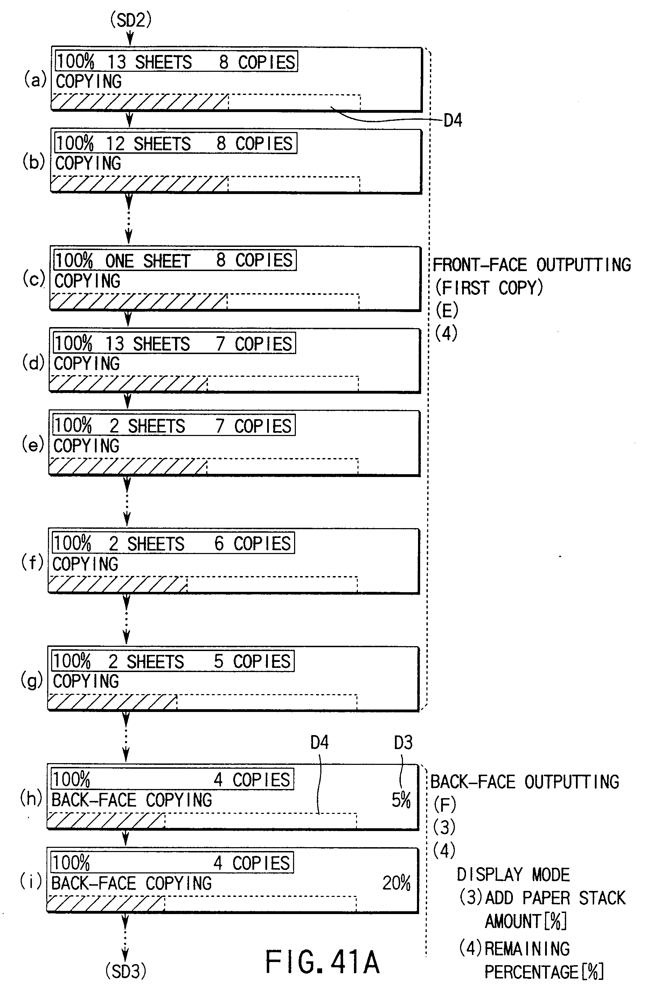

Further, (a) to (g) of FIG. 41A indicate the front-face printing N for the 3rd to 6th copies corresponding to the front-face printing M of the ADD collective stack printing in the second cycle shown in FIG. 37A and the display mode indicates (4) the remaining percentage [%] in which the remaining percentage D4 is displayed in the form of bar graph. (h) to (k) indicate the back-face printing P for the 7th to 10th copies corresponding to the back-face printing P of the ADD collective stack printing in the third cycle shown in FIG. 37A and the display mode indicates (3) the ADD paper stack amount [%] in which 5% to 95% is sequentially displayed and (4) the remaining percentage [%] in which the remaining percentage D4 is displayed in the form of bar graph. Further, (l) to (q) of FIG. 41B indicate the front-face printing Q for the 7th to 10th copies corresponding to the front-face printing Q of the ADD collective stack printing in the third cycle shown in FIG. 37A and the display mode indicates (4) the remaining percentage [%] in which the remaining percentage D4 is displayed in the form of bar graph.

(r) shows the display screen indicating the end of the copying process and displays completion of the copying operation.

That is, an example is provided in which the remaining output copy number 37a is displayed and the ADD stack rate 37b in the back-face output ADD stacking operation is counted up and displayed. As shown by the flowchart of FIGS. 28 to 29B, the ADD stack rate is a value which can be calculated in the display management task d by notifying the total stack remaining amount Ts by use of message. During the front-face outputting process, the count-down state of the remaining output copy number 37a and the count-down state of the remaining output sheet number 37c for each copy during the outputting process to the paper discharging tray are displayed. The total remaining sheet number 37d is displayed in the form of bar graph. As indicated by the above flowchart, the total output sheet number T and the remaining output amount TR are sequentially notified to the display management task d via the copy management task a by use of message communication by the output task c and converted into the display form corresponding to the display format in the display management task d and displayed. In this case, the number of input sheets (documents) is displayed only during the input process.

As described above, according to the above embodiment of this invention, by providing a function of sequentially displaying the total remaining output rate or the number of output sheets in the image storage type digital copying machine, by providing a function Of switching the remaining amount display system according to the output format (sort/group, single face/double face), by providing a function of switching the remaining amount display system according to the input/output state corresponding to an input/output execution state or a state in which only the output is executed, by providing a function of switching the display system according to the back-face output or front-face output in the case of double-face outputting process, and/or constructing the remaining amount display by use of a plurality of display items, it becomes possible to easily estimate the remaining copy amount (copy end time) and provide an image forming apparatus having an excellent user interface.

As described above, according to this invention, it is possible to provide an image forming apparatus having an excellent user interface in which the total remaining copy amount or the remaining amount display constructed by a plurality of display items can be easily confirmed.

## Claims

1. An image forming apparatus characterized by comprising:

   means (313, S91 to S125) for reading image information of a document;
   means (114, S94) for setting an image forming format used for image formation;
   means (315, S61 to S82) for forming a preset total amount of images on image forming media based on the image information read by the reading means according to the image forming format set by the setting means;
   means (93, S41 to S49) for displaying information according to the image forming format set by the setting means; and
   means (100, S28, S51 to S58) for controlling the displaying means so as to display a present remaining amount (D1 to D4) with respect to the preset total amount of the image forming means.

2. An image forming apparatus according to claim 1, characterized in that the controlling means includes means (100, S51 to S58) for controlling the displaying means so as to display the present remaining amount (D1 to D4) according to a sort mode which is set by the setting means as the image forming format.

3. An image forming apparatus according to claim 1, characterized in that the controlling means includes means (100, S51 to S58) for controlling the displaying means so as to display the present remaining amount (D1 to D4) according to a group mode which is set by the setting means as the image forming format.

4. An image forming apparatus according to claim 1, characterized in that the controlling means includes means (100, S41 to S49) for controlling the displaying means so as to display number (D1) of documents read and stored by the reading means.

5. An image forming apparatus according to claim 1, characterized in that the controlling means includes means (100, S51 to S58) for controlling the display means so as to display the remaining amount (D2) among the preset total remaining amount according to the image forming format set by the setting means.

6. An image forming apparatus according to claim 1, characterized in that the controlling means includes means (114, S94) for setting a double-face mode for forming images on both faces of the image forming medium as the image forming format;

   means (75, S107 to S114) having a preset storage capacity, for temporarily storing the image forming medium having an image formed on one face thereof; and
   means (100, S51 to S54) for controlling the displaying means so as to display a present amount (D3) of the storage capacity by which the storage means stores the image forming media.

7. An image forming apparatus according to claim 1, characterized in that the controlling means includes means (100, S55, S56) for controlling the display means so as to display the remaining percentage of the preset total amount in a graph form according to the image forming format set by the setting means.

8. An image forming apparatus according to claim 1, characterized in that the controlling means includes third display control means (100, S51 to S58) for controlling the display means to simultaneously display at least two of the number (D1) of documents read and stored by the reading means, the remaining number (D2) of the preset total amount corresponding to the image forming format, and the graphic display (D4) of the remaining percentage of the preset total amount corresponding to the image forming format set by the setting means according to an instruction given from the user.

9. An image forming apparatus according to claim 1, characterized in that the controlling means includes means (114, S94) for setting a double-face mode for forming images on both faces of the image forming medium as the image forming format; means (75, S107 to S114) for temporarily storing the image forming medium having an image formed on one face thereof; and means (100, S51 to S58) for controlling the display means to simultaneously display at least two of the number (D1) of documents read and stored by the reading means, the remaining amount (D2) of the preset total amount corresponding to the image forming format, the remaining amount (D3) of the preset total amount corresponding to the image forming format, and the graphic display (D4) of the remaining percentage of the preset total amount corresponding to the image forming format.

10. An image forming apparatus according to claim 1, characterized in that the controlling means includes means (114, S94) for setting a double-face mode for forming images on both faces of the image forming medium, the number (N) of documents to be read and the number (V) of copies on which images are formed to the image forming format; means (75, S107 to S114) having a preset storage capacity (ADDMAX), for temporarily storing the image forming media each having an image formed on one face thereof; means (100, (a) of FIGS. 36A and 36B) for calculating the number of times by which the storage means is used and the number of image forming media to be divided into groups to form images based on the number of documents, the number of copies, and the preset storage amount; means (100, S138, S139) for controlling the image forming means to form images according to the result of calculation of the calculating means; and means (100, S51 to S54) for controlling the display means so as to display an amount (D3) of the preset storage amount by which the storage means stores the image forming media.

11. An image forming apparatus according to claim 1, characterized in that the controlling means includes:

means (114, S94) for setting a sort mode (FIG. 31), a double-face mode for forming images on both faces of the image forming medium, the number (N) of documents and the number (V) of copies on which images are formed as the image forming format;
means (75, S107 to S114) having a preset storage capacity (ADDMAX), for temporarily storing the image forming media each having an image formed on one face thereof;
means (100, (a) of FIGS. 37A and 37B) for calculating the number (W1) of image forming media in a first application cycle of the storage means, the number (W2) of image forming media in a second or succeeding application cycle of the storage means, and the number (T) of times by which the storage means is applied after the first application cycle by use of the following equations:

$$W1 = 1, W2 = 1, T = V - 1 \text{ (when } N > ADDMAX);$$

$$W1 = [V/[ADDMAX/Z]],$$

$$W2 = [ADDMAX/Z],$$

$$T = [V/[ADDMAX/Z]] \text{ (when } 1 \leqq N \leqq ADDMAX)$$

where / : division, [Y/X] : the quotient of Y/X, Z = [N/2];
means (100, S139) for controlling the image forming means to form images according to the result of calculation of the calculating means;

and
means (100, S51 to S54) for controlling the display means to display an amount (D2) of the preset total amount according to the image forming format set by the setting means.

12. An image forming apparatus according to claim 1, characterized in that the controlling means includes:

means (114, S94) for setting a group mode (FIG. 32), a double-face mode for forming images on both faces of the image forming medium, the number (N) of documents to be read and the number (V) of copies on which images are formed as the image forming format;
means (75, S107 to S114) having a preset storage capacity (ADDMAX), for temporarily storing the image forming media each having an image formed on one face thereof;
means (100, (a) of FIGS. 36A and 36B) for calculating the number (W1) of image forming media in a first application cycle of the storage means, the number (W2) of image forming media in a second or succeeding application cycle of the storage means, and the number (T) of times by which the storage means is applied after the first application cycle by use of the following equations:

$$W1 = ([N/2]/[ADDMAX/V]),$$

$$W2 = [ADDMAX/V],$$

$$T = [[N/2]/[ADDMAX/V]]$$

where / : division, (Y/X) : the remainder of Y ÷ X, [Y/X] : the quotient of Y/X;
means (100, S138) for controlling the image forming means to form images according to the result of calculation of the calculating means; and
means (100, S51 to S54) for controlling the display means so as to display an amount (D2) of the preset total amount according to the image forming format set by the setting means.

13. An image forming method characterized by comprising:

a step (S91 to S125) of reading image information of a document;
a step (S94) of setting an image forming format used for image formation;
a step (S61 to S82) of forming a preset total amount of images on image forming media based on the image information read in the reading step according to the image forming format set in the setting step;

a step (S41 to S49) of displaying information according to the image forming format set in the setting step; and

a step (S28, S51 to S58) of controlling the displaying process to display a present remaining amount (D1 to D4) with respect to the preset total amount of the image forming step in the display step.

14. An image forming method according to claim 13, characterized in that the controlling step includes a control step of (S51 to S58) of controlling the display process so as to display the present remaining amount (D1 to D4) in the display step according to a sort mode which is set in the setting step as the image forming format.

15. An image forming method according to claim 13, characterized in that the controlling step includes a control step of controlling the display step so as to display the present remaining amount (D1 to D4) according to a group mode which is set by the setting means as the image forming format.

16. An image forming method according to claim 13, characterized in that the controlling step includes a step (S41 to S49) of controlling the display step so as to display the number (D1) of documents read and stored in the reading step.

17. An image forming method according to claim 13, characterized in that the controlling step includes a step (S51 to S58) of controlling the display step so as to display a remaining amount (D2) among the preset total remaining amount according to the image forming format set by the setting means.

18. An image forming method according to claim 13, characterized in that the controlling step includes step (S94) of setting a double-face mode for forming images on both faces of the image forming medium as the image forming format;

a step (S107 to S114) of using a preset storage capacity to temporarily store the image forming medium having an image formed on one face thereof; and

a step (S51 to S54) of controlling the display step so as to display a present amount (D3) of the storage capacity by which the image forming media are stored in the storing step.

19. An image forming method according to claim 13, characterized in that the controlling step includes a step (S55, S56) of controlling the display step so as to display the remaining percentage of the preset total amount in a graph form (D4) according to the image forming format set in the setting step.

20. An image forming method according to claim 13, characterized in that the controlling step includes a control step (S51 to S58) of controlling the display step to simultaneously display at least two of the number (D1) of documents read and stored in the reading step, the remaining number (D2) of the preset total amount corresponding to the image forming format, and the graphic display (D4) of the remaining percentage of the preset total amount corresponding to the image forming format set in the setting step according to an instruction given from the user.

21. An image forming method according to claim 13, characterized in that the controlling step includes a step (S94) of setting a double-face mode for forming images on both faces of the image forming medium as the image forming format; a step (S107 to S114) of temporarily storing the image forming medium having an image formed on one face thereof; and a step (S51 to S58) of controlling the display step to simultaneously display at least two of the number (D1) of documents read and stored in the reading step, the remaining amount (D2) of the preset total amount corresponding to the image forming format, the remaining amount (D3) of the preset total amount corresponding to the image forming format, and the graphic display (D4) of the remaining percentage of the preset total amount corresponding to the image forming format.

22. An image forming method according to claim 13, characterized in that the controlling step includes a step (S94) of setting a double-face mode for forming images on both faces of the image forming medium, the number (N) of documents to be read and the number (V) of copies on which images are formed to the image forming format; a step (S107 to S114) of using a preset storage capacity (ADDMAX) to temporarily store the image forming media each having an image formed on one face thereof; a step ((a) of FIGS. 36A and 36B) of calculating the number of times by which the storing step is effected and the number of image forming media to be divided into groups to form images based on the number of documents, the number of copies, and the preset storage amount; a step (S138, S139) of controlling the image forming step to form images according to the result of calculation in the calculating step; and a step (S51 to S54) of controlling the display step so as to display an amount (D3) of the preset storage amount by which the image forming media is stored in the storing step.

23. An image forming method according to claim 13, characterized in that the controlling step includes:

a step (S94) of setting a sort mode (FIG. 31), a double-face mode for forming images on both faces of the image forming medium, the number (N) of documents and the number (V) of copies on which images are formed as the image forming format;
a step (S107 to S114) of using a preset storage capacity (ADDMAX) to temporarily store the image forming media each having an image formed on one face thereof;
a step ((a) of FIGS. 37A and 37B) of calculating the number (W1) of image forming media in a first execution cycle of the storing step, the number (W2) of image forming media in a second or succeeding execution cycle of the storing step, and the number (T) of times by which the storing step is executed after the first execution cycle by use of the following equations:

$$W1 = 1, W2 = 1, T = V - 1 \text{ (when } N > ADDMAX);$$

$$W1 = [V/[ADDMAX/Z]],$$

$$W2 = [ADDMAX/Z],$$

$$T = [V/[ADDMAX/Z]] \text{ (when } 1 \leqq N \leqq ADDMAX)$$

where / : division, [Y/X] : the quotient of Y/X, Z = [N/2];
a step (S139) of controlling the image forming step to form images according to the result of calculation in the calculating step; and
a step (S51 to S54) of controlling the display step to display an amount (D2) of the preset total amount according to the image forming format set in the setting step.

24. An image forming method according to claim 13, characterized in that the controlling step includes:

a step (S94) for setting a group mode (FIG. 32), a double-face mode for forming images on both faces of the image forming medium, the number (N) of documents to be read and the number (V) of copies on which images are formed as the image forming format;
a step (S107 to S114) of using a preset storage capacity (ADDMAX) to temporarily store the image forming media each having an image formed on one face thereof;
a step ((a) of FIGS. 36A and 36B) of calculating the number (W1) of image forming media in a first execution cycle of the storing step, the number (W2) of image forming media in a second or succeeding execution cycle of the storing step, and the number (T) of times by which the storing step is executed after the first execution cycle by use of the following equations:

$$W1 = ([N/2]/[ADDMAX/V]),$$

$$W2 = [ADDMAX/V],$$

$$T = [[N/2]/[ADDMAX/V]]$$

where / : division, (Y/X) : the remainder of Y ÷ X, [Y/X] : the quotient of Y/X;
a step (S138) of controlling the image forming step to form images according to the result of calculation in the calculating step; and
a step (S51 to S54) of controlling the display step to display an amount (D2) of the preset total amount according to the image forming format set in the setting step.

FIG. 1

FIG. 2

EP 0 817 463 A2

FIG.3

EP 0 817 463 A2

100

311

(A) — MAIN CPU — (B)

(C)

ROM — 102

RAM — 104

IMAGE MEMORY — 106

TIMER MEMORY — 108

PASSWORD CODE MEMORY — 110

TIMER — 112

MESSAGE DISPLAY — 93

INTERNAL INTERFACE — 122

OPERATION PANEL — 114

TEN-KEY PAD — 105

EXTERNAL INTERFACE — 124

EXTERNAL DEVICE — 138

START KEY — 101

UNIT — 74

FIG. 4

EP 0 817 463 A2

~315

Ⓑ → PRINTER CPU ~190 → MAIN MOTOR DRIVER ~194 → MAIN MOTOR ~192

PRINTER SECTION

~198

DRIVER → SENSOR/SWITCH/SOLENOID ~196

~195

PAPER SIZE DETECTION SENSOR

~202

FIXING LAMP CONTROLLER → FIXING LAMP ~200

~212          55a          59a

HIGH-VOLTAGE OUTPUT CONTROLLER → HIGH-VOLTAGE TRANSFORMER → ELECTRIC CHARGER ~59

HIGH-VOLTAGE TRANSFORMER → TRANSFER CHARGER ~55

56a

HIGH-VOLTAGE TRANSFORMER → SEPARATING CHARGER ~56

~216          57a

HIGH-VOLTAGE TRANSFORMER → PCC CHARGER ~57

DISCHARGING LAMP CONTROLLER → DISCHARGING LAMP ~58

~224          ~222

PAPER FEEDING CONTROLLER → PAPER FEEDING MOTOR → PAPER FEEDING ROLLER ~20

→ PICKUP ROLLER ~81

~232          ~230

MODULATION CIRCUIT → LASER DRIVER CIRCUIT → LASER DIODE ~60

→ POLYGON MOTOR ~228

FIG.5

FIG. 6

FIG. 7

FIG. 8

EP 0 817 463 A2

104

FILING PAGE INFORMATION
MANAGEMENT TABLE

323

MEMORY MAP

| | |
|---|---|
| 1 | X1 |
| 2 | X2 |
| | ⋮ |
| | Xk |
| | |

M3

PAGE BUFFER
AREA

M1

fmax-ini

Xk+1

K-PAGE DATA

Xk

⋮

M2

X2

2-PAGE DATA

X1

1-PAGE DATA

FIG.9

JOB          ID :

| STATE OF INPUT TASK |
| STATE OF PRINT TASK |
| PRINTING CONTENT |

| STATE OF INPUT TASK |
| STATE OF PRINT TASK |
| PRINTING CONTENT |

| OPERATION MODE (SORT/GROUP·····) |
| SET NUMBER (1 TO 999) |
| OUTPUT FACE (DOUBLE FACE/SINGLE FACE)<br>PAPER (A5, A4, B4,·····A3) |
| MEMORY EDITION (NO/CONNECTION/COMBINATION) |
| NUMBER OF CONNECTIONS (2, 4, 8,·····)<br>CONNECTION PATTERN |
| FILE ID<br>NUMBER OF DOCUMENT PAGES |
| NUMBER OF SHEETS OF PAPER (FOR EACH COPY) |

| OPERATION MODE (SORT/GROUP) |
| SET NUMBER (DOUBLE FACE/SINGLE FACE) |

FIG. 10

EP 0 817 463 A2

**BUTTON FORMAT DEFINING TABLE**

(c)
| |
|---|
| BUTTON TITLE NUMBER |~ j
| BRANCHING DESTINATION MENU NUMBER |

h

**DISPLAY MANAGEMENT TABLE**

(a)
| |
|---|
| OPERATION MODE (DOUBLE FACE/SINGLE FACE) (SORT/GROUP) |
| DENSITY / ZOOM MAGNIFICATION |
| SET NUMBER |
| DOCUMENT SIZE/PAPER SIZE CASSETTE POSITION DIRECTION |
| MENU NUMBER NOW DISPLAYED |
| FORMAT NUMBER OF DISPLAY OF REMAINING NUMBER OF DOCUMENTS |
| REMAINING NUMBER OF DOCUMENTS |
| NUMBER OF SHEETS OF PAPER FOR EACH COPY |
| TOTAL NUMBER OF SHEETS OF PAPER |
| (NOW) ADD STACK NUMBER |

**MENU FORMAT DEFINING TABLE**

(b)
| |
|---|
| TITLE NUMBER |~ i
| SUB-TITLE NUMBER |
| GUIDE MESSAGE NUMBER 1 |
| GUIDE MESSAGE NUMBER 2 |
| BUTTON NUMBER 1 |
| BUTTON NUMBER 2 |
| ⁓ |
| TITLE NUMBER |
| SUB-TITLE NUMBER |
| GUIDE MESSAGE NUMBER 1 |

**REMAINING NUMBER DISPLAY FORMAT DEFINING TABLE**

(d)
| |
|---|
| NUMBER OF DOCUMENTS —(DISPLAY/NON-DISPLAY DURING OUTPUT) |
| TOTAL REMAINING NUMBER (% DISPLAY/NUMBER DISPLAY) |
| REMAINING NUMBER OF SHEETS (% DISPLAY/NUMBER DISPLAY) |
| REMAINING NUMBER OF COPIES (% DISPLAY/NUMBER DISPLAY) |
| ⁓ |~ k
| NUMBER OF DOCUMENTS |
| TOTAL REMAINING NUMBER |
| REMAINING NUMBER OF SHEETS OF FRONT FACES |
| REMAINING NUMBER OF COPIES OF FRONT FACES |
| REMAINING NUMBER OF SHEETS OF BACK FACES |
| REMAINING NUMBER OF COPIES OF BACK FACES |

EP 0 817 463 A2

# FIG. 11

FIG. 12

START KEY PROCESS

ST31
START KEY ACCEPTABLE?

S33
NEGLECT START KEY — NO

RETURN

YES

ST32
OPERATION MODE?

NO

YES

SORT | GROUP

S34
BASIC COPY JOB STARTING INSTRUCTION

S35
ELECTRONIC SORT COPY JOB STARTING INSTRUCTION

S36
FAX TRANSMISSION JOB STARTING INSTRUCTION

...

RETURN

FIG. 13

EP 0 817 463 A2

( INPUT NUMBER DISPLAY PROCESS )

S41 — ANALYZE MESSAGE CONTENT

( NOTIFICATION OF
START OF INPUT )

( NOTIFICATION OF
DOCUMENT NUMBER
DISPLAY )

( NOTIFICATION OF
END OF INPUT )

· · ·

S45

S48

S42 — INITIALIZE NUMBER OF
DOCUMENTS/NUMBER OF SHEETS
OF PAPER /TOTAL NUMBER IN
DISPLAY MANAGEMENT TABLE

UPDATE DOCUMENT NUMBER
DISPLAY OF DISPLAY
MANAGEMENT TABLE

DETERMINE INPUT NUMBER
DISPLAY FORMAT FOR OUTPUT
OPERATION

S43 — DETERMINE DISPLAY FORMAT

DETERMINE DISPLAY FORMAT
( SEARCH FORMAT DEFINING
TABLE )

DISPLAY NUMBER OF
DOCUMENTS AGAIN ACCORDING
TO DISPLAY FORMAT

S44 — DISPLAY NUMBER OF DOCUMENTS,
SET NUMBER, REMAINING OUTPUT
NUMBER ACCORDING TO DISPLAY
FORMAT

S46    S49

DISPLAY NUMBER OF
DOCUMENTS AGAIN ACCORDING
TO DISPLAY FORMAT

S47

( RETURN )

FIG. 14

**REMAINING OUTPUT AMOUNT DISPLAY PROCESS**

S51 — ANALYZE MESSAGE CONTENT

(NOTIFICATION OF START OF OUTPUT)

ADD STACK NUMBER (NOTIFICATION OF NUMBER OF SHEETS OF PAPER)

(NOTIFICATION OF REMAINING AMOUNT)

(NOTIFICATION OF END OF OUTPUT)

...

S52 — SET ADD STACK NUMBER, TOTAL PAPER NUMBER, NUMBER OF SHEETS OF PAPER FOR EACH COPY OF DISPLAY MANAGEMENT TABLE

S53 — DETERMINE REMAINING AMOUNT DISPLAY FORMAT

S54 — INITIALIZE REMAINING AMOUNT DISPLAY ACCORDING TO DISPLAY FORMAT

S55 — DETERMINE REMAINING AMOUNT DISPLAY FORMAT

UPDATE REMAINING AMOUNT/DISPLAY ACCORDING TO DISPLAY FORMAT — S56

S57 — DETERMINE DISPLAY FORMAT

RESET DISPLAY OF NUMBER OF DOCUMENTS, SET NUMBER, REMAINING AMOUNT

S58

**RETURN**

FIG. 15

FIG. 16A

EP 0 817 463 A2

F1

|~S73
ENGINE ERROR
STATUS?

YES ↓ ~S74
NOTIFY STATUS
TO DISPLAY
MANAGEMENT
TASK

|~S75
NOTIFICATION
OF NUMBER OF
DOCUMENTS?

YES

|~S77
NOTIFICATION
OF TOTAL
NUMBER OF
SHEETS OUTPUT
PAPER?

YES

|~S78
NOTIFICATION
OF NUMBER OF
COPIES OF
ADD STACK
NUMBER?

YES

|~S79
NOTIFICATION
OF REMAINING
OUTPUT AMOUNT?

YES

|~80
START
INSTRUCTION OF
OUTPUT JOB?

YES ↓ ~S81
TRANSMIT
MESSAGE OF
START
INSTRUCTION TO
OUTPUT TASK

~S76
NOTIFY TO DISPLAY
MANAGEMENT TASK

F2

FIG. 16B

EP 0 817 463 A2

POWER ON

INITIALIZATION — ST91

① →

ST93

NO ◁ WAIT FOR INPUT START MESSAGE? ▷

SEARCH
COPY MANAGEMENT
TABLE COPY/EDITION
TABLE, INITIALIZE
INTERNAL PARAMETER
$\left( f \leftarrow 0 : \text{DOCUMENT} \atop \text{NUMBER COUNTER} \right)$
$\left( \text{UPDATE INPUT} \atop \text{STATUS} \right)$

YES

ST94 — REGISTER JOB CONTENT

ST95 — ACQUIRE INPUT RESOURCE

ST96 — TRANSMIT INPUT START STATUS TO COPY MANAGEMENT TASK

Ⓗ → NO

ST97

NO ◁ MESSAGE RECEIVED? ▷ YES

ST99
ADF INPUT DOCUMENT PRESENT?
NO
YES

ST100
ADF INPUT DOCUMENT ABSENT?

YES

Ⓙ

ST98
DOCUMENT TABLE INPUT START KEY DEPRESSED?
YES

INSTRUCT END INPUT
INSTRUCT INTERRUPTION (ERROR)
INSTRUCT STOP

ST101 — Ⓙ
ST103
ST105

INPUT END INSTRUCTION
INTERRUP-TION PROCESS
STOP PROCESS

ST102

ST104    ST106

YES

ST107 — PAGE INPUT PROCESS

PAGE FILING PROCESS — ST108

ST109 — COUNT UP DOCUMENT NUMBER ($f \rightarrow f+1$)

Ⓖ

FIG. 17

G

ST111 — TRANSMIT PAGE INPUT STATUS, DOCUMENT NUMBER NOTIFYING STATUS TO COPY MANAGEMENT TASK $\quad\left(\begin{array}{l}\text{UPDATE INPUT}\\\text{STATUS}\end{array}\right)$

ST112 — SEQUENTIAL TYPE OUTPUT JOB?

H ← NO

YES

ST113 — $f=1$ (FIRST INPUT PAGE)?

H ← NO

YES

ST114 — TRANSMIT OUTPUT START REQUEST MESSAGE TO COPY MANAGEMENT TASK

## FIG. 18A

TERMINATION PROCESS

ST121 — RELEASE INPUT RESOURCE

ST122 — TRANSMIT INPUT END STATUS TO COPY MANAGEMENT TASK $\quad\left(\begin{array}{l}\text{UPDATE INPUT}\\\text{STATUS}\end{array}\right)$

ST123 — OUTPUT START REQUEST ISSUED? → YES

NO

ST124 — TRANSMIT OUTPUT START REQUEST MESSAGE TO COPY MANAGEMENT TASK

ST125 — INITIALIZE INTERNAL PARAMETERS

I

## FIG. 18B

POWER ON — ST131

INITIALIZATION — (UPDATE INPUT STATUS)

ST133 ST132

OUTPUT START INSTRUCTION MESSAGE PRESENT? — NO / YES

ANALYZE OUTPUT JOB CONTENT (INITIALIZATION OF INTERNAL PARAMETERS) — ST134

ACQUIRE OUTPUT RESOURCES (PRINTER, PAGE BUFFER) — ST135

NOTIFY OUTPUT START MESSAGE TO COPY MANAGEMENT TASK — ST136

ST137 — DOUBLE-FACE OUTPUT? — YES / NO

| ST138 | ST139 | ST140 | ST141 |
| DOUBLE-FACE GROUP OUTPUT PROCESS | DOUBLE-FACE SORT OUTPUT PROCESS | SINGLE-FACE GROUP OUTPUT PROCESS | SINGLE-FACE SORT OUTPUT PROCESS |

U

ST142 — RELEASE OUTPUT RESOURCES — (PAGE BUFFER, PRINTER)

ST143 — REMOVE STORED IMAGE DATA TO RELEASE FILE

ST144 — TRANSMIT OUTPUT END STATUS TO COPY TASK — (UPDATE OUTPUT STATUS)

ST145 — INITIALIZE INTERNAL PARAMETERS

P

FIG. 19

FIG.20

EP 0 817 463 A2

(M)

ST171

NOTIFY TOTAL OUTPUT NUMBER T AND OUTPUT NUMBER N FOR EACH COPY TO COPY MANAGEMENT TASK

$\left(\begin{array}{l}N \leftarrow n \\ T \leftarrow N \times V\end{array}\right)$

(Q)

ST172 — REMAINING OUTPUT COPY PRESENT (V>v)? — NO → (U)

YES

NOTIFY REMAINING OUTPUT NUMBER (V-v) OF COPIES AND REMAINING NUMBER N TO COPY MANAGEMENT TASK BY MESSAGE (INSTPUCTION OF DISPLAY) — ST173

COUNT UP OUTPUT COPY COUNTER (V←v+1) AND INITIALIZE OUTPUT PAGE COUNTER (n←1) — ST174

(O)

YES

PAGE DEVELOPING PROCESS — ST175

PAGE PRINTING PROCESS — ST176

NOTIFY REMAINING OUTPUT AMOUNT TO COPY MANAGEMENT TASK BY MESSAGE (INSTRUCTION OF DISPLAY) TOTAL REMAINING NUMBER $T_R \leftarrow T_R - 1$ : REMAINING NUMBER (N-n) — ST177

UPDATE OUTPUT TASK STATUS — ST178

COUNT UP OUTPUT PAGE COUNTER (n←n+1) — ST179

(N)

FIG. 21

FIG. 22

ST181 MESSAGE RECEIVED?
ST182 N≧n?
ST183 INTERRUPTION PROCESS
ST184 STOP PROCESS
INTERRUPTION BY ERROR
STOP
YES
NO
YES
NO

FIG. 23

```
                          ( T )
                            │
              ST211         ▼
           ┌──────────────────────────────┐
           │         NEXT                  │    NO
           │    OUTPUT PAGE    ────────────────────► ( U )
           │      PRESENT?                 │
           └──────────────────────────────┘
                    │ YES        ST212
                    ▼
  ┌───────────────────────────────────────┐
  │ INSTRUCT COPY MANGEMENT TASK           │
  │ TO DISPLAY TOTAL REMAINING             │
  │ AMOUNT: T_R ← (N-n+1)×V AND            │
  │ REMAINING OUTPUT NUMBER                │
  │ (N-n+1) BY MESSAGE                     │
  └───────────────────────────────────────┘
                    │            ST213
                    ▼
  ┌───────────────────────────────────────┐
  │      PAGE EXPANSION PROCESS            │
  └───────────────────────────────────────┘
                    │            ST214
                    ▼
  ┌───────────────────────────────────────┐
  │      PAGE PRINTING PROCESS             │
  └───────────────────────────────────────┘
      ST215         │                                            ST216
                    ▼                              ┌───────────────────────────┐
           ┌──────────────────┐     NO            │        n ← n+1             │
           │    REMAINING      ──────────────────►│        v ← V              │
           │ COPY PRESENT?     │                  └───────────────────────────┘
           │      V>v          │                              │
           └──────────────────┘                              │
                    │ YES   ST217                             │
                    ▼                                          │
  ┌───────────────────────────────────────┐                  │
  │ INSTRUCT COPY MANGEMENT TASK           │                  │
  │ TO DISPLAY REMAINING NUMBER            │                  │
  │ (V-v) OF COPIES AND TOTAL              │                  ▼
  │ REMAINING NUMBER (T_R ← T_R-1)         │       ┌───────────────────────────┐  ST220
  │ BY MESSAGE                             │       │ NOTIFY REMAINING NUMBER V OF│
  └───────────────────────────────────────┘       │ COPIES TO COPY MANAGEMENT  │
                    │            ST218             │ TASK B MESSAGE             │
                    ▼                              └───────────────────────────┘
  ┌───────────────────────────────────────┐                  │      ST221
  │ COUNT UP NUMBER OF COPIES              │                  ▼
  │          V ← v+1                       │       ┌───────────────────────────┐
  └───────────────────────────────────────┘       │   UPDATE OUTPUT STATUS     │
      ST219         │                              └───────────────────────────┘
                    ▼                                          │
    NO   ┌──────────────────┐   YES            ST222          ▼
   ──────│    MESSAGE        │────┐                    ┌──────────────────┐
         │   RECEIVED?       │    ▼                    │    MESSAGE        │
         └──────────────────┘  ( W )          NO       │   RECEIVED?       │
                                                        └──────────────────┘
                                                                │ YES
                                                                ▼
                                                              ( W )
```

FIG. 24

(SINGLE-FACE GROUP 3/3)

W

INTERRUPTION PROCESS ST231

STOP PROCESS ST232

. . . . .

U

# FIG. 25

EP 0 817 463 A2

**DOUBLE-FACE GROUP**

INITIALIZE INTERNAL PARAMETERS ~ST241

ST242
CHECK FILING STATE AND DETERMINE OUTPUT SYSTEM BASED ON RELATION BETWEEN NUMBER N OF DOCUMENTS AND SET NUMBER V

ST243
NOTIFY TOTAL OUTPUT NUMBER $T_R(=N\times V)$ TO COPY MANAGEMENT TASK BY MESSAGE

ST252
SINGLE-FACE GROUP OUTPUT PROCESS FOR FIRST SHEET

ST244
SINGLE-FACE OUTPUT PRESENT (NUMBER OF DOCUMENTS ODD)? — YES

(G6)

ST253
COUNT UP OUTPUT NUMBER n←n+1 INITIALIZE COPY COUNTER v←1 INITIALIZE REMAINING OUTPUT AMOUNT DISPLAY

ST246
(U)

DETERMINE ADD STACK DOCUMENT NUMBER W

ST245 — NO
OUTPUT PAGE PRESENT? — YES

INI- TIALIZE STACK COUNTER W+1

ST247
NOTIFY REMAINING OUTPUT NUMBER N←n+1 AND REMAINING OUTPUT COPY NUMBER V AND ADD STACK DOCUMENT NUMBER W TO COPY MANAGEMENT TASK

ST254
COUNT UP ADD STACK W←W+1 COUNT UP OUTPUT NUMBER n←n+1 INITIALIZE COPY COUNTER V←1

ST248
SWITCH BETWEEN PAPER SUPPLY SOURCE PAPER DISCHARGING DESTINATION (ADD)
(UPDATE OUTPUT STATUE) (BACK-FACE PRINTING)

ST255
NOTIFY REMAINING OUTPUT NUMBER (N−n+1) AND NUMBER V OF REMAINING OUTPUT COPIES

PAGE EXPANSION PROCESS

(G4) ST249 ST250

PAGE PRINTING PROCESS

ST251
REMAINING COPY PRESENT $(V>v)$? — NO

ST256
ADD STACK PAGE PRESENT $(W>w)$? — YES

**FIG. 26**

YES
(G1)

NO
(G2)

49

G1

ST261 — NOTIFY TOTAL REMAINING OUTPUT NUMBER: $T_R \leftarrow T_R - 1$, REMAINING OUTPUT NUMBER $(V-v)$ TO COPY MANAGEMENT TASK BY MESSAGE

ST262 — COUNT UP COPY COUNTER $V \leftarrow v+1$

ST263 — MESSAGE RECEIVED?

NO
G4

YES
G9

## FIG.27A

G5

ST271 — NOTIFY TOTAL REMAINING OUTPUT NUMBER: $T_R \leftarrow T_R - 1$, REMAINING OUTPUT NUMBER $(V-v)$ BY MESSAGE

ST272 — COUNT UP COPY COUNTER $V \leftarrow v+1$

ST273 — MESSAGE RECEIVED?

NO
G7

YES
G9

ST274 — INTERRUPTION PROCESS

STOP PROCESS — ST275

U

## FIG.27C

G2

ST281

COUNT UP OUTPUT NUMBER COUNTER
n←n+1, INITIALIZE COPY COUNTER
v←1, INITIALIZE ADD STACK
COUNTER w←1

ST282

NOTIFY REMAINING OUTPUT NUMBER
N←n+1, REMAINING OUTPUT COPY
NUMBER V TO COPY MANAGEMENT TASK
BY MESSAGE

ST289

COUNT UP OUTPUT
NUMBER n←n+1,
INITIALIZE COPY
COUNTER V←1

ST283

SWITCH BETWEEN PAPER SUPPLY
SOURCE (ADD) AND PAPER
DISCHARGING DESTINATION

(UPDATE OUTPUT STATUS) (FRONT-FACE PRINTING)

PAGE EXPANSION PROCESS

ST284

G7

ST285

PAGE PRINTING PROCESS

ST288

NOTIFY REMAINING
OUTPUT NUMBER
N−n+1, REMAINING
OUTPUT COPY
NUMBER V

ST286

REMAINING
COPY PRESENT (V<v)?

NO

ST287

ADD
STACK PAGE PRESENT
(W<w)?

YES

G5

NO

G6

FIG. 27B

```
                    ┌──────────────────────┐
                    │   DOUBLE-FACE  SORT   │
                    └──────────────────────┘
                               │
    ┌───────────────────────────────────────────────────┐
    │        INITIALIZE  INTERNAL  PARAMETERS            │──ST291
    └───────────────────────────────────────────────────┘
                               │
    ┌───────────────────────────────────────────────────┐
    │ CHECK FILING STATE AND DETERMINE OUTPUT SYSTEM BASED ON │──ST292
    │ RELATION BETWEEN DOCUMENT NUMBER N AND COPY NUMBER V │
    └───────────────────────────────────────────────────┘
                               │
    ┌───────────────────────────────────────────────────┐
    │ NOTIFY OUTPUT NUMBER:Z=N/2 FOR ONE COPY, TOTAL OUTPUT │──ST293
    │ NUMBER:T←N×V TO COPY MANAGEMENT TASK │
    └───────────────────────────────────────────────────┘
```

$Z = N/2$

$T \leftarrow N \times V$

(S5) ────── ST294

REMAINING OUTPUT COPY PRESENT $(V > v)$ ?    NO → (U)

YES

DETERMINE ADD STACK COPY NUMBER W ──ST295

NOTIFY REMAINING OUTPUT COPY NUMBER $(V-v)$, REMAINING OUTPUT NUMBER Z FOR ONE COPY, ADD STACK NUMBER $T_S \leftarrow Z \times W$ TO COPY MANAGEMENT TASK BY MESSAGE ──ST296

COUNT UP COPY COUNTER AND INITIALIZE OUTPUT PAGE COUNTER:$Z \leftarrow 1$, ADD STACK COUNTER:$W \leftarrow 1$ ──ST297

SWITCH BETWEEN PAPER SUPPLY SOURCE AND PAPER DISCHARGING DESTINATION (ADD) ──ST298

(S2) ──────→

PAGE DEVELOPING PROCESS ──ST299

PAGE PRINTING PROCESS ──ST300

(S1)

FIG. 28

FIG.29A

EP 0 817 463 A2

```
                                                               ┌─ FRONT-FACE PRINTING
                                                          (S3)─┘
```

(S4)

NOTIFY REMAINING OUTPUT AMOUNT TO
COPY MANAGEMENT TASK BY MESSAGE
TOTAL REMAINING AMOUNT: $T_R \rightarrow T_R-1$
REMAINING NUMBER OF SHEETS FOR ONE
COPY: $Z-z$  ~ST326

COUNT UP OUTPUT PAGE COUNTER $Z \leftarrow Z+1$ ~ST327

ST328 — MESSAGE RECEIVED? — YES → (S7)

NO

ST329 — OUTPUT PAGE PRESENT $(Z \geqq z)$? — YES → (S6)

NO

ST330 — ADD STACK COPY PRESENT $(W \geqq w)$? — YES →

NO

(S5)

NOTIFY REMAINING
OUTPUT COPY NUMBER
$(V-v)$ OUTPUT NUMBER
Z TO COPY MANAGEMENT
TASK BY MESSAGE  ~ST322

COUNT UP OUTPUT COPY
COUNTER $V \leftarrow v+1$
COUNT UP ADD COPY
COUNTER $W \leftarrow W+1$
INITIALIZE OUTPUT
NUMBER COUNTER $Z \leftarrow 1$  ~ST323

CORRECT REMAINING
OUTPUT COPY NUMBER
$\nu \leftarrow \nu -W+1$  ~ST319

INITIALIZE ADD
STACK COPY COUNTER
$W \leftarrow 1$  ~ST320

SWITCH BETWEEN PAPER
SUPPLY SOURCE (ADD)
AND PAPER DISCHARGING
DESTINATION  ~ST321

(FRONT-FACE PRINTING)

(S6) →

PAGE DEVELOPING
PROCESS  ~ST324

PAGE PRINTING
PROCESS  ~ST325

(S4)

FIG. 29B

| 100% | 4 COPIES | A4 | 93 |
| --- | --- | --- | --- |

READY FOR COPYING — 93a

BASIC

SORT ▶ SET METHOD — 93b

SORT / GROUP — 93c

STAPLE

EDITION

ADJUST SET

COMBINATION EDITION

~ CANCEL ~   ~ SET ~

**FIG. 30A**

| 100% | 4 COPIES | A4 | REMAINING AMOUNT OF MEMORY 0 — 100 | 93 |
| --- | --- | --- | --- | --- |

READY FOR COPYING — 93a

BASIC

SORT — 93b

EDITION

ADJUST SET

STOP COPYING

COMBINATION EDITION

~ CANCEL ~   ~ CONTINUE ~

**FIG. 30B**

100%    4 COPIES    A4    REMAINING AMOUNT OF MEMORY    ~93a

COPYING    0    100    ~93

STROED NUMBER:3    ~93d (D1)

BASIC    SORT    ~93b

EDITION

ADJUST SET    STOP COPYING

COMBINATION EDITION    ～ CANCEL ～    ～ END ～

FIG. 30C

93e    93

100%    5 SHEETS    2 COPIES    A4    REMAINING AMOUNT OF MEMORY    ~93a (D4)

COPYING    0    100    ~93f (D2)

REMAINING NUMBER:10    ~93f (D2)

STORED NUMBER:5    ~93d (D1)

BASIC    SORT    ~93b

EDITION

ADJUST SET    STOP COPYING

COMBINATION EDITION    ～ CANCEL ～    ～CONTINUE～

FIG. 30D

| 100% | 4 COPIES | A4 | REMAINING AMOUNT OF MEMORY |
|---|---|---|---|

93

READY FOR COPYING

0    100

93a

| BASIC | SORT |
|---|---|
| EDITION | |
| ADJUST SET | STOP COPYING |
| COMBINATION EDITION | ∿ CANCEL ∿    ∿ END ∿ |

93b

FIG. 30E

SORT MODE

FIG. 31

INPUT
ORDER

DOCUMENTS
OF 5 PAGES

OUTPUT
ORDER

GROUP MODE

FIG. 32

| 100% | ONE COPY | A4 | | 93 |

READY FOR COPYING

93a

BASIC

SORT ▶ SET METHOD

93b

EDITION

| 1 2 3 |
| 1 2 3 |
| 1 2 3 |

SORT

GROUP

93g

ADJUST SET

STAPLE

COMBINATION EDITION

∿ CANCEL ∿

∿ SET ∿

## FIG. 33A

| 100% | 6 COPIES | A4 | REMAINING AMOUNT OF MEMORY | 93 |

READY FOR COPYING

0 100

93a

BASIC

93b

EDITION

ADJUST SET

STOP COPYING

COMBINATION EDITION

∿ CANCEL ∿

∿CONTINUE∿

## FIG. 33B

| 100% | 6 COPIES | A4 | REMAINING AMOUNT OF MEMORY |
|---|---|---|---|

93

COPYING

0    100    93a
STORED NUMBER:3   93h
(D1)

BASIC

EDITION

93b

ADJUST SET

STOP COPYING

COMBINATION EDITION

~ CANCEL ~

~ END ~

## FIG. 33C

93k

93

| 100% | 2 SHEETS    5 COPIES | A4 | REMAINING AMOUNT OF MEMORY |
|---|---|---|---|

93a
(D4)

COPYING

0    100    93m
REMAINING NUMBER:11   (D2)
STORED NUMBER:5   93n
(D1)

BASIC

EDITION

93b

ADJUST SET

STOP COPYING

COMBINATION EDITION

~ CANCEL ~

~ CONTINUE ~

## FIG. 33D

| 100% | 6 COPIES | A4 | REMAINING AMOUNT OF MEMORY |
|------|----------|-----|----------------------------|

READY FOR COPYING

BASIC

EDITION

ADJUST SET

COMBINATION EDITION

STOP COPYING

~ CANCEL ~

~ END ~

FIG. 33E

61

SORT MODE, SINGLE-FACE MODE (FIG. 31)

(a)
| 100% | 4 COPIES |
|---|---|

READY FOR COPYING ———93a

↓

[START]

↓

93a

(b)
| 100% | 4 COPIES |
|---|---|

COPYING

STORED NUMBER:1 ——D1

↓

(c)
| 100% | 4 COPIES |
|---|---|

COPYING

STORED NUMBER:2

INPUTTING/OUTPUTTING
(FIRST COPY)
(1)

93a

↓
⋮
↓

93a

(d)
| 100% | 4 COPIES |
|---|---|

COPYING

STORED NUMBER:4

↓

(e)
| 100% | 4 COPIES |
|---|---|

COPYING ———93a

STORED NUMBER:5

↓

(f)
| 100% 5 SHEETS | 3 COPIES |
|---|---|

COPYING ———93a
REMAINING NUMBER:15 ——D2
STORED NUMBER:5

OUTPUTTING
(SECOND COPY)
(1)
(2)

↓

(g)
| 100% 4 SHEETS | 3 COPIES |
|---|---|

COPYING
REMAINING NUMBER:14
STORED NUMBER:5 ———93a

↓

(h)
| 100% 3 SHEETS | 3 COPIES |
|---|---|

COPYING ———93a
REMAINING NUMBER:13
STORED NUMBER:5

↓

(i)
| 100% 2 SHEETS | 3 COPIES |
|---|---|

COPYING
REMAINING NUMBER:12
STORED NUMBER:5

93a

↓

(j) DISPLAY MODE
(1) NUMBER OF STORED DOCUMENTS
(2) TOTAL REMAINING NUMBER

## FIG. 34A

## SORT MODE, SINGLE-FACE MODE (FIG. 31)

(i)

(j)
| 100% ONE SHEET 3 COPIES |
| COPYING REMAINING NUMBER:11 |
| STORED NUMBER:5 |

~93a
(SECOND COPY)

(k)
| 100% 5 SHEETS 2 COPIES |
| COPYING REMAINING NUMBER:10 |
| STORED NUMBER:5 |

~93a
(THIRD COPY)

(l)
| 100% 4 SHEETS 2 COPIES |
| COPYING REMAINING NUMBER:9 |
| STORED NUMBER:5 |

~93a
OUTPUTTING
(1)
(2)

(m)
| 100% 3 SHEETS 2 COPIES |
| COPYING REMAINING NUMBER:8 |
| STORED NUMBER:5 |

(FOURTH COPY)

~93a

(n)
| 100% 3 SHEETS ONE COPY |
| COPYING REMAINING NUMBER:3 |
| STORED NUMBER:5 |

93a

(o)
| 100% 2 SHEETS ONE COPY |
| COPYING REMAINING NUMBER:2 |
| STORED NUMBER:5 |

~93a

(p)
| 100% ONE SHEET ONE COPY |
| COPYING REMAINING NUMBER:1 |
| STORED NUMBER:5 |

~93a

(q)
| 100% 4 COPIES |
| COPYING |

~93a
END OF COPYING

DISPLAY MODE
(1) NUMBER OF STORED DOCUMENTS
(2) TOTAL REMAINING NUMBER

# FIG. 34B

GROUP MODE, SINGLE-FACE MODE (FIG. 32)

(a)
```
100%                    6 COPIES
READY FOR COPYING
```

[START]

(b)
```
100%                    6 COPIES
COPYING                 STORED NUMBER:1
```
D1
INPUTTING/OUTPUTTING
(FIRST COPY)
(1)

(c)
```
100%                    5 COPIES
COPYING                 STORED NUMBER:2
```

(d)
```
100%                    3 COPIES
COPYING                 STORED NUMBER:4
```

(e)
```
100%                    2 COPIES
COPYING                 STORED NUMBER:5
```

(f)
```
100%  5 SHEETS   ONE COPY
COPYING
/////////////////////
```
(FIRST COPY)
D4

(g)
```
100%  4 SHEETS    6 COPIES
COPYING
/////////////////////
```
(SECOND COPY)

(h)
```
100%  4 SHEETS    5 COPIES
COPYING              STORED NUMBER:5
/////////////////////
```
OUTPUTTING
(4)

(i)
```
100%  4 SHEETS    4 COPIES
COPYING
/////////////////////
```
[HELP]
DEDRESS HELP KEY
(1)

(j)    DISPLAY MODE
(1) NUMBER OF STORED DOCUMENTS
(4) REMAINING PERCENTAGE [%]

# FIG. 35A

GROUP MODE, SINGLE-FACE MODE(FIG.32)

(i)

(j)
```
100%  4 SHEETS    3 COPIES
COPYING
```
(SECOND COPY)

(k)
```
100%  4 SHEETS    2 COPIES
COPYING              REMAINING NUMBER:10 ─(2)
                     STORED NUMBER:5  ──(1)
```

(l)
```
100%  4 SHEETS    ONE COPY
COPYING
```

(m)
```
100%  3 SHEETS    6 COPIES
COPYING
```
(THIRD COPY)

OUTPUTTING
(4)

(n)
```
100%  ONE SHEET    3 COPIES
COPYING
```
(FIFTH COPY)

(o)
```
100%  ONE SHEET    2 COPIES
COPYING
```

(p)
```
100%  ONE SHEET    ONE COPY
COPYING
```

(q)
```
100%              6 COPIES
COPYING
```
END OF COPYING

DISPLAY MODE
(1)NUMBER OF STORED DOCUMENTS
(2)TOTAL REMAINING NUMBER
(4)REMAINING PERCENTAGE[%]

FIG. 35B

COPY SPECIFICATION
NUMBER OF DOCUMENT N:19, NUMBER OF COPIES V:12, GROUP MODE, DOUBLE-FACE MODE

(a)

| ADD STACK DOCUMENT PAGE NUMBER W | | NUMBER OF ADD COLLECTIVE STACK TIMES IN SECOND OR SUCCEEDING CYCLE |
|---|---|---|
| FIRST CYCLE | SECOND OR SUCCEEDING CYCLE | |
| ([N/2] / [ADDMAX/V]) =1 GROUP | [ADDMAX/V] =4 GROUP | ([N/2] / [ADDMAX/V]) =2 TIMES |

/ : DIVISION, (Y/X) : REMAINDER OF Y÷X, [Y/x] : QUOTIENT OF Y÷X

(b)   INPUT ORDER : PAGE 19, PAGE 18, PAGE 17, · · · , PAGE 4, PAGE 3, PAGE 2, PAGE 1,

(c)   OUTPUT ORDER :

19, 19, 19, · · · 19, 19, 19,
12 GROUP
SINGLE-FACE PRINT

18 ——— 17
BACK ADD STACK

FRONT ADD PAPER SUPPLY

16 ——— 15
14 ——— 13
12 ——— 11
10 ——— 9
BACK PRINT ADD STACK

FRONT PRINT ADD PAPER SUPPLY

8 ——— 7
6 ——— 5
4 ——— 3
2 ——— 1
BACK PRINT ADD STACK

FRONT PRINT ADD PAPER SUPPLY

ADD COLLECTIVE OUTTPUT OF FIRST CYCLE

ADD COLLECTIVE OUTTPUT OF SECOND CYCLE

ADD COLLECTIVE OUTTPUT OF THIRD CYCLE

FIG. 36A

| | TIME → | | | | | | | | | | | | |
|---|---|
| REMAINING NUMBER OF 36a DOCUMENTS | 19 - - - - - - - - →,18- - - →,17 - -→,16 - - -→ 15,   14,   13,   12,   11,   10,   9,   8,  7,  6,..1.0 |
| REMAINING NUMBER OF COPIES OF 36b PAPER DISCHARGING TRAY | 12,11,10,9...4, 3, 2, 1,          12,11..2,1          12,11..1,12,1,12,1,12,1,       ...0 |
| REMAINING NUMBER OF 36c COPIES OF ADU |         12,11..2,1,    12,11,1,12,1,12,1,12,1,          12,  11...12,11 |
| TOTAL REMAINING 36d NUMBER OF SHEETS | 228,227,226.....218,217,216,215.........193,19,191,189......144,146,142.....100, 99, 98, 97,95,94 ...1.0 |

(d)

# FIG. 36B

EP 0 817 463 A2

COPY SPECIFICATION

NUMBER OF DOCUMENT N:25, NUMBER OF COPIES V:10, GROUP MODE, DOUBLE-FACE MODE

(a)

| NUMBER OF SHEETS OF DOUBLE-FACE PAPER FOR EACH COPY | ADD STACK COPY NUMBER W | | NUMBER OF ADD COLLECTIVE STACK TIMES IN SECOND OR SUCCEEDING CYCLE T |
|---|---|---|---|
| | FIRST CYCLE W1 | SECOND OR SUCCEEDING CYCLE W2 | |
| N>ADDMAX | 1 | 1 | V−1 |
| 1≦N<ADDMAX | [V/[ADDMAX/Z]]=2 GROUP | [ADDMAX/Z]=4 GROUP | T=[V/[ADDMAX/Z]]=2 TIMES |

/ : DIVISION, (Y/X) : REMAINDER OF Y÷X, [Y/x] : QUOTIENT OF Y÷X

(b) INPUT ORDER : PAGE 25, PAGE 24, PAGE 23,
· · · , PAGE 4, PAGE 3, PAGE 2, PAGE 1,

(c) OUTPUT ORDER : SINGLE-FACE DISCHARGING

ADD STACK OF FIRST AND SECOND COPIES (BACK-FACE PRINT)

ADD PAPER SUPPLY (FRONT-FACE PRINT)

ADD STACK OF THIRD TO SIXTH COPIES (BACK-FACE PRINT)

ADD PAPER SUPPLY (FRONT-FACE PRINT)

ADD STACK OF SEVENTH TO TENTH COPIES (BACK-FACE PRINT)

ADD PAPER SUPPLY (FRONT-FACE PRINT)

ADD COLLECTIVE OUTTPUT OF FIRST CYCLE

ADD COLLECTIVE OUTTPUT OF SECOND CYCLE

ADD COLLECTIVE OUTTPUT OF SECOND CYCLE

FIG. 37A

| | | TIME $\longrightarrow$ | | | | | | | |
|---|---|---|---|---|---|---|---|---|---|
| REMAINING NUMBER OF DOCUMENTS | 37a | 10, ------------------------→ 9, ----→ 8, ----------------------→ 7, --→ 6, --→ 5, →4, ------------→ 0 | | | | | | | |
| REMAINING NUMBER OF COPIES OF PAPER DISCHARGING TRAY | 37b | 10%, 20%90%, 100% | | 10%, 20%, 30%...80%, 90%, 100% | | | | 10%, 20%, 30%... | |
| REMAINING NUMBER OF COPIES OF ADU | 37c | 13, 12..3, 2, 1, 13, 12..2, 1, | | 13, 12, 1, 13, 1, 13,...1, 13..1, | | | | | |
| TOTAL REMAINING NUMBER OF SHEETS | 37d | 250, 249, 248...225, 224, 223....202, 201, 200, 199, 198, 197......172, 171, 170....128, 127, 126, 125, 124, 123, 121.... | | | | | | | |

(d)

# FIG. 37B

EP 0 817 463 A2

GROUP MODE, DOUBLE-FACE MODE (FIG. 36)

(a)
```
┌──────────────────────────┐
│100%            12 COPIES │
└──────────────────────────┘
READY FOR COPYING
```
← NUMBER OF INPUT SHEETS

36d

[START]    36a    36d, 36C

(b)
```
┌──────────────────────────┐
│100%            12 COPIES │
└──────────────────────────┘
INPUTTING
                STORED NUMBER:1
```
─ D1

(c)
```
┌──────────────────────────┐
│100%            12 COPIES │
└──────────────────────────┘
INPUTTING
                STORED NUMBER:2
```

INPUTTING (1)

(d)
```
┌──────────────────────────┐
│100%            12 COPIES │
└──────────────────────────┘
INPUTTING
                STORED NUMBER:19
```

(e)
```
┌──────────────────────────┐
│100% 19 SHEETS  12 COPIES │
└──────────────────────────┘
SINGLE-FACE COPYING
                STORED NUMBER:19
```
─ D1

SINGLE-FACE OUTPUTTING (A) (1)

(f)
```
┌──────────────────────────┐
│100% 19 SHEETS   ONE COPY │
└──────────────────────────┘
SINGLE-FACE COPYING
                STORED NUMBER:19
```

(g)
```
┌──────────────────────────┐
│100% 18 SHEETS  12 COPIES │
└──────────────────────────┘
BACK-FACE COPYING
                STORED NUMBER:19
```
BACK-FACE OUTPUTTING (B) (1)

(h)
```
┌──────────────────────────┐
│100% 18 SHEETS  11 COPIES │
└──────────────────────────┘
BACK-FACE COPYING
                STORED NUMBER:19
```

(i)
```
┌──────────────────────────┐
│100% 18 SHEETS   ONE COPY │
└──────────────────────────┘
BACK-FACE COPYING
                STORED NUMBER:19
```

DISPLAY MODE (1) NUMBER OF STORED DOCUMENTS

(GD1)

# FIG. 38A

GROUP MODE, DOUBLE-FACE MODE(FIG.36)

(GD1)

(j) | 100% 17 SHEETS 12 COPIES
COPYING
REMAINING NUMBER:204 ~D2

FRONT-FACE
OUTPUTTING
(C)
(2)

(k) | 100% 17 SHEETS 2 COPIES
COPYING
REMAINING NUMBER:194

(l) | 100% 17 SHEETS ONE COPY
COPYING
REMAINING NUMBER:193

(m) | 100% 16 SHEETS 12 COPIES
BACK-FACE COPYING
REMAINING NUMBER:192

BACK-FACE
OUTPUTTING
(FOUR DOCUMENTS OF
ADD STACK)
(D)
(2)

(n) | 100% 16 SHEETS ONE COPY
BACK-FACE COPYING
REMAINING NUMBER:191

(o) | 100% 15 SHEETS 12 COPIES
BACK-FACE COPYING
REMAINING NUMBER:190

(p) | 100% 15 SHEETS 11 COPIES
BACK-FACE COPYING
REMAINING NUMBER:189

(q) | 100% 13 SHEETS ONE COPY
BACK-FACE COPYING
REMAINING NUMBER:145

(GD2)　　　　D2

DISPLAY MODE
(2)TOTAL REMAINING NUMBER

# FIG. 38B

(GD2)

(a)
```
┌─────────────────────────────────┐
│100% 12 SHEETS   12 COPIES│      │
│COPYING                          │
│              STORED NUMBER:144 ──┼── D2
└─────────────────────────────────┘
```

(b)
```
┌─────────────────────────────────┐
│100% 12 SHEETS    2 COPIES│      │
│COPYING                          │
│              STORED NUMBER:134   │
└─────────────────────────────────┘
```

(c)
```
┌─────────────────────────────────┐
│100% 12 SHEETS   ONE COPY│       │
│COPYING                          │
│              STORED NUMBER:132   │
└─────────────────────────────────┘
```

FRONT-FACE OUTPUTTING
(E)
(2)

(d)
```
┌─────────────────────────────────┐
│100% 11 SHEETS   12 COPIES│      │
│COPYING                          │
│              STORED NUMBER:131   │
└─────────────────────────────────┘
```

(e)
```
┌─────────────────────────────────┐
│100% 11 SHEETS   11 COPIES│      │
│COPYING                          │
│              STORED NUMBER:130 ──┼── D1
└─────────────────────────────────┘
```

(f)
```
┌─────────────────────────────────┐
│100% 9 SHEETS    ONE COPY│       │
│COPYING                          │
│              STORED NUMBER:97    │
└─────────────────────────────────┘
```

(g)
```
┌─────────────────────────────────┐
│100% 8 SHEETS    12 COPIES│      │
│BACK-FACE COPYING                │
│              STORED NUMBER:96    │
└─────────────────────────────────┘
```

BACK-FACE OUTPUTTING
(F)
(2)

(h)
```
┌─────────────────────────────────┐
│100% 8 SHEETS    11 COPIES│      │
│BACK-FACE COPYING                │
│              STORED NUMBER:95    │
└─────────────────────────────────┘
```

(i)
```
┌─────────────────────────────────┐
│100% 8 SHEETS    ONE COPY│       │
│BACK-FACE COPYING                │
│              STORED NUMBER:94    │
└─────────────────────────────────┘
```

DISPLAY MODE
(2) TOTAL REMAINING
     NUMBER

(GD3)

# FIG. 39A

(GD3)

(j)
```
┌─────────────────────────────┐
│100%  7 SHEETS   12 COPIES│
│BACK-FACE COPYING            │
│           REMAINING NUMBER:93│
└─────────────────────────────┘
```

(k)
```
┌─────────────────────────────┐
│100%  7 SHEETS    ONE COPY│
│BACK-FACE COPYING            │
│           REMAINING NUMBER:82│
└─────────────────────────────┘
```

(l)
```
┌─────────────────────────────┐
│100%  6 SHEETS   12 COPIES│
│BACK-FACE COPYING            │
│           REMAINING NUMBER:81│
└─────────────────────────────┘
```

BACK-FACE OUTPUTTING (FOUR DOCUMENTS OF ADD STACK) (F) (2)

(m)
```
┌─────────────────────────────┐
│100%  6 SHEETS    ONE COPY│
│BACK-FACE COPYING            │
│           REMAINING NUMBER:70│
└─────────────────────────────┘
```

(n)
```
┌─────────────────────────────┐
│100%  5 SHEETS    ONE COPY│
│BACK-FACE COPYING            │
│           REMAINING NUMBER:49│
└─────────────────────────────┘
```

(o)
```
┌─────────────────────────────┐
│100%  4 SHEETS   12 COPIES│
│COPYING                      │
│           REMAINING NUMBER:48│
└─────────────────────────────┘
```

FRONT-FACE OUTPUTTING (G) (2)

(p)
```
┌─────────────────────────────┐
│100%  4 SHEETS   11 COPIES│
│COPYING                      │
│           REMAINING NUMBER:47│
└─────────────────────────────┘
```

(q)
```
┌─────────────────────────────┐
│100%  4 SHEETS    ONE COPY│
│COPYING                      │
│           REMAINING NUMBER:37│
└─────────────────────────────┘
```

D2

(r)
```
┌─────────────────────────────┐
│100% ONE SHEET    ONE COPY│
│COPYING                      │
│           REMAINING NUMBER:1 │
└─────────────────────────────┘
```

(s)
```
┌─────────────────────────────┐
│100%            12 COPIES│
│READY FOR COPYING            │
└─────────────────────────────┘
```

END OF COPYING

DISPLAY MODE  (2) TOTAL REMAINING NUMBER

FIG. 39B

73

SORT MODE, DOUBLE-FACE MODE(FIG.37)

NUMBER OF DOCUMENTS

(a)
```
┌──────────────────────────┐
│100%          10 COPIES   │
│READY FOR COPYING         │
└──────────────────────────┘
```

↓ [START]

37c    37d    37a    37b

(b)
```
┌──────────────────────────┐
│100%        10 COPIES     │
│INPUTTING    STORED NUMBER:1│
└──────────────────────────┘
```
D1

INPUTTING OF
DOCUMENTS
(1)

(c)
```
┌──────────────────────────┐
│100%        10 COPIES     │
│INPUTTING   STORED NUMBER:25│
└──────────────────────────┘
```

(d)
```
┌──────────────────────────┐
│100%        10 COPIES     │
│BACK-FACE COPYING     10%  │
│//////////////////////////│
└──────────────────────────┘
```
D3
D4

(e)
```
┌──────────────────────────┐
│100%        10 COPIES     │
│BACK-FACE COPYING     20%  │
│//////////////////////////│
└──────────────────────────┘
```

BACK-FACE OUTPUTTING
(TWO COPIES STACKED
IN ADD)
(A)
(3)
(5)

(f)
```
┌──────────────────────────┐
│100%        10 COPIES     │
│BACK-FACE COPYING     90%  │
│//////////////////////////│
└──────────────────────────┘
```

(g)
```
┌──────────────────────────┐
│100%        10 COPIES     │
│BACK-FACE COPYING     95%  │
│//////////////////////////│
└──────────────────────────┘
```

SINGLE-FACE
OUTPUTTING
(B)
(4)

(h)
```
┌──────────────────────────┐
│100% 13 SHEETS  10 COPIES │
│COPYING                   │
│//////////////////////////│
└──────────────────────────┘
```

FRONT-FACE OUTPUTTING
(C)
(4)

(i)
```
┌──────────────────────────┐
│100% 12 SHEETS  10 COPIES │
│COPYING                   │
│//////////////////////////│
└──────────────────────────┘
```

D4    DISPLAY MODE    (1)NUMBER OF STORED DOCUMENTS
                      (3)ADD PAPER STACK AMOUNT[%]
                      (4)REMAINING PERCENTAGE[%]
                      (5)NO DISPLAY

(SD1)  FIG. 40A

## SORT MODE, DOUBLE-FACE MODE (FIG. 37)

(SD1)

(j)
```
┌─────────────────────────────────┐
│ 100%  ONE SHEET   10 COPIES     │
│ COPYING                         │
│ ////////////////////////        │
└─────────────────────────────────┘
```

(k)
```
┌─────────────────────────────────┐
│ 100%  13 SHEETS    9 COPIES     │
│ COPYING                         │
│ ////////////////////////        │
└─────────────────────────────────┘
```

(l)
```
┌─────────────────────────────────┐
│ 100%  12 SHEETS    9 COPIES     │
│ COPYING                         │
│ ////////////////////////        │
└─────────────────────────────────┘
```

FRONT-FACE OUTPUTTING
(TWO COPIES)
(C)
(4)

(m)
```
┌─────────────────────────────────┐
│ 100%  11 SHEETS    9 COPIES     │
│ COPYING                         │
│ ////////////////////////        │
└─────────────────────────────────┘
```

(n)
```
┌─────────────────────────────────┐
│ 100%  ONE SHEET    9 COPIES     │
│ COPYING                         │
│ ////////////////////////        │
└─────────────────────────────────┘
```

(o)
```
┌─────────────────────────────────┐
│ 100%              8 COPIES      │
│ BACK-FACE COPYING         5%    │ ─D3
│ ////////////////////////        │
└─────────────────────────────────┘
```
D4

BACK-FACE OUTPUTTING
(FOUR COPIES STACKED
IN ADD)
(D)
(3)
(4)

(p)
```
┌─────────────────────────────────┐
│ 100%              8 COPIES      │
│ BACK-FACE COPYING        50%    │
│ ////////////////////////        │
└─────────────────────────────────┘
```

(q)
```
┌─────────────────────────────────┐
│ 100%              8 COPIES      │
│ BACK-FACE COPYING        60%    │
│ ////////////////////////        │
└─────────────────────────────────┘
```

DISPLAY MODE
(3) ADD PAPER STACK
    AMOUNT [%]
(4) REMAINING
    PERCENTAGE [%]

(r)
```
┌─────────────────────────────────┐
│ 100%              8 COPIES      │
│ BACK-FACE COPYING        95%    │
│ ////////////////////////        │
└─────────────────────────────────┘
```

(SD2)          FIG. 40B

(SD2)

(a)
```
100% 13 SHEETS    8 COPIES
COPYING
```
——D4

(b)
```
100% 12 SHEETS    8 COPIES
COPYING
```

(c)
```
100% ONE SHEET    8 COPIES
COPYING
```

(d)
```
100% 13 SHEETS    7 COPIES
COPYING
```

FRONT-FACE OUTPUTTING
(FIRST COPY)
(E)
(4)

(e)
```
100% 2 SHEETS    7 COPIES
COPYING
```

(f)
```
100% 2 SHEETS    6 COPIES
COPYING
```

(g)
```
100% 2 SHEETS    5 COPIES
COPYING
```

D4    D3

(h)
```
100%             4 COPIES
BACK-FACE COPYING        5%
```

BACK-FACE OUTPUTTING
(F)
(3)
(4)

(i)
```
100%             4 COPIES
BACK-FACE COPYING       20%
```

DISPLAY MODE
(3) ADD PAPER STACK
    AMOUNT [%]
(4) REMAINING
    PERCENTAGE [%]

(SD3)

# FIG. 41A

76

(SD3)

(j)
```
┌─────────────────────────────┐
│100%              4 COPIES    │
│BACK-FACE COPYING        60%  │──D3
│///////                       │
└─────────────────────────────┘
```
BACK-FACE OUTPUTTING
(FOUR COPIES STACKED
IN ADD)
(F)
(3)
(4)

D4

(k)
```
┌─────────────────────────────┐
│100%              4 COPIES    │
│BACK-FACE COPYING        95%  │
│///////                       │
└─────────────────────────────┘
```

(l)
```
┌─────────────────────────────┐
│100% 13 SHEETS    4 COPIES    │
│COPYING                       │
│///////                       │
└─────────────────────────────┘
```

(m)
```
┌─────────────────────────────┐
│100% ONE SHEET    4 COPIES    │
│COPYING                       │
│//                            │
└─────────────────────────────┘
```
FRONT-FACE OUTPUTTING
(FOUR COPIES)
(G)
(4)

(n)
```
┌─────────────────────────────┐
│100% 13 SHEETS    3 COPIES    │
│COPYING                       │
│//                            │
└─────────────────────────────┘
```

(o)
```
┌─────────────────────────────┐
│100%  7 SHEETS    2 COPIES    │
│COPYING                       │
│//                            │
└─────────────────────────────┘
```

(p)
```
┌─────────────────────────────┐
│100%  6 SHEETS    2 COPIES    │
│COPYING                       │
│//                            │
└─────────────────────────────┘
```

(q)
```
┌─────────────────────────────┐
│100% ONE SHEET    ONE COPY    │
│COPYING                       │
│//                            │
└─────────────────────────────┘
```

(r)
```
┌─────────────────────────────┐
│100%             10 COPIES    │
│COPYING                       │
└─────────────────────────────┘
```
END OF COPYING
(5)

DISPLAY MODE  (3) ADD PAPER STACK AMOUNT [%]

FIG. 41B
(4) REMAINING PERCENTAGE [%]
(5) NO DISPLAY